# EUROPÄISCHE PATENTANMELDUNG

(11) **EP 4 810 399 A1**
(43) Veröffentlichungstag der Anmeldung: **23.09.2026**
(21) Anmeldenummer: 25164726.9
(22) Anmeldetag: 19.03.2025
(51) Int. Cl.: B65D 53/02, C09K 3/10, B65D 43/02, C08L 23/14

(54) **GEFÄSSVERSCHLUSS MIT DICHTUNGSELEMENT, GEFÄSS MIT GEFÄSSVERSCHLUSS UND VERFAHREN ZUR HERSTELLUNG EINES VERSCHLOSSENEN GEFÄSSES**

(71) Anmelder: Silgan Holdings Inc., Norwalk, CT 06851 (US)
(72) Erfinder: Kintscher, Jürgen, 30900 Wedemark (DE); Hohenhövel, Andreas, 31275 Lehrte (DE); Herzog, Ronja, 30177 Hannover (DE); Ackermann, Markus, 31535 Neustadt (DE)
(74) Vertreter: Ter Meer Steinmeister & Partner

(57) **Zusammenfassung**

Die Erfindung betrifft einen Gefäßverschluss mit einem Dichtungselement. Das Dichtungselement umfasst eine Polymerzusammensetzung. Die Polymerzusammensetzung umfasst zumindest ein Polymer. Die Polymerzusammensetzung weist einen Speichermodul bei 20 °C, bestimmt nach ISO 6721-7, von zumindest 1,0 MPa auf.

## Beschreibung

Die Erfindung betrifft einen Gefäßverschluss mit einem Dichtungselement, ein Gefäß mit dem Gefäßverschluss sowie ein Verfahren zur Herstellung eines verschlossenen Gefäßes.

Gefäßverschlüsse mit Dichtungselement sind aus dem Stand der Technik bekannt. Speziell sind Polymerzusammensetzungen für das Dichtungselement, die kein PVC enthalten oder die zusätzlich zu PVC weitere polymere Komponenten enthalten, relativ kostenintensiv und die Verarbeitung der Polymerzusammensetzung ist relativ schwierig.

Eine thermische Behandlung des verschlossenen Gefäßes, beispielsweise thermische Pasteurisierung oder thermische Sterilisierung, ist eine Herausforderung für das Dichtungselement eines Gefäßverschlusses. Einerseits soll das Dichtungselement so ausgebildet sein, dass eine gute Abdichtung zwischen dem Gefäßverschluss und dem Gefäß während der Lagerung gewährleistet ist, wofür das Dichtungselement bei Umgebungstemperatur nicht zu hart sein soll, andererseits soll das Dichtungselement die thermische Behandlung unbeschädigt überstehen.

Bei der Entwicklung von Polymerzusammensetzungen für die Dichtungselemente ist eine Vorhersage, ob das Dichtungselement aus der Polymerzusammensetzung für eine bestimmte Anwendung (z.B. thermische Pasteurisierung oder thermische Sterilisierung) verwendbar ist, schwierig. In der Regel müssen hierzu Prototypen von Gefäßverschlüssen aufwendig hergestellt und anwendungstechnische Versuche durchgeführt werden.

Eine Aufgabe der Erfindung liegt darin, einen Gefäßverschluss mit einem Dichtungselement bereitzustellen, der pasteurisierbar oder sterilisierbar ist, wenn der Gefäßverschluss ein Gefäß verschließt.

Eine noch weitere Aufgabe liegt darin, die Entwicklung von Polymerzusammensetzungen für Dichtungselemente in Gefäßverschlüssen zu erleichtern bzw. zu verbessern.

Gelöst wird zumindest eine der Aufgaben durch die Gegenstände der unabhängigen Ansprüche. Bevorzugte Ausführungsformen sind in den abhängigen Ansprüchen und der Beschreibung (insbesondere in den Beispielen) angegeben.

Offenbart ist ein Gefäßverschluss mit einem Dichtungselement. Das Dichtungselement umfasst eine Polymerzusammensetzung. Die Polymerzusammensetzung umfasst zumindest ein Polymer.

Die Polymerzusammensetzung weist einen Speichermodul bei 20 °C, bestimmt nach ISO 67217, von zumindest 1,0 MPa auf.

Offenbart ist ein Gefäßverschluss mit einem Dichtungselement. Das Dichtungselement umfasst eine Polymerzusammensetzung. Die Polymerzusammensetzung umfasst zumindest ein Polymer. Das zumindest eine Polymer weist einen Speichermodul bei 20 °C, bestimmt nach ISO 6721-7, von zumindest 0,1 MPa auf.

Offenbart ist ein Gefäßverschluss mit einem Dichtungselement. Das Dichtungselement umfasst eine Polymerzusammensetzung. Die Polymerzusammensetzung umfasst zumindest ein Polymer. Die Polymerzusammensetzung weist einen Speichermodul bei 20 °C, bestimmt nach ISO 67217, von zumindest 1,0 MPa auf. Das zumindest eine Polymer weist einen Speichermodul bei 20 °C, bestimmt nach ISO 6721-7, von zumindest 0,1 MPa auf.

Speichermoduln können mittels dynamisch-mechanischer Analysen ermittelt werden. Die dynamisch-mechanischen Analysen können auf Grundlage der ISO 6721-7 (insbesondere auf Grundlage der ISO 6721-7:2019-04) unter dynamischer Torsionsbeanspruchung durchgeführt werden. Die Analysen können mit einer Messfrequenz von 1 Hz durchgeführt werden. Die Analysen können mit einer Auslenkung von 0,05 % durchgeführt werden. Die Analysen können in einem Temperaturbereich von -100°C bis 150 °C durchgeführt werden. Die Heizrate kann 2 K/min betragen.

Es hat sich überraschend herausgestellt, dass die reale Beanspruchung eines Dichtungselements in einem Gefäßverschluss gut mit Resultaten der oben genannten dynamischen-mechanischen Analyse unter dynamischer Torsionsbeanspruchung korreliert. Deshalb lässt sich basierend auf dem mittels einer dynamischen-mechanischen Analyse ermittelten Wert des Speichermoduls (bei verschiedenen Temperaturen) mit hinreichender Zuverlässigkeit abschätzen, ob eine Polymerzusammensetzung für eine bestimmte Aufgabe eingesetzt werden kann.

Der Speichermodul steht für den elastischen Anteil (Realteil) des komplexen Schubmoduls. Der Speichermodul ist proportional zu dem Anteil der Deformationsenergie, der im Material gespeichert wird und nach Entlastung wieder aus dem Material gewonnen werden kann.

Das Dichtungselement kann im Wesentlichen scheibenförmig oder im Wesentlichen ringförmig ausgebildet sein.

Das Dichtungselement kann eine Dicke (in axialer Richtung des Gefäßverschlusses und/oder in axialer Richtung des Gefäßes) von zumindest 0,5 mm, bevorzugt zumindest 1,0 mm, bevorzugter zumindest 1,5 mm, bevorzugter zumindest 2,0 mm, aufweisen.

Das Dichtungselement kann einen Durchmesser (senkrecht zur axialen Richtung des Gefäßverschlusses und/oder senkrecht zur axialen Richtung des Gefäßes) von höchstens 300 mm, bevorzugt höchstens 250 mm, bevorzugter höchstens 200 mm, bevorzugter höchstens 150 mm, bevorzugter höchstens 120 mm, aufweisen. Der Durchmesser des Dichtungselements kann zumindest 5 mm, bevorzugt zumindest 10 mm, bevorzugter zumindest 15 mm, bevorzugter zumindest 20 mm, aufweisen. Besonders bevorzugt weist das Dichtungselement einen Durchmesser zwischen 10 mm und 200 mm, insbesondere zwischen 15 mm und 130 mm, auf.

Die Polymerzusammensetzung kann einen Großteil des Dichtungselements ausmachen. Das Dichtungselement kann neben der Polymerzusammensetzung weitere Bestandteile umfassen. Die weiteren Bestandteile können polymere Bestandteile oder nicht-polymere Bestandteile sein. Beispielsweise kann das Dichtungselement eine oder mehrere Folien umfassen. Die Folie kann eine polymere oder eine nicht-polymere Folie sein, bevorzugt ist die Folie eine Metallfolie. Insbesondere besteht das Dichtungselement aus der Polymerzusammensetzung.

Die Polymerzusammensetzung kann einen Speichermodul bei 20 °C, bestimmt nach ISO 6721-7, von zumindest 1,1 MPa, bevorzugt zumindest 2,0 MPa, bevorzugter zumindest 3,0 MPa, bevorzugter zumindest 4,0 MPa, bevorzugter zumindest 5,0 MPa, bevorzugter zumindest 7,0 MPa, bevorzugter zumindest 10,0 MPa, bevorzugter zumindest 20,0 MPa, aufweisen.

Die Polymerzusammensetzung kann einen Speichermodul bei 20 °C, bestimmt nach ISO 6721-7, von höchstens 500 MPa, bevorzugt höchstens 250 MPa, bevorzugter höchstens 100 MPa, bevorzugter höchstens 75 MPa, bevorzugter höchstens 50 MPa, aufweisen.

Die Polymerzusammensetzung kann einen Speichermodul bei 20 °C, bestimmt nach ISO 6721-7, zwischen 1,0 MPa und 500 MPa, bevorzugt zwischen 1,0 MPa und 250 MPa, bevorzugter zwischen 1,0 MPa und 100 MPa, bevorzugter zwischen 1,0 MPa und 75 MPa, bevorzugter zwischen 1,0 MPa und 50 MPa, bevorzugter zwischen 2,0 MPa und 50 MPa, bevorzugter zwischen 3,0 MPa und 50 MPa, bevorzugter zwischen 10 MPa und 50 MPa, aufweisen.

Die Polymerzusammensetzung kann einen Speichermodul bei 4 °C, bestimmt nach ISO 6721-7, von zumindest 2,0 MPa, bevorzugt zumindest 5,0 MPa, bevorzugter zumindest 7,0 MPa, bevorzugter zumindest 10,0 MPa, bevorzugter zumindest 15,0 MPa, bevorzugter zumindest 20,0 MPa, bevorzugter zumindest 30,0 MPa, aufweist.

Die Polymerzusammensetzung kann einen Speichermodul bei 4 °C, bestimmt nach ISO 6721-7, von höchstens 1000 MPa, bevorzugt höchstens 500 MPa, bevorzugter höchstens 250 MPa, bevorzugter höchstens 100 MPa, bevorzugter höchstens 75 MPa, aufweisen.

Die Polymerzusammensetzung kann einen Speichermodul bei 4 °C, bestimmt nach ISO 6721-7, zwischen 1,0 MPa und 1000 MPa, bevorzugt zwischen 1,0 MPa und 500 MPa, bevorzugter zwischen 1,0 MPa und 250 MPa, bevorzugter zwischen 1,0 MPa und 100 MPa, bevorzugter zwischen 1,0 MPa und 75 MPa, bevorzugter zwischen 3,0 MPa und 75 MPa, bevorzugter zwischen 5,0 MPa und 75 MPa, bevorzugter zwischen 10 MPa und 75 MPa, aufweisen.

Die Polymerzusammensetzung kann einen Speichermodul bei 40 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 4,0 MPa, bevorzugter zumindest 6,0 MPa, bevorzugter zumindest 10,0 MPa, aufweisen.

Die Polymerzusammensetzung kann einen Speichermodul bei 40 °C, bestimmt nach ISO 6721-7, von höchstens 250 MPa, bevorzugt höchstens 100 MPa, bevorzugter höchstens 75 MPa, bevorzugter höchstens 50 MPa, bevorzugter höchstens 25 MPa, aufweisen.

Die Polymerzusammensetzung kann einen Speichermodul bei 40 °C, bestimmt nach ISO 6721-7, zwischen 0,5 MPa und 250 MPa, bevorzugt zwischen 0,5 MPa und 150 MPa, bevorzugter zwischen 0,5 MPa und 100 MPa, bevorzugter zwischen 0,5 MPa und 75 MPa, bevorzugter zwischen 0,5 MPa und 50 MPa, bevorzugter zwischen 1,0 MPa und 30 MPa, bevorzugter zwischen 1,0 MPa und 20 MPa, bevorzugter zwischen 1,0 MPa und 100 MPa, aufweisen.

Die Polymerzusammensetzung kann einen Speichermodul bei 70 °C, bestimmt nach ISO 6721-7, von zumindest 0,2 MPa, bevorzugt zumindest 0,3 MPa, bevorzugter zumindest 0,5 MPa, bevorzugter zumindest 0,7 MPa, bevorzugter zumindest 0,9 MPa, bevorzugter zumindest 1,2 MPa, bevorzugter zumindest 1,5 MPa, aufweisen.

Die Polymerzusammensetzung kann einen Speichermodul bei 70 °C, bestimmt nach ISO 6721-7, von höchstens 100 MPa, bevorzugt höchstens 75 MPa, bevorzugter höchstens 50 MPa, bevorzugter höchstens 25 MPa, bevorzugter höchstens 10 MPa, aufweisen.

Die Polymerzusammensetzung kann einen Speichermodul bei 70 °C, bestimmt nach ISO 6721-7, zwischen 0,2 MPa und 100 MPa, bevorzugt zwischen 0,2 MPa und 75 MPa, bevorzugter zwischen 0,2 MPa und 50 MPa, bevorzugter zwischen 0,2 MPa und 25 MPa, bevorzugter zwischen 0,2 MPa und 10 MPa, bevorzugter zwischen 0,5 MPa und 10 MPa, bevorzugter zwischen 1,0 MPa und 10 MPa, aufweisen.

Die Polymerzusammensetzung kann einen Speichermodul bei 100 °C, bestimmt nach ISO 6721-7, von zumindest 0,1 MPa, bevorzugt zumindest 0,2 MPa, bevorzugter zumindest 0,3 MPa, bevorzugter zumindest 0,4 MPa, bevorzugter zumindest 0,5 MPa, bevorzugter zumindest 0,6 MPa, bevorzugter zumindest 1,0 MPa, aufweisen.

Die Polymerzusammensetzung kann einen Speichermodul bei 100 °C, bestimmt nach ISO 6721-7, von höchstens 20 MPa, bevorzugt höchstens 15 MPa, bevorzugter höchstens 10 MPa, bevorzugter höchstens 5 MPa, bevorzugter höchstens 3 MPa, aufweisen.

Die Polymerzusammensetzung kann einen Speichermodul bei 100 °C, bestimmt nach ISO 6721-7, zwischen 0,1 MPa und 20 MPa, bevorzugt zwischen 0,1 MPa und 15 MPa, bevorzugter zwischen 0,1 MPa und 10 MPa, bevorzugter zwischen 0,1 MPa und 8 MPa, bevorzugter zwischen 0,2 MPa und 8 MPa, bevorzugter zwischen 0,3 MPa und 8 MPa, bevorzugter zwischen 0,4 MPa und 8 MPa, aufweisen.

Die Polymerzusammensetzung kann einen Speichermodul bei 130°C, bestimmt nach ISO 6721-7, von zumindest 0,05 MPa, bevorzugt zumindest 0,07 MPa, bevorzugter zumindest 0,10 MPa, bevorzugter zumindest 0,15 MPa, bevorzugter zumindest 0,20 MPa, bevorzugter zumindest 0,25 MPa, bevorzugter zumindest 0,30 MPa, bevorzugter zumindest 0,35 MPa, bevorzugter zumindest 0,40 MPa, bevorzugter zumindest 0,50 MPa, aufweisen.

Die Polymerzusammensetzung kann einen Speichermodul bei 130°C, bestimmt nach ISO 6721-7, von höchstens 10 MPa, bevorzugt höchstens 8 MPa, bevorzugter höchstens 6 MPa, bevorzugter höchstens 4 MPa, bevorzugter höchstens 2 MPa, bevorzugter höchstens 1 MPa, aufweisen.

Die Polymerzusammensetzung kann einen Speichermodul bei 130°C, bestimmt nach ISO 6721-7, zwischen 0,05 MPa und 10 MPa, bevorzugt zwischen 0,05 MPa und 8 MPa, bevorzugter zwischen 0,05 MPa und 6 MPa, bevorzugter zwischen 0,10 MPa und 6 MPa, bevorzugter zwischen 0,15 MPa und 6 MPa, bevorzugter zwischen 0,20 MPa und 6 MPa, bevorzugter zwischen 0,30 MPa und 5 MPa, bevorzugter zwischen 0,35 MPa und 5 MPa, bevorzugter zwischen 0,40 MPa und 5 MPa, bevorzugter zwischen 0,50 MPa und 5 MPa, aufweisen.

Das zumindest eine Polymer kann einen Speichermodul bei 4 °C, bestimmt nach ISO 6721-7, von zumindest 2,0 MPa, bevorzugt zumindest 3,0 MPa, bevorzugter zumindest 4,0 MPa, bevorzugter zumindest 5,0 MPa, bevorzugter zumindest 7,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 200,0 MPa, bevorzugter zumindest 500,0 MPa, bevorzugter zumindest 800,0 MPa, aufweisen.

Das zumindest eine Polymer kann einen Speichermodul bei 4 °C, bestimmt nach ISO 6721-7, von höchstens 5000 MPa, bevorzugt höchstens 3000 MPa, bevorzugter höchstens 2000 MPa, bevorzugter höchstens 1000 MPa, bevorzugter höchstens 100 MPa, bevorzugter höchstens 50 MPa, bevorzugter höchstens 30 MPa, bevorzugter höchstens 20 MPa, aufweisen.

Das zumindest eine Polymer kann einen Speichermodul bei 4 °C, bestimmt nach ISO 6721-7, zwischen 1 MPa und 100 MPa, bevorzugt zwischen 1 MPa und 50 MPa, bevorzugter zwischen 1 MPa und 20 MPa, aufweisen.

Das zumindest eine Polymer kann einen Speichermodul bei 4 °C, bestimmt nach ISO 6721-7, zwischen 10 MPa und 3000 MPa, bevorzugt zwischen 10 MPa und 2000 MPa, bevorzugter zwischen 10 MPa und 1000 MPa, aufweisen.

Das zumindest eine Polymer kann einen Speichermodul bei 20 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 3,0 MPa, bevorzugter zumindest 5,0 MPa, bevorzugter zumindest 8,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 250,0 MPa, bevorzugter zumindest 500,0 MPa, aufweisen.

Das zumindest eine Polymer kann einen Speichermodul bei 20 °C, bestimmt nach ISO 6721-7, von höchstens 3000 MPa, bevorzugt höchstens 2000 MPa, bevorzugter höchstens 1000 MPa, bevorzugter höchstens 800 MPa, bevorzugter höchstens 75 MPa, bevorzugter höchstens 50 MPa, bevorzugter höchstens 30 MPa, bevorzugter höchstens 20 MPa, aufweisen.

Das zumindest eine Polymer kann einen Speichermodul bei 20 °C, bestimmt nach ISO 6721-7, zwischen 1 MPa und 75 MPa, bevorzugt zwischen 1 MPa und 50 MPa, bevorzugter zwischen 1 MPa und 18 MPa, aufweisen.

Das zumindest eine Polymer kann einen Speichermodul bei 20 °C, bestimmt nach ISO 6721-7, zwischen 20 MPa und 2000 MPa, bevorzugt zwischen 20 MPa und 1000 MPa, bevorzugter zwischen 20 MPa und 800 MPa, aufweisen.

Das zumindest eine Polymer kann einen Speichermodul bei 40 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 3,0 MPa, bevorzugter zumindest 4,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 250,0 MPa, bevorzugter zumindest 400,0 MPa, aufweisen.

Das zumindest eine Polymer kann einen Speichermodul bei 40 °C, bestimmt nach ISO 6721-7, von höchstens 2000 MPa, bevorzugt höchstens 1000 MPa, bevorzugter höchstens 800 MPa, bevorzugter höchstens 600 MPa, bevorzugter höchstens 50 MPa, bevorzugter höchstens 30 MPa, bevorzugter höchstens 20 MPa, bevorzugter höchstens 10 MPa, aufweisen.

Das zumindest eine Polymer kann einen Speichermodul bei 40 °C, bestimmt nach ISO 6721-7, zwischen 0,5 MPa und 50 MPa, bevorzugt zwischen 0,5 MPa und 25 MPa, bevorzugter zwischen 0,5 MPa und 10 MPa, aufweisen.

Das zumindest eine Polymer kann einen Speichermodul bei 40 °C, bestimmt nach ISO 6721-7, zwischen 10 MPa und 1000 MPa, bevorzugt zwischen 10 MPa und 800 MPa, bevorzugter zwischen 10 MPa und 600 MPa, aufweisen.

Das zumindest eine Polymer kann einen Speichermodul bei 70 °C, bestimmt nach ISO 6721-7, von zumindest 0,1 MPa, bevorzugt zumindest 0,2 MPa, bevorzugter zumindest 0,3 MPa, bevorzugter zumindest 0,5 MPa, bevorzugter zumindest 0,7 MPa, bevorzugter zumindest 0,9 MPa, bevorzugter zumindest 1,2 MPa, bevorzugter zumindest 5,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 200,0 MPa, aufweisen.

Das zumindest eine Polymer kann einen Speichermodul bei 70 °C, bestimmt nach ISO 6721-7, von höchstens 1000 MPa, bevorzugt höchstens 800 MPa, bevorzugter höchstens 600 MPa, bevorzugter höchstens 400 MPa, bevorzugter höchstens 30 MPa, bevorzugter höchstens 20 MPa, bevorzugter höchstens 10 MPa, bevorzugter höchstens 5 MPa, aufweisen.

Das zumindest eine Polymer kann einen Speichermodul bei 70 °C, bestimmt nach ISO 6721-7, zwischen 0,1 MPa und 30 MPa, bevorzugt zwischen 0,1 MPa und 15 MPa, bevorzugter zwischen 0,1 MPa und 5 MPa, aufweisen.

Das zumindest eine Polymer kann einen Speichermodul bei 70 °C, bestimmt nach ISO 6721-7, zwischen 5 MPa und 800 MPa, bevorzugt zwischen 5 MPa und 600 MPa, bevorzugter zwischen 5 MPa und 400 MPa, aufweisen.

Das zumindest eine Polymer kann einen Speichermodul bei 100 °C, bestimmt nach ISO 6721-7, von zumindest 0,1 MPa, bevorzugt zumindest 0,2 MPa, bevorzugter zumindest 0,3 MPa, bevorzugter zumindest 0,4 MPa, bevorzugter zumindest 0,5 MPa, bevorzugter zumindest 0,6 MPa, bevorzugter zumindest 1,0 MPa, bevorzugter zumindest 3,0 MPa, bevorzugter zumindest 5,0 MPa, bevorzugter zumindest 10,0 MPa, bevorzugter zumindest 50,0 MPa, bevorzugter zumindest 100,0 MPa, aufweisen.

Das zumindest eine Polymer kann einen Speichermodul bei 100 °C, bestimmt nach ISO 6721-7, von höchstens 800 MPa, bevorzugt höchstens 600 MPa, bevorzugter höchstens 400 MPa, bevorzugter höchstens 200 MPa, bevorzugter höchstens 20 MPa, bevorzugter höchstens 10 MPa, bevorzugter höchstens 5 MPa, bevorzugter höchstens 2 MPa, aufweisen.

Das zumindest eine Polymer kann einen Speichermodul bei 100 °C, bestimmt nach ISO 6721-7, zwischen 0,1 MPa und 10 MPa, bevorzugt zwischen 0,1 MPa und 5 MPa, bevorzugter zwischen 0,1 MPa und 2 MPa, aufweisen.

Das zumindest eine Polymer kann einen Speichermodul bei 100 °C, bestimmt nach ISO 6721-7, zwischen 1 MPa und 800 MPa, bevorzugt zwischen 1 MPa und 400 MPa, bevorzugter zwischen 1 MPa und 200 MPa, aufweisen.

Das zumindest eine Polymer kann einen Speichermodul bei 130 °C, bestimmt nach ISO 6721-7, von zumindest 0,05 MPa, bevorzugt zumindest 0,07 MPa, bevorzugter zumindest 0,10 MPa, bevorzugter zumindest 0,15 MPa, bevorzugter zumindest 0,20 MPa, bevorzugter zumindest 0,25 MPa, bevorzugter zumindest 0,30 MPa, bevorzugter zumindest 0,35 MPa, bevorzugter zumindest 0,40 MPa, bevorzugter zumindest 1,0 MPa, bevorzugter zumindest 2,0 MPa, bevorzugter zumindest 5,0 MPa, bevorzugter zumindest 7,0 MPa, bevorzugter zumindest 50,0 MPa, aufweisen.

Das zumindest eine Polymer kann einen Speichermodul bei 130 °C, bestimmt nach ISO 6721-7, von höchstens 600 MPa, bevorzugt höchstens 400 MPa, bevorzugter höchstens 200 MPa, bevorzugter höchstens 100 MPa, bevorzugter höchstens 10 MPa, bevorzugter höchstens 5 MPa, bevorzugter höchstens 3 MPa, bevorzugter höchstens 1 MPa, aufweisen.

Das zumindest eine Polymer kann einen Speichermodul bei 130 °C, bestimmt nach ISO 6721-7, zwischen 0,1 MPa und 5 MPa, bevorzugt zwischen 0,1 MPa und 3 MPa, bevorzugter zwischen 0,1 MPa und 1 MPa, aufweisen.

Das zumindest eine Polymer kann einen Speichermodul bei 130 °C, bestimmt nach ISO 6721-7, zwischen 1 MPa und 600 MPa, bevorzugt zwischen 1 MPa und 300 MPa, bevorzugter zwischen 1 MPa und 100 MPa, aufweisen.

Die Polymerzusammensetzung kann ein Propen-Copolymer umfassen. Das zumindest eine Polymer kann ein/das Propen-Copolymer sein.

Die Schmelztemperatur des Propen-Copolymers, bestimmt durch eine zweite Aufheizkurve einer DSC-Messung bei einer Heizrate von 10°C/min, kann in einem Bereich von 110 °C bis 200 °C liegen. Der Begriff DSC steht für dynamische Differenzkalorimetrie (engl.: *"differential scanning calorimetry",* DSC).

Bevorzugt liegt die Schmelztemperatur des Propen-Copolymers, bestimmt durch eine zweite Aufheizkurve einer DSC-Messung bei einer Heizrate von 10°C/min, in einem Bereich von 130 °C bis 200 °C, bevorzugt in einem Bereich von 130 °C bis 165 °C, bevorzugter in einem Bereich von 130 °C bis 180 °C. Besonders bevorzugt liegt die Schmelztemperatur des Propen-Copolymers, bestimmt durch eine zweite Aufheizkurve einer DSC-Messung bei einer Heizrate von 10°C/min, in einem Bereich von 130 °C bis 150 °C oder in einem Bereich von 150 °C und 170 C.

Die Shore A Härte des Propen-Copolymers, bestimmt nach DIN ISO 7619 bei einer Temperatur von 23 °C und einer Haltezeit von 15 s, kann in einem Bereich von 40 bis 95 oder von 50 bis 95 liegen. Bevorzugt liegt die Shore A Härte des Propen-Copolymers, bestimmt nach DIN ISO 7619 bei einer Temperatur von 23 °C und einer Haltezeit von 15 s, in einem Bereich von 60 bis 90, bevorzugter in einem Bereich von 65 bis 90. Insbesondere liegt die Shore A Härte des Propen-Copolymers, bestimmt nach DIN ISO 7619 bei einer Temperatur von 23 °C und einer Haltezeit von 15 s, in einem Bereich von 67 bis 77, in einem Bereich von 70 bis 80, in einem Bereich von 79 bis 89 oder in einem Bereich von 81 bis 91.

Die Schmelzflussrate (MFR) des Propen-Copolymers, bestimmt nach ASTM D1238 bei 230 °C und 2,16 kg, kann in einem Bereich von 0,1 g/10 min und 100 g/10 min, bevorzugt in einem Bereich von 1 g/10 min und 80 g/10 min, bevorzugter in einem Bereich von 1 g/10 min und 60 g/10 min, bevorzugter in einem Bereich von 2 g/10 min und 50 g/10 min, bevorzugter in einem Bereich von 4 g/10 min und 40 g/10 min, liegen.

Der Comonomeranteil von Propen in dem Propen-Copolymer kann zumindest 30 mol-% betragen. Bevorzugt beträgt der Comonomeranteil von Propen in dem Propen-Copolymer zumindest 35 mol-%, bevorzugter zumindest 40 mol-%, bevorzugter zumindest 45 mol-%, bevorzugter zumindest 50 mol-%, bevorzugter zumindest 55 mol-%, bevorzugter zumindest 60 mol-%, bevorzugter zumindest 65 mol-%, bevorzugter zumindest 70 mol-%, bevorzugter zumindest 75 mol-%, bevorzugter zumindest 80 mol-%.

Der Comonomeranteil von Propen in dem Propen-Copolymer kann höchstens 95 mol-% betragen. Bevorzugt beträgt der Comonomeranteil von Propen in dem Propen-Copolymer höchstens 92 mol-%, bevorzugter höchstens 90 mol-%, bevorzugter höchstens 87 mol-%, bevorzugter höchstens 85 mol-%.

Der Comonomeranteil von Propen in dem Propen-Copolymer kann in einem Bereich von 30 mol-% bis 95 mol-%, bevorzugt in einem Bereich von 40 mol-% bis 95 mol-%, bevorzugter in einem Bereich von 50 mol-% bis 95 mol-%, bevorzugter in einem Bereich von 60 mol-% bis 95 mol-%, bevorzugter in einem Bereich von 70 mol-% bis 95 mol-%, bevorzugter in einem Bereich von 70 mol-% bis 90 mol-%, bevorzugter in einem Bereich von 75 mol-% bis 90 mol-%, liegen.

Das Propen-Copolymer kann zumindest ein zweites Comonomer umfassen. Das zweite Comonomer kann ein C4 bis C16 (alpha-)Olefin, bevorzugt ein C4 bis C12 (alpha-)Olefin, bevorzugter ein C4 bis C8 (alpha-)Olefin, bevorzugter 1-Buten, sein.

Der Comonomeranteil des zweiten Comonomers in dem Propen-Copolymer kann höchstens 20 mol-%, bevorzugt höchstens 15 mol-%, bevorzugter höchstens 10 mol-%, bevorzugter höchstens 7 mol-%, betragen.

Der Comonomeranteil des zweiten Comonomers in dem Propen-Copolymer kann zumindest 1 mol-%, bevorzugt zumindest 2 mol-%, bevorzugter zumindest 3 mol-%, bevorzugter zumindest 4 mol-%, betragen.

Der Comonomeranteil des zweiten Comonomers in dem Propen-Copolymer kann in einem Bereich von 1 mol-% bis 15 mol-%, bevorzugt in einem Bereich von 1 mol-% bis 10 mol-%, bevorzugter in einem Bereich von 2 mol-% bis 10 mol-%, bevorzugter in einem Bereich von 2 mol-% bis 8 mol-%, liegen.

Das Propen-Copolymer kann ein drittes Comonomer umfassen. Das dritte Comonomer kann Ethen sein.

Das Propen-Copolymer kann ein Propen-Ethen-1-Buten-Copolymer sein. Das Propen-Copolymer kann ein Terpolymer sein.

Der Comonomeranteil des dritten Comonomers in dem Propen-Copolymer kann höchstens 40 mol-%, bevorzugt höchstens 30 mol-%, bevorzugter höchstens 20 mol-%, bevorzugter höchstens 15 mol-%, betragen.

Der Comonomeranteil des dritten Comonomers in dem Propen-Copolymer kann zumindest 1 mol-%, bevorzugt zumindest 5 mol-%, bevorzugter zumindest 10 mol-%, betragen.

Der Comonomeranteil des dritten Comonomers in dem Propen-Copolymer kann in einem Bereich von 1 mol-% bis 15 mol-%, bevorzugt in einem Bereich von 1 mol-% bis 10 mol-%, bevorzugter in einem Bereich von 2 mol-% bis 10 mol-%, bevorzugter in einem Bereich von 2 mol-% bis 8 mol-%, liegen.

Die Bezeichnungen "zweites" und "drittes" Comonomer dienen der Unterscheidung. Das dritte Comonomer kann in einen unabhängigen Anspruch aufgenommen werden, ohne dass das zweite Comonomer vorhanden sein muss. Bevorzugt sind jedoch sowohl das zweite als auch das dritte Comonomer in dem Propen-Copolymer vorhanden.

Das Propen-Copolymer kann ein zweites und ein drittes Comonomer umfassen. Das zweite und das dritte Comonomer können unterschiedliche Monomere sein. Das zweite und das dritte Comonomer können ausgewählt sein aus C2, oder C4 bis C16 (alpha-)Olefin, bevorzugt aus C2, oder C4 bis C12 (alpha-)Olefin, bevorzugter aus C2, oder C4 bis C8 (alpha-)Olefin, bevorzugter aus C2, oder C4 bis C6 (alpha-)Olefin, bevorzugter ist das zweite Comonomer 1-Buten und das dritte Comonomer ist Ethen.

Der Comonomeranteil von Propen in dem Propen-Copolymer kann höher sein als der Comonomeranteil des zweiten Comonomers. Der Comonomeranteil von Propen in dem Propen-Copolymer kann höher sein als der Comonomeranteil des dritten Comonomers. Der Comonomeranteil des dritten Comonomers in dem Propen-Copolymer kann höher sein als der Comonomeranteil des zweiten Comonomers. Der Comonomeranteil von Propen in dem Propen-Copolymer kann höher sein als der Comonomeranteil des dritten Comonomers und der Comonomeranteil des dritten Comonomers kann höher sein als der Comonomeranteil des zweiten Comonomers.

Das Propen-Copolymer kann isotaktische Polypropenabschnitte aufweisen. Ein Polypropenabschnitt kann eine Kettenlänge von zumindest 5, bevorzugt von zumindest 8, bevorzugter von zumindest 10, bevorzugter von zumindest 15, aufweisen. D.h. in einem Polypropenabschnitt kann zumindest 5 Mal direkt aufeinanderfolgend Propen in dem Rückgrat ("backbone") des Polymers vorliegen bzw. einpolymerisiert sein. Der Polypropenabschnitt kann vollständig isotaktisch sein.

Das Propen-Copolymer kann ein random-Copolymer sein.

Das Propen-Copolymer kann zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, bevorzugter zu zumindest 85 Gew.-%, bevorzugter zu zumindest 90 Gew.-%, in der Polymerzusammensetzung enthalten sein.

Das Propen-Copolymer kann zu höchstens 99 Gew.-%, bevorzugt zu höchstens 97 Gew.-%, bevorzugter zu höchstens 90 Gew.-%, bevorzugter zu höchstens 85 Gew.-%, bevorzugter zu höchstens 80 Gew.-%, bevorzugter zu höchstens 75 Gew.-%, bevorzugter zu höchstens 70 Gew.-%, bevorzugter zu höchstens 65 Gew.-%, bevorzugter zu höchstens 60 Gew.-%, bevorzugter zu höchstens 55 Gew.-%, bevorzugter zu höchstens 50 Gew.-%, bevorzugter zu höchstens 45 Gew.-%, bevorzugter zu höchstens 40 Gew.-%, bevorzugter zu höchstens 35 Gew.-%, bevorzugter zu höchstens 30 Gew.-%, bevorzugter zu höchstens 25 Gew.-%, bevorzugter zu höchstens 20 Gew.-%, bevorzugter zu höchstens 15 Gew.-%, bevorzugter zu höchstens 10 Gew.-%, in der Polymerzusammensetzung enthalten sein.

Das Propen-Copolymer kann in einem Bereich von 5 Gew.-% bis 99 Gew.-% in der Polymerzusammensetzung enthalten sein.

Das Propen-Copolymer kann in einem Bereich von 50 Gew.-% bis 99 Gew.-%, bevorzugt in einem Bereich von 60 Gew.-% bis 99 Gew.-%, bevorzugter in einem Bereich von 70 Gew.-% bis 99 Gew.-%, bevorzugter in einem Bereich von 80 Gew.-% bis 99 Gew.-%, bevorzugter in einem Bereich von 90 Gew.-% bis 99 Gew.-%, in der Polymerzusammensetzung enthalten sein.

Das Propen-Copolymer kann in einem Bereich von 5 Gew.-% bis 90 Gew.-%, bevorzugt in einem Bereich von 10 Gew.-% bis 80 Gew.-%, bevorzugter in einem Bereich von 20 Gew.-% bis 80 Gew.-%, bevorzugter in einem Bereich von 30 Gew.-% bis 70 Gew.-%, bevorzugter in einem Bereich von 40 Gew.-% bis 60 Gew.-%, bevorzugter in einem Bereich von 45 Gew.-% bis 55 Gew.-%, in der Polymerzusammensetzung enthalten sein.

Das Propen-Copolymer kann in einem Bereich von 5 Gew.-% bis 60 Gew.-%, bevorzugt in einem Bereich von 10 Gew.-% bis 50 Gew.-%, bevorzugter in einem Bereich von 10 Gew.-% bis 40 Gew.-%, bevorzugter in einem Bereich von 15 Gew.-% bis 35 Gew.-%, bevorzugter in einem Bereich von 20 Gew.-% bis 30 Gew.-%, in der Polymerzusammensetzung enthalten sein.

Das Propen-Copolymer kann in einem Bereich von 40 Gew.-% bis 95 Gew.-%, bevorzugt in einem Bereich von 50 Gew.-% bis 95 Gew.-%, bevorzugter in einem Bereich von 60 Gew.-% bis 95 Gew.-%, bevorzugter in einem Bereich von 70 Gew.-% bis 95 Gew.-%, bevorzugter in einem Bereich von 78 Gew.-% bis 89 Gew.-%, in der Polymerzusammensetzung enthalten sein.

Allgemein beziehen sich Gew.-%-Angaben auf das Gesamtgewicht aller Komponenten einer Mischung oder Zusammensetzung. Beispielsweise beziehen sich Gew.-%-Angaben von Komponenten der Polymerzusammensetzung auf alle Komponenten der Polymerzusammensetzung.

Das Propen-Copolymer kann die einzige polymere Komponente in der Polymerzusammensetzung sein.

Das Propen-Copolymer kann einen Speichermodul bei 4 °C zwischen 1 MPa und 50 MPa aufweisen. Das Propen-Copolymer kann einen Speichermodul bei 20 °C zwischen 1 MPa und 40 MPa aufweisen. Das Propen-Copolymer kann einen Speichermodul bei 40 °C zwischen 0,5 MPa und 20 MPa aufweisen. Das Propen-Copolymer kann einen Speichermodul bei 70 °C zwischen 0,2 MPa und 10 MPa aufweisen. Das Propen-Copolymer kann einen Speichermodul bei 100 °C zwischen 0,1 MPa und 5 MPa aufweisen. Das Propen-Copolymer kann einen Speichermodul bei 130 °C zwischen 0,1 MPa und 2 MPa aufweisen.

Die Polymerzusammensetzung kann ein random oder Block Copolymer umfassen. Das zumindest eine Polymer kann ein/das random oder Block Copolymer sein. Alternativ kann das random oder Block Copolymer zusätzlich zu dem Propen-Copolymer oder einem oder mehreren anderen Polymeren in der Polymerzusammensetzung enthalten sein.

Bevorzugt ist Ethen ein Comonomer des random oder Block Copolymers. Alternativ oder zusätzlich kann zumindest ein C3 bis C16(alpha-)Olefin ein Comonomer des Copolymers sein.

Bevorzugt ist Ethen ein Comonomer des random oder Block Copolymers und zumindest ein C3 bis C16(alpha-)Olefin ein Comonomer des random oder Block Copolymers. Bevorzugter ist Ethen ein Comonomer des random oder Block Copolymers und zumindest ein C3 bis C8(alpha-)Olefin ein Comonomer des random oder Block Copolymers. Bevorzugter ist Ethen ein Comonomer des random oder Block Copolymers und zumindest eines von Propen, 1-Buten, 1-Penten, 1-Hexen, 1-Hepten und 1-Octen ein Comonomer des random oder Block Copolymers. Besonders bevorzugt ist Ethen ein Comonomer des random oder Block Copolymers und 1-Buten oder 1-Octen ein Comonomer des random oder Block Copolymers.

Das random oder Block Copolymer kann ein Bipolymer sein.

Wenn das random oder Block Copolymer Ethen als Comonomer enthält, kann der Comonomeranteil von Ethen in dem random oder Block Copolymer mehr als 30 mol-%, bevorzugt mehr als 40 mol-%, bevorzugter mehr als 50 mol-%, bevorzugter mehr als 55 mol-%, bevorzugter mehr als 60 mol-%, bevorzugter mehr als 70 mol-%, bevorzugter mehr als 80 mol-%, bevorzugter mehr als 90 mol-%, betragen.

Das random oder Block Copolymer kann ein Ethen-1-Octen-Copolymer sein, insbesondere ein Ethen-1-Octen-Blockcopolymer oder ein random Ethen-1-Octen-Copolymer.

Der Comonomeranteil von Ethen in dem random oder Block Copolymer kann weniger als 90 mol-%, bevorzugt weniger als 80mol-%, bevorzugter weniger als 70 mol-%, bevorzugter weniger als 60 mol-%, bevorzugter weniger als 50 mol-%, bevorzugter weniger als 40 mol-%, bevorzugter weniger als 30 mol-%, bevorzugter weniger als 20 mol-%, bevorzugter weniger als 10 mol-%, betragen.

Das random oder Block Copolymer kann ein 1-Buten-Ethen-Copolymer, insbesondere ein random 1-Buten-Ethen-Copolymer, oder ein Propen-Ethen-Copolymer, insbesondere ein random Propen-Ethen-Copolymer, sein.

Das random oder Block Copolymer kann zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, bevorzugter zu zumindest 85 Gew.-%, bevorzugter zu zumindest 90 Gew.-%, in der Polymerzusammensetzung enthalten sein.

Das random oder Block Copolymer kann zu höchstens 99 Gew.-%, bevorzugt zu höchstens 97 Gew.-%, bevorzugter zu höchstens 90 Gew.-%, bevorzugter zu höchstens 85 Gew.-%, bevorzugter zu höchstens 80 Gew.-%, bevorzugter zu höchstens 75 Gew.-%, bevorzugter zu höchstens 70 Gew.-%, bevorzugter zu höchstens 65 Gew.-%, bevorzugter zu höchstens 60 Gew.-%, bevorzugter zu höchstens 55 Gew.-%, bevorzugter zu höchstens 50 Gew.-%, bevorzugter zu höchstens 45 Gew.-%, bevorzugter zu höchstens 40 Gew.-%, bevorzugter zu höchstens 35 Gew.-%, bevorzugter zu höchstens 30 Gew.-%, bevorzugter zu höchstens 25 Gew.-%, bevorzugter zu höchstens 20 Gew.-%, bevorzugter zu höchstens 15 Gew.-%, bevorzugter zu höchstens 10 Gew.-%, in der Polymerzusammensetzung enthalten sein.

Das random oder Block Copolymer kann in einem Bereich von 5 Gew.-% bis 99 Gew.-% in der Polymerzusammensetzung enthalten sein.

Das random oder Block Copolymer kann in einem Bereich von 20 Gew.-% bis 95 Gew.-%, bevorzugt in einem Bereich von 40 Gew.-% bis 90 Gew.-%, bevorzugter in einem Bereich von 50 Gew.-% bis 80 Gew.-%, bevorzugter in einem Bereich von 55 Gew.-% bis 80 Gew.-%, bevorzugter in einem Bereich von 60 Gew.-% bis 75 Gew.-%, in der Polymerzusammensetzung enthalten sein.

Das random oder Block Copolymer kann in einem Bereich von 1 Gew.-% bis 45 Gew.-%, bevorzugt in einem Bereich von 1 Gew.-% bis 35 Gew.-%, bevorzugter in einem Bereich von 5 Gew.-% bis 25 Gew.-%, bevorzugter in einem Bereich von 5 Gew.-% bis 20 Gew.-%, in der Polymerzusammensetzung enthalten sein.

Das random oder Block Copolymer (insbesondere das 1-Buten-Ethen-Copolymer) kann einen Speichermodul bei 4 °C zwischen 1 MPa und 10 MPa aufweisen. Das random oder Block Copolymer (insbesondere das 1-Buten-Ethen-Copolymer) kann einen Speichermodul bei 20 °C zwischen 1 MPa und 8 MPa aufweisen. Das random oder Block Copolymer (insbesondere das 1-Buten-Ethen-Copolymer) kann einen Speichermodul bei 40 °C zwischen 0,5 MPa und 5 MPa aufweisen. Das random oder Block Copolymer (insbesondere das 1-Buten-Ethen-Copolymer) kann einen Speichermodul bei 70 °C zwischen 0,05 MPa und 1 MPa aufweisen. Das random oder Block Copolymer (insbesondere das 1-Buten-Ethen-Copolymer) kann einen Speichermodul bei 100 °C von kleiner 0,01 aufweisen. Das random oder Block Copolymer (insbesondere das 1-Buten-Ethen-Copolymer) kann einen Speichermodul bei 130 °C von kleiner 0,01 aufweisen.

Das random oder Block Copolymer (insbesondere das Propen-Ethen-Copolymer) kann einen Speichermodul bei 4 °C zwischen 50 MPa und 1000 MPa aufweisen. Das random oder Block Copolymer (insbesondere das Propen-Ethen-Copolymer) kann einen Speichermodul bei 20 °C zwischen 30 MPa und 600 MPa aufweisen. Das random oder Block Copolymer (insbesondere das Propen-Ethen-Copolymer) kann einen Speichermodul bei 40 °C zwischen 20 MPa und 400 MPa aufweisen. Das random oder Block Copolymer (insbesondere das Propen-Ethen-Copolymer) kann einen Speichermodul bei 70 °C zwischen 10 MPa und 200 MPa aufweisen. Das random oder Block Copolymer (insbesondere das Propen-Ethen-Copolymer) kann einen Speichermodul bei 100 °C zwischen 5 MPa und 150 MPa aufweisen. Das random oder Block Copolymer (insbesondere das Propen-Ethen-Copolymer) kann einen Speichermodul bei 130 °C zwischen 1 MPa und 50 MPa aufweisen.

Die Polymerzusammensetzung kann ein Homopolymer umfassen. Das zumindest eine Polymer kann ein/das Homopolymer sein. Alternativ kann das Homopolymer zusätzlich zu dem Propen-Copolymer und/oder dem random oder Block Copolymer und/oder einem oder mehreren anderen Polymeren in der Polymerzusammensetzung enthalten sein.

Das Homopolymer kann ein C2 bis C4 Homopolymer sein. Beispielsweise kann das Homopolymer Homo-Polyethen (HDPE oder LDPE) sein. Ebenso kann das Homopolymer Homopolypropen sein. Das Homopolymer kann Homo-1-Polybuten sein. Das Homopolymer kann mit den gleichen Gewichtsanteilen wie das random oder Block Copolymer in der Polymerzusammensetzung enthalten sein.

Das Homopolymer kann zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, in der Polymerzusammensetzung enthalten sein.

Das Homopolymer kann zu höchsten 90 Gew.-%, bevorzugt zu höchsten 85 Gew.-%, bevorzugter zu höchsten 80 Gew.-%, bevorzugter zu höchsten 75 Gew.-%, bevorzugter zu höchsten 70 Gew.-%, bevorzugter zu höchsten 65 Gew.-%, bevorzugter zu höchsten 60 Gew.-%, bevorzugter zu höchsten 55 Gew.-%, bevorzugter zu höchsten 50 Gew.-%, bevorzugter zu höchsten 45 Gew.-%, bevorzugter zu höchsten 40 Gew.-%, bevorzugter zu höchsten 35 Gew.-%, bevorzugter zu höchsten 30 Gew.-%, bevorzugter zu höchsten 25 Gew.-%, bevorzugter zu höchsten 20 Gew.-%, bevorzugter zu höchsten 15 Gew.-%, bevorzugter zu höchsten 10 Gew.-%, in der Polymerzusammensetzung enthalten sein.

Das Homopolymer kann in einem Bereich von 1 Gew.-% bis 60 Gew.-%, bevorzugt in einem Bereich von 1 Gew.-% bis 50 Gew.-%, bevorzugter in einem Bereich von 2 Gew.-% bis 40 Gew.-%, bevorzugter in einem Bereich von 3 Gew.-% bis 40 Gew.-%, in der Polymerzusammensetzung enthalten sein.

Das Homopolymer (insbesondere das Ethen-Homopolymer) kann einen Speichermodul bei 4 °C zwischen 25 MPa und 500 MPa aufweisen. Das Homopolymer (insbesondere das Ethen-Homopolymer) kann einen Speichermodul bei 20 °C zwischen 10 MPa und 300 MPa aufweisen. Das Homopolymer (insbesondere das Ethen-Homopolymer) kann einen Speichermodul bei 40 °C zwischen 5 MPa und 200 MPa aufweisen. Das Homopolymer (insbesondere das Ethen-Homopolymer) kann einen Speichermodul bei 70 °C zwischen 1 MPa und 100 MPa aufweisen. Das Homopolymer (insbesondere das Ethen-Homopolymer) kann einen Speichermodul bei 100 °C zwischen 0,5 MPa und 15 MPa aufweisen. Das Homopolymer (insbesondere das Ethen-Homopolymer) kann einen Speichermodul bei 130 °C zwischen 0,01 MPa und 0,1 MPa aufweisen.

Das Homopolymer (insbesondere das Propen-Homopolymer) kann einen Speichermodul bei 4 °C zwischen 100 MPa und 2500 MPa aufweisen. Das Homopolymer (insbesondere das Propen-Homopolymer) kann einen Speichermodul bei 20 °C zwischen 75 MPa und 2000 MPa aufweisen. Das Homopolymer (insbesondere das Propen-Homopolymer) kann einen Speichermodul bei 40 °C zwischen 50 MPa und 1200 MPa aufweisen. Das Homopolymer (insbesondere das Propen-Homopolymer) kann einen Speichermodul bei 70 °C zwischen 25 MPa und 500 MPa aufweisen. Das Homopolymer (insbesondere das Propen-Homopolymer) kann einen Speichermodul bei 100 °C zwischen 10 MPa und 300 MPa aufweisen. Das Homopolymer (insbesondere das Propen-Homopolymer) kann einen Speichermodul bei 130 °C zwischen 5 MPa und 200 MPa aufweisen.

Die Polymerzusammensetzung kann ein Buten-Copolymer umfassen. Das Buten-Copolymer kann das random oder Block Copolymer in der Polymerzusammensetzung ersetzen. Ebenso kann das Buten-Copolymer das Homopolymer, insbesondere das Homopolypropen, in der Polymerzusammensetzung ersetzen. Alternativ kann das Buten-Copolymer zusätzlich zu dem random oder Block Copolymer bzw. dem Homopolymer in der Polymerzusammensetzung enthalten sein.

Das Buten-Copolymer kann eine Schmelztemperatur Tm von zumindest 30 °C aufweisen. Bevorzugt weist das Buten-Copolymer eine Schmelztemperatur Tm zwischen 30 °C und 130 °C auf. Bevorzugt liegt die Schmelztemperatur Tₘ des Buten-Copolymer zwischen 40°C und 125°C. Besonders bevorzugt liegt die Schmelztemperatur Tₘ des Buten-Copolymer zwischen 80°C und 125°C. Die Schmelztemperatur Tₘ des Buten-Copolymer kann ebenso zwischen 105°C und 125°C liegen.

Das Buten des Buten-Copolymers ist bevorzugt ein 1-Buten.

Ein Comonomer des Buten-Copolymers kann ein C3 oder C5 bis C16 (alpha-)Olefin, bevorzugt ein C3 oder C5 bis C12 (alpha-)Olefin, bevorzugter ein C3 oder C5 bis C8 (alpha-)Olefin, sein. Bevorzugt ist Propen ein Comonomer des Buten-Copolymers. Das Buten-Copolymer kann ein Buten-Propylen-Copolymer sein.

Das Buten-Copolymer kann ein Bipolymer sein, so dass das Buten-Copolymer zusätzlich zu Buten genau ein weiteres Comonomer, z.B. Propylen, aufweist.

Der Comonomeranteil von Buten in dem Buten-Copolymer kann mehr als 50 mol-%, bevorzugt mehr als 55 mol-%, bevorzugter mehr als 60 mol-%, bevorzugter mehr als 65 mol-%, bevorzugter mehr als 70 mol-%, bevorzugter mehr als 75 mol-%, bevorzugter mehr als 80 mol-%, bevorzugter mehr als 85 mol-%, bevorzugter mehr als 90 mol-%, betragen.

Das Buten-Copolymer kann zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, bevorzugter zu zumindest 85 Gew.-%, bevorzugter zu zumindest 90 Gew.-%, in der Polymerzusammensetzung enthalten sein.

Das Buten-Copolymer kann zu höchstens 99 Gew.-%, bevorzugt zu höchstens 97 Gew.-%, bevorzugter zu höchstens 90 Gew.-%, bevorzugter zu höchstens 85 Gew.-%, bevorzugter zu höchstens 80 Gew.-%, bevorzugter zu höchstens 75 Gew.-%, bevorzugter zu höchstens 70 Gew.-%, bevorzugter zu höchstens 65 Gew.-%, bevorzugter zu höchstens 60 Gew.-%, bevorzugter zu höchstens 55 Gew.-%, bevorzugter zu höchstens 50 Gew.-%, bevorzugter zu höchstens 45 Gew.-%, bevorzugter zu höchstens 40 Gew.-%, bevorzugter zu höchstens 35 Gew.-%, bevorzugter zu höchstens 30 Gew.-%, bevorzugter zu höchstens 25 Gew.-%, bevorzugter zu höchstens 20 Gew.-%, bevorzugter zu höchstens 15 Gew.-%, bevorzugter zu höchstens 10 Gew.-%, in der Polymerzusammensetzung enthalten sein.

Das Buten-Copolymer kann in einem Bereich von 5 Gew.-% bis 99 Gew.-% in der Polymerzusammensetzung enthalten sein.

Das Buten-Copolymer kann in einem Bereich von 20 Gew.-% bis 95 Gew.-%, bevorzugt in einem Bereich von 40 Gew.-% bis 90 Gew.-%, bevorzugter in einem Bereich von 50 Gew.-% bis 80 Gew.-%, bevorzugter in einem Bereich von 55 Gew.-% bis 80 Gew.-%, bevorzugter in einem Bereich von 60 Gew.-% bis 75 Gew.-%, in der Polymerzusammensetzung enthalten sein.

Das Buten-Copolymer kann in einem Bereich von 1 Gew.-% bis 45 Gew.-%, bevorzugt in einem Bereich von 1 Gew.-% bis 35 Gew.-%, bevorzugter in einem Bereich von 5 Gew.-% bis 25 Gew.-%, bevorzugter in einem Bereich von 5 Gew.-% bis 20 Gew.-%, in der Polymerzusammensetzung enthalten sein.

Das Buten-Copolymer kann in einem Bereich von 1 Gew.-% bis 60 Gew.-%, bevorzugt in einem Bereich von 5 Gew.-% bis 50 Gew.-%, bevorzugter in einem Bereich von 15 Gew.-% bis 40 Gew.-%, bevorzugter in einem Bereich von 25 Gew.-% bis 40 Gew.-%, in der Polymerzusammensetzung enthalten sein.

Die Polymerzusammensetzung kann ein weiteres Propen-Copolymer umfassen. Das weitere Propen-Copolymer kann das random oder Block Copolymer in der Polymerzusammensetzung ersetzen. Ebenso kann das weitere Propen-Copolymer das Homopolymer, insbesondere das Homopolypropen, in der Polymerzusammensetzung ersetzen. Alternativ kann das weitere Propen-Copolymer zusätzlich zu dem random oder Block Copolymer bzw. dem Homopolymer in der Polymerzusammensetzung enthalten sein.

Der Begriff "weitere" bedeutet nicht, dass ein anderes Propen-Polymer vorhanden sein muss. Dieser Begriff dient der Unterscheidung.

Die Shore D Härte des weiteren Propen-Copolymers, bestimmt nach DIN ISO 7619 bei einer Temperatur von 23 °C und einer Haltezeit von 15 s, kann in einem Bereich von 20 bis 75 liegen.

Die Shore D Härte des weiteren Propen-Copolymers, bestimmt nach DIN ISO 7619 bei einer Temperatur von 23 °C und einer Haltezeit von 15 s, kann in einem Bereich von 20 bis 75 liegen. Bevorzugt liegt die Shore D Härte des weiteren Propen-Copolymers, bestimmt nach DIN ISO 7619 bei einer Temperatur von 23 °C und einer Haltezeit von 15 s, in einem Bereich von 30 bis 70, bevorzugter in einem Bereich von 40 bis 60. Besonders bevorzugt liegt die Shore D Härte des weiteren Propen-Copolymers, bestimmt nach DIN ISO 7619, insbesondere DIN ISO 7619-1, bei einer Temperatur von 23 °C und einer Haltezeit von 15 s, in einem Bereich von 47 bis 57 oder in einem Bereich von 50 bis 60.

Die Schmelztemperatur des weiteren Propen-Copolymers, bestimmt durch eine zweite Aufheizkurve einer DSC-Messung bei einer Heizrate von 10°C/min, kann in einem Bereich von 30 °C bis 110 °C liegen.

Bevorzugt liegt die Schmelztemperatur des weiteren Propen-Copolymers, bestimmt durch eine zweite Aufheizkurve einer DSC-Messung bei einer Heizrate von 10°C/min, in einem Bereich von 35 °C bis 110 °C, bevorzugt in einem Bereich von 40 °C bis 110 °C, bevorzugter in einem Bereich von 50 °C bis 100 °C, bevorzugter in einem Bereich von 50 °C bis 90 °C, bevorzugter in einem Bereich von 60 °C bis 90 °C, bevorzugter in einem Bereich von 70 °C bis 90 °C. Besonders bevorzugt liegt die Schmelztemperatur des weiteren Propen-Copolymers, bestimmt durch eine zweite Aufheizkurve einer DSC-Messung bei einer Heizrate von 10°C/min, in einem Bereich von 70 °C bis 80 °C oder in einem Bereich von 78 °C bis 88 °C.

Alternativ kann die Shore Härte (insbesondere Shore A Härte und/oder Shore D Härte) in dieser Offenbarung nach ASTM D2240 oder DIN EN ISO 868, jeweils bei einer Temperatur von 23 °C und einer Haltezeit von 15 s, bestimmt werden.

Die Schmelzflussrate (MFR) des weiteren Propen-Copolymers, bestimmt nach ASTM D1238 bei 230 °C und 2,16 kg, kann in einem Bereich von 0,1 g/10 min und 100 g/10 min, bevorzugt in einem Bereich von 1 g/10 min und 80 g/10 min, bevorzugter in einem Bereich von 1 g/10 min und 40 g/10 min, bevorzugter in einem Bereich von 2 g/10 min und 20 g/10 min, bevorzugter in einem Bereich von 4 g/10 min und 10 g/10 min, liegen.

Die Schmelzflussrate (MFR) des weiteren Propen-Copolymers, bestimmt nach ASTM D1238 bei 190 °C und 2,16 kg, kann in einem Bereich von 0,1 g/10 min und 100 g/10 min, bevorzugt in einem Bereich von 0,1 g/10 min und 60 g/10 min, bevorzugter in einem Bereich von 1 g/10 min und 40 g/10 min, bevorzugter in einem Bereich von 1 g/10 min und 20 g/10 min, bevorzugter in einem Bereich von 1 g/10 min und 5 g/10 min, liegen.

Der Comonomeranteil von Propen in dem weiteren Propen-Copolymer kann zumindest 30 mol-% betragen. Bevorzugt beträgt der Comonomeranteil von Propen in dem weiteren Propen-Copolymer zumindest 35 mol-%, bevorzugter zumindest 40 mol-%, bevorzugter zumindest 45 mol-%, bevorzugter zumindest 50 mol-%, bevorzugter zumindest 55 mol-%, bevorzugter zumindest 60 mol-%, bevorzugter zumindest 65 mol-%, bevorzugter zumindest 70 mol-%, bevorzugter zumindest 75 mol-%, bevorzugter zumindest 80 mol-%.

Der Comonomeranteil von Propen in dem weiteren Propen-Copolymer kann höchstens 95 mol-% betragen. Bevorzugt beträgt der Comonomeranteil von Propen in dem weiteren Propen-Copolymer höchstens 92 mol-%, bevorzugter höchstens 90 mol-%, bevorzugter höchstens 87 mol-%, bevorzugter höchstens 85 mol-%.

Der Comonomeranteil von Propen in dem weiteren Propen-Copolymer kann in einem Bereich von 30 mol-% bis 95 mol-%, bevorzugt in einem Bereich von 40 mol-% bis 95 mol-%, bevorzugter in einem Bereich von 50 mol-% bis 95 mol-%, bevorzugter in einem Bereich von 60 mol-% bis 95 mol-%, bevorzugter in einem Bereich von 70 mol-% bis 95 mol-%, bevorzugter in einem Bereich von 70 mol-% bis 90 mol-%, bevorzugter in einem Bereich von 75 mol-% bis 90 mol-%, liegen.

Das Propen-Copolymer kann ein zweites Comonomer umfassen. Das zweite Comonomer kann ein C2 oder C4 bis C16 (alpha-)Olefin, bevorzugt ein C2 oder C4 bis C12 (alpha-)Olefin, bevorzugter ein C2 oder C4 bis C8 (alpha-)Olefin, bevorzugter 1-Buten, sein.

Der Comonomeranteil des zweiten Comonomers in dem weiteren Propen-Copolymer kann höchstens 40 mol-%, bevorzugt höchstens 30 mol-%, bevorzugter höchstens 25 mol-%, bevorzugter höchstens 20 mol-%, betragen.

Der Comonomeranteil des zweiten Comonomers in dem weiteren Propen-Copolymer kann zumindest 1 mol-%, bevorzugt zumindest 5 mol-%, bevorzugter zumindest 10 mol-%, bevorzugter zumindest 15 mol-%, betragen.

Der Comonomeranteil des zweiten Comonomers in dem weiteren Propen-Copolymer kann in einem Bereich von 1 mol-% bis 40 mol-%, bevorzugt in einem Bereich von 5 mol-% bis 30 mol-%, bevorzugter in einem Bereich von 10 mol-% bis 20 mol-%, liegen.

Der Comonomeranteil von Propen in dem weiteren Propen-Copolymer kann höher sein als der Comonomeranteil des zweiten Comonomers.

Das weitere Propen-Copolymer kann ein Bipolymer sein. Das weitere Propen-Copolymer kann ein Propen-1-Buten-Copolymer sein.

Das weitere Propen-Copolymer kann isotaktische Polypropenabschnitte aufweisen. Ein Polypropenabschnitt kann eine Kettenlänge von zumindest 5, bevorzugt von zumindest 8, bevorzugter von zumindest 10, bevorzugter von zumindest 15, aufweisen. D.h. in einem Polypropenabschnitt kann zumindest 5 Mal direkt aufeinanderfolgend Propen in dem Rückgrat (*"backbone"*) des Polymers vorliegen bzw. einpolymerisiert sein. Der Polypropenabschnitt kann vollständig isotaktisch sein.

Das weitere Propen-Copolymer kann ein random-Copolymer sein.

Das weitere Propen-Copolymer kann zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, bevorzugter zu zumindest 85 Gew.-%, bevorzugter zu zumindest 90 Gew.-%, in der Polymerzusammensetzung enthalten sein.

Das weitere Propen-Copolymer kann zu höchstens 99 Gew.-%, bevorzugt zu höchstens 97 Gew.-%, bevorzugter zu höchstens 90 Gew.-%, bevorzugter zu höchstens 85 Gew.-%, bevorzugter zu höchstens 80 Gew.-%, bevorzugter zu höchstens 75 Gew.-%, bevorzugter zu höchstens 70 Gew.-%, bevorzugter zu höchstens 65 Gew.-%, bevorzugter zu höchstens 60 Gew.-%, bevorzugter zu höchstens 55 Gew.-%, bevorzugter zu höchstens 50 Gew.-%, bevorzugter zu höchstens 45 Gew.-%, bevorzugter zu höchstens 40 Gew.-%, bevorzugter zu höchstens 35 Gew.-%, bevorzugter zu höchstens 30 Gew.-%, bevorzugter zu höchstens 25 Gew.-%, bevorzugter zu höchstens 20 Gew.-%, bevorzugter zu höchstens 15 Gew.-%, bevorzugter zu höchstens 10 Gew.-%, in der Polymerzusammensetzung enthalten sein.

Das weitere Propen-Copolymer kann in einem Bereich von 5 Gew.-% bis 99 Gew.-% in der Polymerzusammensetzung enthalten sein.

Das weitere Propen-Copolymer kann in einem Bereich von 20 Gew.-% bis 95 Gew.-%, bevorzugt in einem Bereich von 40 Gew.-% bis 90 Gew.-%, bevorzugter in einem Bereich von 50 Gew.-% bis 80 Gew.-%, bevorzugter in einem Bereich von 55 Gew.-% bis 80 Gew.-%, bevorzugter in einem Bereich von 60 Gew.-% bis 75 Gew.-%, in der Polymerzusammensetzung enthalten sein.

Das weitere Propen-Copolymer kann in einem Bereich von 1 Gew.-% bis 45 Gew.-%, bevorzugt in einem Bereich von 1 Gew.-% bis 35 Gew.-%, bevorzugter in einem Bereich von 5 Gew.-% bis 25 Gew.-%, bevorzugter in einem Bereich von 5 Gew.-% bis 20 Gew.-%, in der Polymerzusammensetzung enthalten sein.

Das weitere Propen-Copolymer kann in einem Bereich von 1 Gew.-% bis 60 Gew.-%, bevorzugt in einem Bereich von 5 Gew.-% bis 50 Gew.-%, bevorzugter in einem Bereich von 15 Gew.-% bis 40 Gew.-%, bevorzugter in einem Bereich von 25 Gew.-% bis 40 Gew.-%, in der Polymerzusammensetzung enthalten sein.

Die Polymerzusammensetzung kann ein Cycloolefin-Polymer umfassen. Das Cycloolefin-Polymer kann das random oder Block Copolymer in der Polymerzusammensetzung ersetzen. Ebenso kann das Cycloolefin-Polymer das Homopolymer, insbesondere das Homopolyethylen, in der Polymerzusammensetzung ersetzen. Alternativ kann das Cycloolefin-Polymer zusätzlich zu dem random oder Block Copolymer bzw. dem Homopolymer in der Polymerzusammensetzung enthalten sein.

Ein Cycloolefin-Polymer ist ein Polymer, das aus zumindest einem cyclischen (olefinischen) Monomer hergestellt ist. Das zumindest eine cyclische Monomer kann mit einem weiteren Monomer copolymerisiert sein, insbesondere mit einem nicht-cyclischen Monomer. Das weitere Monomer kann ein Olefin, insbesondere ein alpha-Olefin sein. Das Cycloolefin-Polymer kann ebenso durch eine Ringöffnungspolymerisation von zumindest einem cyclischen (olefinischen) Monomer hergestellt sein. Nach der Polymerisation des zumindest einen cyclischen (olefinischen) Monomers kann das Polymer hydriert werden.

Das Cycloolefin-Polymer kann keine von Styrol erhaltenen Abschnitte aufweisen. Zur Polymerisation des Cycloolefin-Polymers kann kein Styrol als (Co)Monomer eingesetzt worden sein.

Das Cycloolefin-Polymer kann keine aromatische Gruppe enthalten. Das Cycloolefin-Polymer kann frei von einer oder mehreren aromatischen Gruppen sein.

Das Cycloolefin-Polymer kann unvernetzt sein. Das Cycloolefin-Polymer kann keine chemische Vernetzung aufweisen.

Das Cycloolefin-Polymer kann kein Propen als Comonomer umfassen. Propen kann nicht als Comonomer bei der Herstellung des Cycloolefin-Polymers eingesetzt worden sein. Das Cycloolefin-Polymer kann keine von Propen erhaltenen Einheiten umfassen.

Das Cycloolefin-Polymer kann kein EPDM (Ethen-Propen-Dien-Kautschuk) mit einem cyclischen Comonomer sein. Das Cycloolefin-Polymer kann kein EPDM (Ethen-Propen-Dien-Kautschuk) sein. Insbesondere ist Ethen-Norbornen kein Comonomer des Cycloolefin-Polymers.

Die Polymerzusammensetzung kann maximal 20 Gew.-% EPDM, bevorzugt maximal 15 Gew.-% EPDM, bevorzugter maximal 10 Gew.-% EPDM, bevorzugter maximal 5 Gew.-% EPDM, bevorzugter maximal 1 Gew.-% EPDM, enthalten. Bevorzugt enthält die Polymerzusammensetzung kein EPDM. Die Polymerzusammensetzung kann frei von EPDM sein.

In dem Cycloolefin-Polymer kann zumindest ein Ring (Cyclus) in die Hauptkette oder das Rückgrat (Backbone) des Cycloolefin-Polymers integriert oder enthalten sein. Der Ring (Cyclus) kann in die Hauptkette oder das Rückgrat (Backbone) kovalent gebunden sein. Die Hauptkette oder das Rückgrat (Backbone) kann die längste Serie von kovalent gebundenen Atomen sein. Durch die Hauptkette oder das Rückgrat (Backbone) kann die kontinuierliche Kette des Polymers gebildet sein.

Für die Herstellung des Cycloolefin-Polymers kann genau ein Monomer oder höchstens ein Monomer eingesetzt worden sein.

Bevorzugt enthält das Cycloolefin-Polymer monocyclische Einheiten. Das Cycloolefin-Polymer kann eine monocyclische C5-Einheit umfassen. Die monocyclische C5-Einheit kann ein Ring (Cyclus) mit fünf Kohlenstoffatomen sein.

Das Cycloolefin-Polymer kann eine Lichtdurchlässigkeit, bestimmt nach ISO 13468-2, von zumindest 50 %, bevorzugt zumindest 60 %, bevorzugter zumindest 70 %, bevorzugter zumindest 75 %, bevorzugter zumindest 80 %, bevorzugter zumindest 82 %, bevorzugter zumindest 85 %, bevorzugter zumindest 87 %, bevorzugter zumindest 90 %, bevorzugter zumindest 92 %, bevorzugter zumindest 95 %, aufweisen.

Das Cycloolefin-Polymer kann eine Wasserabsorption, bestimmt nach ISO 62, von höchstens 10 %, bevorzugt höchstens 9 %, bevorzugter höchstens 8 %, bevorzugter höchstens 7 %, bevorzugter höchstens 6 %, bevorzugter höchstens 5 %, bevorzugter höchstens 4 %, bevorzugter höchstens 3 %, bevorzugter höchstens 2 %, bevorzugter höchstens 1 %, bevorzugter höchstens 0,5 %, bevorzugter höchstens 0,2 %, bevorzugter höchstens 0,1 %, bevorzugter höchstens 0,05 %, aufweisen.

Das Cycloolefin-Polymer kann eine Shore A Härte (bestimmt nach DIN ISO 7619 bei einer Temperatur von 23 °C und einer Haltezeit von 15 s) von zumindest 40 aufweisen. Bevorzugt beträgt die Shore A Härte des Cycloolefin-Polymers zumindest 50, bevorzugter zumindest 60, bevorzugter zumindest 70, bevorzugter zumindest 80, bevorzugter zumindest 90.

Das Cycloolefin-Polymer kann eine Shore D Härte (bestimmt nach DIN ISO 7619 bei einer Temperatur von 23 °C und einer Haltezeit von 15 s) von zumindest 20 aufweisen. Bevorzugt beträgt die Shore D Härte des Cycloolefin-Polymers zumindest 30, bevorzugter zumindest 40, bevorzugter zumindest 50, bevorzugter zumindest 60, bevorzugter zumindest 70, bevorzugter zumindest 75.

Die Shore D Härte des Cycloolefin-Polymers kann höchstens 90, bevorzugt höchstens 80, bevorzugter höchstens 70, bevorzugter höchstens 60, bevorzugter höchstens 50, betragen. Insbesondere beträgt die Shore D Härte des Cycloolefin-Polymers zwischen 70 und 85 oder zwischen 72 und 87.

Das Cycloolefin-Copolymer kann eine Dichte (bestimmt nach ISO 1183) von zumindest 0,850 g cm⁻³ aufweisen. Bevorzugt beträgt die Dichte des Cycloolefin-Polymers zumindest 0,870 g cm⁻³, bevorzugter zumindest 0,890 g cm⁻³, bevorzugter zumindest 0,910 g cm⁻³, bevorzugter zumindest 0,930 g cm⁻³, bevorzugter zumindest 0,950 g cm⁻³, bevorzugter zumindest 0,970 g cm⁻³, bevorzugter zumindest 0,990 g cm⁻³, bevorzugter zumindest 1,000 g cm⁻³, bevorzugter zumindest 1,010 g cm⁻³, am meisten bevorzugt zwischen 0,920 g cm⁻³ und 1,050 g cm⁻³.

Die Dichte des Cycloolefin-Polymers beträgt bevorzugt zwischen 0,900 g cm⁻³ und 1,100 g cm⁻³, bevorzugter zwischen 0,920 g cm⁻³ und 1,050 g cm⁻³, bevorzugter zwischen 0,930 g cm⁻³ und 1,030 g cm⁻³. Besonders bevorzugt beträgt die Dichte des Cycloolefin-Polymers zwischen 0,930 g cm⁻³ und 0,950 g cm⁻³, oder zwischen 0,970 g cm⁻³ und 0,990 g cm⁻³, oder zwischen 1,000 g cm⁻³ und 1,020 g cm⁻³, oder zwischen 1,010 g cm⁻³ und 1,030 g cm⁻³.

Das Cycloolefin-Copolymer kann eine Glasübergangstemperatur (bestimmt nach ISO 11357-1,-2,-3, 10 °C/min) von zumindest -20 °C aufweisen. Bevorzugt beträgt die Glasübergangstemperatur des Cycloolefin-Copolymers zumindest 0 °C, bevorzugter zumindest 3 °C, bevorzugter zumindest 40 °C, bevorzugter zumindest 60 °C, bevorzugter zumindest 70 °C, bevorzugter zumindest 90 °C, bevorzugter zumindest 110 °C, bevorzugter zumindest 125 °C, bevorzugter zumindest 130 °C, bevorzugter zumindest 150 °C, bevorzugter zumindest 170 °C.

Die Glasübergangstemperatur des Cycloolefin-Copolymers kann höchstens 200 °C, bevorzugt höchstens 190 °C, bevorzugter höchstens 180 °C, bevorzugter höchstens 170 °C, bevorzugter höchstens 160 °C, bevorzugter höchstens 150 °C, bevorzugter höchstens 140 °C, bevorzugter höchstens 120 °C, bevorzugter höchstens 100 °C, bevorzugter höchstens 80 °C, bevorzugter höchstens 70 °C, bevorzugter höchstens 50 °C, bevorzugter höchstens 30 °C, bevorzugter höchstens 10 °C, betragen.

Die Glasübergangstemperatur des Cycloolefin-Copolymers kann zwischen 1 °C und 11 °C, oder zwischen 60 °C und 70 °C, oder zwischen 73 °C und 83 °C, oder zwischen 74 °C und 84 °C, oder zwischen 130 °C und 140 °C, oder zwischen 129 °C und 139 °C, oder zwischen 133 °C und 143 °C, oder zwischen 153 °C und 163 °C, oder zwischen 173 °C und 183 °C, betragen.

Ein Monomer oder ein Comonomer des Cycloolefin-Polymers kann ein monocyclisches oder polycyclisches Olefin sein. Nach der Polymerisation des Cycloolefin-Polymers kann das Cycloolefin-Polymer zumindest eine monocyclische Einheit oder polycyclische Einheit umfassen. Die monocyclische Einheit oder polycyclische Einheit kann durch das monocyclische oder polycyclische Monomer oder Comonomer gebildet sein.

Bevorzugt ist das Monomer oder Comonomer des Cycloolefin-Polymers ein monocyclisches oder polycyclisches C3- bis C20-Olefin. Bevorzugter ist das Monomer oder Comonomer des Cycloolefin-Polymers ein monocyclisches oder polycyclisches C5- bis C20-Olefin. Bevorzugter ist das Monomer oder Comonomer des Cycloolefin-Polymers ein monocyclisches oder polycyclisches C7- bis C17-Olefin, bevorzugter ein monocyclisches oder polycyclisches C7- bis C12-Olefin. Besonders bevorzugt ist das Monomer oder Comonomer des Cycloolefin-Polymers ein monocyclisches oder polycyclisches C7-Olefin. Beispielsweise ist das Monomer oder Comonomer des Cycloolefin-Polymers Norbornen (Bicyclo[2.2.1]hept-2-en).

Das Monomer oder Comonomer des Cycloolefin-Polymers kann ein monocyclisches oder polycyclisches Alken sein. Das Monomer oder Comonomer des Cycloolefin-Polymers kann ein monocyclisches C3- bis C8-Olefin (Mono-Cyclo-Propen bis Mono-Cyclo-Octen) sein.

Das Monomer oder Comonomer des Cycloolefin-Polymers kann zumindest zwei Ringe (Cyclen) enthalten. Bevorzugt enthält das Monomer oder Comonomer des Cycloolefin-Polymers zwei bis zwanzig, bevorzugter zwei bis fünfzehn, bevorzugter zwei bis zehn, bevorzugter zwei bis acht Ringe (Cyclen). Das Monomer oder Comonomer des Cycloolefin-Polymers kann ein Bis- bis Octacyclo-Olefin sein. Passende Monomere oder Comonomere des Cycloolefin-Polymers sind auf den Seiten 4 bis 17, insbesondere auf den Seiten 6, 7 und/oder in den Tabellen 1 und 2, von EP 0 283 164 A2 beschrieben, dessen Inhalt durch Bezugnahme in die vorliegende Offenbarung aufgenommen wird.

Das Monomer oder Comonomer des Cycloolefin-Polymers kann ein Homocyclus sein. Bevorzugt ist das Monomer oder Comonomer des Cycloolefin-Polymers ein Kohlenstoff-Homocyclus.

Das Monomer oder Comonomer des Cycloolefin-Polymers kann ein Heterocyclus sein. Der Heterocyclus kann ein oder mehrere Heteroatome enthalten. Bevorzugt enthält der Heterocyclus Stickstoff, Sauerstoff und/oder Schwefel.

Das Monomer oder Comonomer des Cycloolefin-Polymers kann unsubstituiert oder substituiert sein. Bevorzugt enthält das Monomer oder Comonomer des Cycloolefin-Polymers zumindest einen der folgenden Substituenten: Alkenyl, Alkyl, Hydroxyl, Carboxyl, Carboxy-Alkyl und Halogen.

Das Cycloolefin-Polymer kann unsubstituiert oder substituiert sein. Bevorzugt enthält das Cycloolefin-Polymer zumindest einen der folgenden Substituenten: Alkenyl, Alkyl, Hydroxyl, Carboxyl, Carboxy-Alkyl und Halogen.

Allgemein sind manche Moleküle (Monomere oder Comonomere) hierin nach der Anzahl ihrer Kohlenstoffatome bezeichnet. Beispielsweise ist ein C5-Olefin ein Olefin mit 5 Kohlenstoffatomen und ein C20-Olefin ist ein Olefin mit 20 Kohlenstoffatomen.

Das Cycloolefin-Polymer kann durch eine ringerhaltende oder durch eine ringöffnende Polymerisation hergestellt sein. Die ringöffnende Polymerisation kann eine ringöffnende-Metathese-Polymerisation ("ring-opening metathesis polymerization") sein.

Bei einer ringerhaltenden Polymerisation kann ein Ring (Cyclus) oder mehrere Ringe (Cyclen) eines Monomers nach der Polymerisation in dem Polymer vorhanden sein. Mit anderen Worten, durch die Polymerisation kann ein Ring (Cyclus) oder mehrere Ringe (Cyclen) eines Monomers nicht geöffnet werden.

Bei einer ringöffnenden Polymerisation kann ein Ring (Cyclus) oder mehrere Ringe (Cyclen) eines Monomers nach der Polymerisation in dem Polymer nicht vorhanden sein. Mit anderen Worten, durch die Polymerisation kann ein Ring (Cyclus) oder mehrere Ringe (Cyclen) eines Monomers geöffnet werden.

Bevorzugt ist nach der ringöffnenden Polymerisation ein Ring (Cyclus) oder mehrere Ringe (Cyclen) in dem Polymer vorhanden. Ein zur Polymerisation eingesetztes Monomer kann zumindest zwei Ringe (Cyclen) enthalten. Insbesondere enthält das zur Polymerisation eingesetzte Monomer genau zwei Ringe (Cyclen) oder höchstens zwei Ringe (Cyclen). Einer der Ringe (Cyclen) kann durch die Polymerisation geöffnet werden. Ein weiterer der Ringe (Cyclen) kann in dem (polymerisierten) Polymer vorhanden sein. D.h. zumindest einer der Ringe (Cyclen) kann bei der Polymerisation geöffnet werden und ein weiterer der Ringe (Cyclen) kann in das Polymer eingebaut werden bzw. in dem Polymer vorhanden sein.

Ein monocyclisches oder polycyclisches Olefin kann in dem Cycloolefin-Polymer einen Anteil von mindestens 2 mol-% aufweisen. Bevorzugt weist ein monocyclisches oder polycyclisches Olefin in dem Cycloolefin-Polymer einen Anteil von mindestens 5 mol-%, bevorzugter von mindestens 10 mol-%, bevorzugter von mindestens 20 mol-%, bevorzugter von mindestens 40 mol-%, bevorzugter von mindestens 60 mol-%, bevorzugter von mindestens 65 mol-%, auf.

Ein monocyclisches oder polycyclisches Olefin kann in dem Cycloolefin-Polymer einen Anteil von höchstens 90 mol-% aufweisen. Bevorzugt weist ein monocyclisches oder polycyclisches Olefin in dem Cycloolefin-Polymer einen Comonomeranteil von höchstens 75 mol-%, bevorzugter von höchstens 60 mol-%, bevorzugter von höchstens 50 mol-%, bevorzugter von höchstens 40 mol-%, auf.

Der Anteil eines monocyclischen oder polycyclischen Olefins in dem Cycloolefin-Polymer kann zwischen 25 mol-% und 35 mol-%, oder zwischen 45 mol-% und 55 mol-%, oder zwischen 60 mol-% und 70 mol-%, oder zwischen 60 mol-% und 90 mol-%, insbesondere zwischen 70 mol-% und 80 mol-%, liegen.

Insbesondere ist das Cycloolefin-Polymer ein Cycloolefin-Copolymer. Das Cycloolefin-Copolymer kann aus zumindest zwei unterschiedlichen Monomoren hergestellt sein. Bevorzugt ist das Cycloolefin-Copolymer ein Cycloolefin-Bipolymer. In einem Cycloolefin-Bipolymer wurden zur Polymerisation genau zwei unterschiedliche Arten von Monomeren eingesetzt.

Ein Comonomer des Cycloolefin-Copolymers kann ein C2- bis C10-(alpha)Olefin sein. Bevorzugt ist ein Comonomer des Cycloolefin-Copolymers ein C2- bis C8-(alpha)Olefin, bevorzugter ein C2- bis C6-(alpha)Olefin. Ein Comonomer des Cycloolefin-Copolymers kann Ethen, 1-Buten oder 1-Hexen sein. Am meisten bevorzugt ist ein Comonomer des Cycloolefin-Copolymers Ethen. Das Comonomer kann als nicht-cyclisches Comonomer bezeichnet werden.

Ein monocyclisches oder polycyclisches Olefin als Comonomer des Cycloolefin-Copolymers kann einen Comonomeranteil von mindestens 2 mol-% aufweisen. Bevorzugt weist ein monocyclisches oder polycyclisches Olefin als Comonomer des Cycloolefin-Copolymers einen Comonomeranteil von mindestens 5 mol-%, bevorzugter von mindestens 10 mol-%, bevorzugter von mindestens 20 mol-%, bevorzugter von mindestens 40 mol-%, bevorzugter von mindestens 60 mol-%, bevorzugter von mindestens 65 mol-%, auf.

Ein monocyclisches oder polycyclisches Olefin als Comonomer des Cycloolefin-Copolymers kann einen Comonomeranteil von höchstens 90 mol-% aufweisen. Bevorzugt weist ein monocyclisches oder polycyclisches Olefin als Comonomer des Cycloolefin-Copolymers einen Comonomeranteil von höchstens 75 mol-%, bevorzugter von höchstens 60 mol-%, bevorzugter von höchstens 50 mol-%, bevorzugter von höchstens 40 mol-%, auf.

Der Comonomeranteil eines monocyclischen oder polycyclischen Olefins als Comonomer des Cycloolefin-Copolymers kann zwischen 25 mol-% und 35 mol-%, oder zwischen 45 mol-% und 55 mol-%, oder zwischen 60 mol-% und 70 mol-%, oder zwischen 60 mol-% und 90 mol-%, insbesondere zwischen 70 mol-% und 80 mol-%, liegen.

Das nicht-cyclische Comonomer des Cycloolefin-Copolymers kann einen Comonomeranteil von höchstens 90 mol-%, bevorzugt von höchstens 80 mol-%, bevorzugter von höchstens 60 mol-%, bevorzugter von höchstens 40 mol-%, bevorzugter von höchstens 35 mol-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Das nicht-cyclische Comonomer des Cycloolefin-Copolymers kann einen Comonomeranteil von mindestens 10 mol-%, bevorzugt von mindestens 25 mol-%, bevorzugter von mindestens 40 mol-%, bevorzugter von mindestens 60 mol-%, bevorzugter von mindestens 65 mol-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Das nicht-cyclische Comonomer des Cycloolefin-Copolymers kann einen Comonomeranteil zwischen 65 mol-% und 75 mol-%, oder zwischen 45 mol-% und 55 mol-%, oder zwischen 30 mol-% und 40 mol-%, oder zwischen 10 mol-% und 40 mol-%, insbesondere zwischen 20 mol-% und 30 mol-% aufweisen. Das nicht-cyclische Comonomer kann jedes hierin offenbarte nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Ein monocyclisches oder polycyclisches Olefin als Comonomer des Cycloolefin-Copolymers kann einen Comonomeranteil von mindestens 10 Gew.-% aufweisen. Bevorzugt weist ein monocyclisches oder polycyclisches Olefin als Comonomer des Cycloolefin-Copolymers einen Comonomeranteil von mindestens 20 Gew.-%, bevorzugter von mindestens 25 Gew.-%, bevorzugter von mindestens 40 Gew.-%, bevorzugter von mindestens 50 Gew.-%, bevorzugter von mindestens 60 Gew.-%, bevorzugter von mindestens 70 Gew.-%, bevorzugter von mindestens 80 Gew.-%, auf.

Ein monocyclisches oder polycyclisches Olefin als Comonomer des Cycloolefin-Copolymers kann einen Comonomeranteil von höchstens 95 Gew.-% aufweisen. Bevorzugt weist ein monocyclisches oder polycyclisches Olefin als Comonomer des Cycloolefin-Copolymers einen Comonomeranteil von höchstens 90 Gew.-%, bevorzugter von höchstens 80 Gew.-%, bevorzugter von höchstens 70 Gew.-%, bevorzugter von höchstens 60 Gew.-%, bevorzugter von höchstens 50 Gew.-%, bevorzugter von höchstens 40 Gew.-%, bevorzugter von höchstens 35 Gew.-%, auf.

Der Comonomeranteil eines monocyclischen oder polycyclischen Olefins als Comonomer des Cycloolefin-Copolymers kann zwischen 25 Gew.-% und 35 Gew.-%, oder zwischen 45 Gew.-% und 55 Gew.-%, oder zwischen 60 Gew.-% und 70 Gew.-%, oder zwischen 70 Gew.-% und 80 Gew.-%, oder zwischen 72 Gew.-% und 82 Gew.-%, oder zwischen 78 Gew.-% und 88 Gew.-%, oder zwischen 81 Gew.-% und 91 Gew.-%, liegen.

Das nicht-cyclische Comonomer des Cycloolefin-Copolymers kann einen Comonomeranteil von höchstens 90 Gew.-%, bevorzugt von höchstens 80 Gew.-%, bevorzugter von höchstens 70 Gew.-%, bevorzugter von höchstens 60 Gew.-%, bevorzugter von höchstens 50 Gew.-%, bevorzugter von höchstens 40 Gew.-%, bevorzugter von höchstens 30 Gew.-%, bevorzugter von höchstens 28 Gew.-%, bevorzugter von höchstens 22 Gew.-%, bevorzugter von höchstens 19 Gew.-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Das nicht-cyclische Comonomer des Cycloolefin-Copolymers kann einen Comonomeranteil von mindestens 5 Gew.-%, bevorzugt von mindestens 9 Gew.-%, bevorzugter von mindestens 12 Gew.-%, bevorzugter von mindestens 18 Gew.-%, bevorzugter von mindestens 20 Gew.-%, bevorzugter von mindestens 30 Gew.-%, bevorzugter von mindestens 40 Gew.-%, bevorzugter von mindestens 45 Gew.-%, bevorzugter von mindestens 50 Gew.-%, bevorzugter von mindestens 60 Gew.-%, bevorzugter von mindestens 65 Gew.-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Das nicht-cyclische Comonomer des Cycloolefin-Copolymers kann einen Comonomeranteil zwischen 9 Gew.-% und 19 Gew.-%, oder zwischen 12 Gew.-% und 22 Gew.-%, oder zwischen 18 Gew.-% und 28 Gew.-%, oder zwischen 20 Gew.-% und 30 Gew.-%, oder zwischen 30 Gew.-% und 40 Gew.-%, oder zwischen 45 Gew.-% und 55 Gew.-%, oder zwischen 65 Gew.-% und 75 Gew.-%, aufweisen. Das nicht-cyclische Comonomer kann jedes hierin offenbart nicht-cyclische Comonomer und insbesondere ein oben näher beschriebenes nicht-cyclisches Comonomer sein. Beispielsweise ist das nicht-cyclische Comonomer ein C2- bis C10-(alpha)Olefin, besonders bevorzugt Ethen.

Beispielsweise ist das Cycloolefin-Copolymer ein Ethen-Norbornen-Copolymer, insbesondere ein Ethen-Norbornen-Bipolymer.

Das Cycloolefin-Copolymer kann zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, bevorzugter zu zumindest 85 Gew.-%, bevorzugter zu zumindest 90 Gew.-%, in der Polymerzusammensetzung enthalten sein.

Das Cycloolefin-Copolymer kann zu höchstens 99 Gew.-%, bevorzugt zu höchstens 97 Gew.-%, bevorzugter zu höchstens 90 Gew.-%, bevorzugter zu höchstens 85 Gew.-%, bevorzugter zu höchstens 80 Gew.-%, bevorzugter zu höchstens 75 Gew.-%, bevorzugter zu höchstens 70 Gew.-%, bevorzugter zu höchstens 65 Gew.-%, bevorzugter zu höchstens 60 Gew.-%, bevorzugter zu höchstens 55 Gew.-%, bevorzugter zu höchstens 50 Gew.-%, bevorzugter zu höchstens 45 Gew.-%, bevorzugter zu höchstens 40 Gew.-%, bevorzugter zu höchstens 35 Gew.-%, bevorzugter zu höchstens 30 Gew.-%, bevorzugter zu höchstens 25 Gew.-%, bevorzugter zu höchstens 20 Gew.-%, bevorzugter zu höchstens 15 Gew.-%, bevorzugter zu höchstens 10 Gew.-%, in der Polymerzusammensetzung enthalten sein.

Das Cycloolefin-Copolymer kann in einem Bereich von 5 Gew.-% bis 99 Gew.-% in der Polymerzusammensetzung enthalten sein.

Das Cycloolefin-Copolymer kann in einem Bereich von 20 Gew.-% bis 95 Gew.-%, bevorzugt in einem Bereich von 40 Gew.-% bis 90 Gew.-%, bevorzugter in einem Bereich von 50 Gew.-% bis 80 Gew.-%, bevorzugter in einem Bereich von 55 Gew.-% bis 80 Gew.-%, bevorzugter in einem Bereich von 60 Gew.-% bis 75 Gew.-%, in der Polymerzusammensetzung enthalten sein.

Das Cycloolefin-Copolymer kann in einem Bereich von 1 Gew.-% bis 45 Gew.-%, bevorzugt in einem Bereich von 1 Gew.-% bis 35 Gew.-%, bevorzugter in einem Bereich von 5 Gew.-% bis 25 Gew.-%, bevorzugter in einem Bereich von 5 Gew.-% bis 20 Gew.-%, in der Polymerzusammensetzung enthalten sein.

Das Cycloolefin-Copolymer kann in einem Bereich von 1 Gew.-% bis 60 Gew.-%, bevorzugt in einem Bereich von 5 Gew.-% bis 50 Gew.-%, bevorzugter in einem Bereich von 15 Gew.-% bis 40 Gew.-%, bevorzugter in einem Bereich von 25 Gew.-% bis 40 Gew.-%, in der Polymerzusammensetzung enthalten sein.

Die Polymerzusammensetzung kann weniger als 10 Gew.-% Polyvinylchlorid (PVC) enthalten. Bevorzugt enthält die Polymerzusammensetzung weniger als 2 Gew.-% PVC, bevorzugter ist die Polymerzusammensetzung frei von PVC (im Rahmen der am Anmeldetag analytischen Genauigkeit).

Die Polymerzusammensetzung kann genau oder höchstens ein Polymer enthalten, beispielsweise das Propen-Copolymer.

Ebenso kann die Polymerzusammensetzung genau oder höchstens zwei (verschiedene) Polymere enthalten. Beispielsweise enthält die Polymerzusammensetzung kein weiteres Polymer neben dem Propen-Copolymer und einem weiteren Polymer. Die Polymerzusammensetzung kann kein weiteres Polymer neben dem Propen-Copolymer und dem Homopolymer enthalten. Die Polymerzusammensetzung kann kein weiteres Polymer neben dem Propen-Copolymer und dem random oder Block Copolymer enthalten. Die Polymerzusammensetzung kann kein weiteres Polymer neben dem random oder Block Copolymer und dem Homopolymer enthalten. Die Polymerzusammensetzung kann kein weiteres Polymer neben dem Propen-Copolymer und der flüssigen Komponente enthalten.

Die Polymerzusammensetzung kann genau oder höchstens drei (verschiedene) Polymere enthalten. Beispielsweise enthält die Polymerzusammensetzung kein weiteres Polymer neben dem random oder Block Copolymer und zwei verschiedenen Homopolymeren (insbesondere Ethen-Homopolymer und Propen-Homopolymer).

Die Polymerzusammensetzung kann zumindest 1 Gew.-% PVC enthalten. Bevorzugt enthält die Polymerzusammensetzung zumindest 2 Gew.-%, bevorzugter zumindest 5 Gew.-%, bevorzugter zumindest 10 Gew.-%, bevorzugter zumindest 20 Gew.-%, bevorzugter zumindest 30 Gew.-%, PVC. Das weitere Polymer der Polymerzusammensetzung kann PVC sein.

Die Polymerzusammensetzung kann keinen Sauerstoff-Scavenger umfassen. Die Polymerzusammensetzung kann frei von einem Sauerstoff-Scavenger sein. Insbesondere enthält die Polymerzusammensetzung kein Natriumsulfit bzw. ist frei von Natriumsulfit.

Die Polymerzusammensetzung kann kein SEBS (Styrol-Ethen-Buten-Styrol) umfassen. Die Polymerzusammensetzung kann frei von SEBS sein. Insbesondere enthält die Polymerzusammensetzung keine Styrol-haltige Komponente bzw. ist frei von einer Styrolhaltigen Komponente.

Die Polymerzusammensetzung kann zumindest 1 Gew.-% einer bei 20 °C und 1 bar flüssigen Komponente enthalten. Bevorzugt enthält die Polymerzusammensetzung zumindest 5 Gew.-%, bevorzugter zumindest 10 Gew.-%, bevorzugter zumindest 15 Gew.-%, bevorzugter zumindest 20 Gew.-%, einer bei 20 °C und 1 bar flüssigen Komponente.

Die bei 20 °C und 1 bar flüssige Komponente kann zwischen 1 Gew.-% und 30 Gew.-%, bevorzugt zwischen 1 Gew.-% und 25 Gew.-%, bevorzugter zwischen 1 Gew.-% und 20 Gew.-%, bevorzugter zwischen 1 Gew.-% und 15 Gew.-%, bevorzugter zwischen 1 Gew.-% und 10 Gew.-%, in der Polymerzusammensetzung enthalten sein.

Die flüssige Komponente kann zusätzlich zu dem zumindest einen Polymer in der Polymerzusammensetzung enthalten sein.

Allgemein kann ein hierin offenbartes Polymer bei 23 °C und 1 bar fest oder flüssig (Aggregatzustand fest oder flüssig) sein, insbesondere ist ein hierin offenbartes Polymer bei 23 °C und 1 bar fest.

Die flüssige Komponente kann ein Polyalphaolefin sein. Die flüssige Komponente kann eine kinematische Viskosität, bestimmt nach ASTM D445 / ISO 3104, von zumindest 4 cSt, bei einer Temperatur von 100 °C, aufweisen. Alternativ oder zusätzlich kann die flüssige Komponente einen Tropfpunkt, bestimmt nach ASTM 5950, von höchstens -10 °C aufweisen.

Die kinematische Viskosität der flüssigen Komponente kann bei einer Temperatur von 100 °C, bestimmt nach ASTM D445 / ISO 3104, zwischen 4 cSt und 1500 cSt, bevorzugt zwischen 50 cSt und 1000 cSt, mehr bevorzugt zwischen 120 cSt und 1000 cSt, noch bevorzugter zwischen 250 cSt und 1000 cSt, betragen.

Die kinematische Viskosität der flüssigen Komponente kann bei einer Temperatur von 100 °C auch zwischen 2 cSt und 10 cSt, zwischen 55 cSt und 75 cSt, zwischen 140 cSt und 160 cSt, zwischen 280 cSt und 320 cSt oder zwischen 900 cSt und 1100 cSt liegen.

Der Tropfpunkt der flüssigen Komponente kann höchstens -20 °C oder bei höchstens 30 °C betragen.

Die flüssige Komponente kann eine Dichte, bestimmt nach ASTM D4052, von bis zu 0,860 g cm⁻³, insbesondere zwischen 0,825 g cm⁻³ und 0,855 g cm⁻³, aufweisen. Auch kann die Dichte der flüssigen Komponente zwischen 0,840 g cm⁻³ und 0,855 g cm⁻³ liegen.

Die flüssige Komponente kann ein mittleres Molekulargewicht Mw, bestimmt nach DIN 55672-1, von mindestens 440 Da, bevorzugt zwischen 440 Da und 12000 Da, besonders bevorzugt zwischen 1000 Da und 10000 Da, noch mehr bevorzugt zwischen 3000 Da und 10000 Da, aufweisen.

Die flüssige Komponente kann eine Metallocen-Komponente sein. Die flüssige Komponente kann durch die Anwendung eines Metallocen-Katalysators hergestellt worden sein.

Die flüssige Komponente kann ein Ziegler-Natta-Komponente sein. Die flüssige Komponente kann durch die Anwendung eines Ziegler-Natta-Katalysators hergestellt worden sein.

Die flüssige Komponente kann ein Homopolymer oder ein Copolymer sein.

Die flüssige Komponente kann ein Homopolymer eines C3 bis C22 alpha-Olefins sein. Zur Herstellung der flüssigen Komponente als Homopolymer werden also alpha-Olefine der Länge C3 bis C22 als Monomere eingesetzt. Bevorzugt werden für die flüssige Komponente als Homopolymer C6 bis C14 alpha-Olefine oder C8 bis C10 alpha-Olefine als Monomere eingesetzt.

Die flüssige Komponente kann ein 1-Octen-Homopolymer oder ein 1-Decen-Homopolymer sein, bevorzugt ein 1-Decen-Homopolymer.

Als Copolymer ist die flüssige Komponente aus zumindest zwei verschiedenartigen alpha-Olefinen der Länge C3 bis C22 als Comonomere aufgebaut. Spezifisch kommen zwei verschiedenartige Alphaolefine der Länge C6 bis C14 oder C8 bis C10 als Comonomere zum Einsatz.

Die flüssige Komponente kann ein Bipolymer sein.

Die flüssige Komponente kann ein synthetisches Fluid (bei 23 °C und 1 bar) sein, insbesondere ist die flüssige Komponente ein vollständig synthetisches Fluid (bei 23 °C und 1 bar).

Die flüssige Komponente kann hydriert sein, insbesondere ist die flüssige Komponente vollständig hydriert.

Die flüssige Komponente kann eine Mischung verschiedenartiger flüssiger Komponenten sein. Beispielsweise kann die flüssige Komponente eine Mischung von zumindest zwei flüssigen Komponenten sein, die sich in ihrer kinematischen Viskosität und/oder in ihren (Co-)Monomeren unterscheiden. Hierzu können zumindest zwei der hierin offenbarten flüssigen Komponenten als Mischung vorliegen.

Die flüssige Komponente kann ein Polyalphaolefin sein oder umfassen. Die flüssige Komponente kann eine Mischung verschiedener Polyalphaolefine sein.

Die Polymerzusammensetzung kann höchstens eine polymere Komponente oder genau eine polymere Komponente enthalten. Die Polymerzusammensetzung kann höchstens zwei polymere Komponenten oder genau zwei polymere Komponenten enthalten. Die Polymerzusammensetzung kann höchstens drei polymere Komponenten oder genau drei polymere Komponenten enthalten.

Die Polymerzusammensetzung kann weniger als 10 Gew.-% einer bei 20 °C und 1 bar flüssigen Komponente enthalten. Insbesondere enthält die Polymerzusammensetzung weniger als 5 Gew.-%, bevorzugter weniger als 2 Gew.-%, einer bei 20 °C und 1 bar flüssigen Komponente. Am meisten bevorzugt ist die Polymerzusammensetzung frei von einer Komponente, die bei 20 °C und 1 bar flüssig ist (im Rahmen der am Anmeldetag analytischen Genauigkeit).

Die Polymerzusammensetzung kann weniger als 10 Gew.-% Weißöl enthalten. Insbesondere enthält die Polymerzusammensetzung weniger als 5 Gew.-%, bevorzugter weniger als 2 Gew.-%, Weißöl. Am meisten bevorzugt ist die Polymerzusammensetzung frei von Weißöl (im Rahmen der am Anmeldetag analytischen Genauigkeit).

Die Polymerzusammensetzung kann eine flüssige Komponente, beispielsweise Polyalphaolefin (wie oben beschrieben), umfassen und/oder wenig oder kein Weißöl umfassen.

Die Polymerzusammensetzung kann bis zu 15 Gew.-%, bevorzugt bis zu 8 Gew.-%, besonders bevorzugt bis zu 6 Gew.-%, am meisten bevorzugt bis zu 5 Gew.-%, Additive umfassen.

Additive in der Polymerzusammensetzung können ausgewählt sein aus der Gruppe bestehend aus: Pigmente, Nukleierungsmittel, Aufheller, Stabilisatoren, Tenside, Gleitmittel, Antioxidantien und Kombinationen hiervon.

Die Polymerzusammensetzung kann eine Shore A Härte, bestimmt nach DIN ISO 7619 bei einer Temperatur von 23 °C und einer Haltezeit von 15 s, von zumindest 40 aufweisen. Bevorzugt weist die Polymerzusammensetzung eine Shore A Härte von zumindest 30, bevorzugt zumindest 40, bevorzugter zumindest 50, bevorzugter zumindest 60, bevorzugter zumindest 70, bevorzugter zumindest 80, auf.

Die Shore A Härte der Polymerzusammensetzung kann zwischen 40 und 100, bevorzugt zwischen 40 und 95, bevorzugter zwischen 50 und 95, bevorzugter zwischen 60 und 95, bevorzugter zwischen 60 und 90, oder zwischen 65 und 95, betragen.

Die Polymerzusammensetzung kann eine Shore D Härte, bestimmt nach DIN ISO 7619 bei einer Temperatur von 23 °C und einer Haltezeit von 15 s, von weniger als 80 aufweisen. Insbesondere weist die Polymerzusammensetzung eine Shore D Härte von weniger als 70, bevorzugter weniger als 60, bevorzugter weniger als 50, auf.

Die Polymerzusammensetzung kann einen Druckverformungsrest (abgekürzt: DVR), bestimmt nach ASTM D 395 (ASTM D395B), 70 °C, 22 h oder 24 h, von zumindest 50 % aufweisen. Insbesondere weist die Polymerzusammensetzung einen Druckverformungsrest von zumindest 60 %, bevorzugter zumindest 70 %, bevorzugter zumindest 80 %, bevorzugter zumindest 90 %, bevorzugter zumindest 100 %, bevorzugter zumindest 110 %, auf.

Die Polymerzusammensetzung kann einen Druckverformungsrest (ASTM D395 bzw. ASTM D395B, 70 °C, 22 h oder 24 h) von höchstens 150 %, bevorzugt von höchstens 140 %, bevorzugter von höchstens 130 %, bevorzugter von höchstens 120 %, bevorzugter von höchstens 110 %, aufweisen.

Die Polymerzusammensetzung kann einen Druckverformungsrest (ASTM D395 bzw. ASTM D395B, 70 °C, 22 h oder 24 h) zwischen 50 % und 150 %, bevorzugt zwischen 60 % und 140 %, bevorzugter zwischen 70 % und 130 %, bevorzugter zwischen 80 % und 130 %, bevorzugter zwischen 90 % und 130 %, bevorzugter zwischen 90 % und 120 %, aufweisen. Bevorzugt liegt der Druckverformungsrest (ASTM D395 bzw. ASTM D395B, 70 °C, 22 h oder 24 h) zwischen 60 % und 110 %, bevorzugter zwischen 70 % und 105 %.

Die Polymerzusammensetzung kann einen Druckverformungsrest (ASTM D395 bzw. ASTM D395B, 70 °C, 22 h oder 24 h) von höchstens 50 %, bevorzugt von höchstens 40 %, bevorzugter von höchstens 30 %, bevorzugter von höchstens 25 %, aufweisen.

Die Polymerzusammensetzung kann einen Druckverformungsrest (ASTM D395 bzw. ASTM D395B, 70 °C, 22 h oder 24 h) zwischen 5 % und 50 %, bevorzugt zwischen 5 % und 40 %, bevorzugter zwischen 10 % und 40 %, bevorzugter zwischen 10 % und 30 %, bevorzugter zwischen 15 % und 25 % aufweisen.

Die Polymerzusammensetzung kann einen Druckverformungsrest, bestimmt nach ISO 815-1, 70°C, 22 h oder 24 h, von zumindest 30 % aufweisen. Insbesondere weist die Polymerzusammensetzung einen Druckverformungsrest von zumindest 40 %, bevorzugter zumindest 50 %, bevorzugter zumindest 60 %, bevorzugter zumindest 65 %, bevorzugter zumindest 70 %, bevorzugter zumindest 75 %, bevorzugter zumindest 80 %, bevorzugter zumindest 85 %, bevorzugter zumindest 90 %, bevorzugter zumindest 95 %, auf.

Die Polymerzusammensetzung kann einen Druckverformungsrest (ISO 815-1, 70 °C, 22 h oder 24 h) von höchstens 130 %, bevorzugt von höchstens 120 %, bevorzugter von höchstens 110 %, bevorzugter von höchstens 100 %, bevorzugter von höchstens 90 %, bevorzugter von höchstens 80 %, aufweisen.

Die Polymerzusammensetzung kann einen Druckverformungsrest (ISO 815-1, 70 °C, 22 h oder 24 h) zwischen 30 % und 130 %, bevorzugt zwischen 40 % und 120 %, bevorzugter zwischen 50 % und 110 %, bevorzugter zwischen 50 % und 110 %, bevorzugter zwischen 60 % und 110 %, bevorzugter zwischen 70 % und 110 %, bevorzugter zwischen 70 % und 100 %, aufweisen.

Die Schmelzflussrate (MVR, *melt volume-flow rate*) der Polymerzusammensetzung, bestimmt nach ISO 1133-1 bei 190 °C und 2,16 kg, kann in einem Bereich von 0,1 cm³/10 min und 100 cm³/10 min, bevorzugt in einem Bereich von 0,1 cm³/10 min und 80 cm³/10 min, bevorzugter in einem Bereich von 0,1 cm³/10 min und 40 cm³/10 min, bevorzugter in einem Bereich von 1 cm³/10 min und 20 cm³/10 min, bevorzugter in einem Bereich von 1 cm³/10 min und 10 cm³/10 min, bevorzugter in einem Bereich von 3 cm³/10 min und 8 cm³/10 min, oder in einem Bereich von 12 cm³/10 min und 22 cm³/10 min, liegen.

Die Polymerzusammensetzung kann einen statischen Reibungskoeffizienten, bestimmt nach ISO 8295 (2 kg, 500 mm min⁻¹) zwischen 0,05 und 0,50, bevorzugt zwischen 0,10 und 0,50, bevorzugter zwischen 0,15 und 0,50, bevorzugter zwischen 0,20 und 0,45, bevorzugter zwischen 0,20 und 0,40, aufweisen.

Die Polymerzusammensetzung kann einen dynamischen Reibungskoeffizienten, bestimmt nach ISO 8295 (2 kg, 500 mm min⁻¹) zwischen 0,05 und 0,50, bevorzugt zwischen 0,10 und 0,50, bevorzugter zwischen 0,15 und 0,50, bevorzugter zwischen 0,20 und 0,45, bevorzugter zwischen 0,20 und 0,40, aufweisen.

Die Polymerzusammensetzung kann eine Gesamtmigration, bestimmt nach DIN-EN 1186-14, insbesondere bestimmt nach dem Eintauchverfahren, beispielsweise in Iso-Octan oder Ethanol, von maximal 5,5 mg cm⁻² aufweisen. Bevorzugt beträgt die Gesamtmigration maximal 3,5 mg cm⁻², bevorzugter maximal 2,5 mg cm⁻², bevorzugter maximal 2,0 mg cm⁻², bevorzugter maximal 1,5 mg cm⁻², bevorzugter maximal 1,0 mg cm⁻², bevorzugter maximal 0,7 mg cm⁻², bevorzugter maximal 0,5 mg cm⁻².

Die Polymerzusammensetzung kann eine Sauerstoffdurchlässigkeitsrate, insbesondere bestimmt nach DIN 53380-5, von weniger als 3000 cm³ m⁻² d⁻¹ bar⁻¹, bevorzugt von weniger als 2700 cm³ m⁻² d⁻¹ bar⁻¹, bevorzugter von weniger als 2500 cm³ m⁻² d⁻¹ bar⁻¹, bevorzugter von weniger als 2300 cm³ m⁻² d⁻¹ bar⁻¹, bevorzugter von weniger als 2000 cm³ m⁻² d⁻¹ bar⁻¹, bevorzugter von weniger als 1700 cm³ m⁻² d⁻¹ bar⁻¹, bevorzugter von weniger als 1400 cm³ m⁻² d⁻¹ bar⁻¹, bevorzugter von weniger als 1100 cm³ m⁻² d⁻¹ bar⁻¹, bevorzugter von weniger als 800 cm³ m⁻² d⁻¹ bar⁻¹, bevorzugter von weniger als 700 cm³ m⁻² d⁻¹ bar⁻¹, bevorzugter von weniger als 600 cm³ m⁻² d⁻¹ bar⁻¹, bevorzugter von weniger als 500 cm³ m⁻² d⁻¹ bar⁻¹, bevorzugter von weniger als 400 cm³ m⁻² d⁻¹ bar⁻¹, bevorzugter von weniger als 300 cm³ m⁻² d⁻¹ bar⁻¹, bevorzugter von weniger als 200 cm³ m⁻² d⁻¹ bar⁻¹, bevorzugter von weniger als 150 cm³ m⁻² d⁻¹ bar⁻¹, aufweisen.

Der Gefäßverschluss kann einen Träger und das Dichtungselement umfassen. Der Träger kann einen flächigen Abschnitt und einen Schürzenabschnitt umfassen. Speziell kann der Träger Metall, Kunststoff oder Metall und Kunststoff umfassen. Insbesondere ist der Hauptbestandteil des Trägers Metall oder Kunststoff, insbesondere Metall.

Der Gefäßverschluss kann ein Schraubverschluss sein. Bevorzugt ist der Gefäßverschluss ein Nockendrehverschluss. Der Gefäßverschluss kann auch ein Press-on Twist-off-Gefäßverschluss oder ein Composite-Verschluss sein.

Ein offenbarter Gefäßverschluss kann ein Gefäß verschließen. Das Gefäß umfasst eine Gefäßmündung und eine verschließbare Öffnung am Ende der Gefäßmündung. Diese Öffnung kann einer der offenbarten Gefäßverschlüsse verschließen.

Das Gefäß kann ein Glasgefäß, Kunststoffgefäß oder Metallgefäß sein. Insbesondere ist das Gefäß ein Glasgefäß.

Der Gefäßverschluss, der die Öffnung des Gefäßes verschließt, kann einen Träger und das Dichtungselement umfassen. Der Träger kann eine untere Seite aufweisen und die Gefäßmündung ein oberes Ende aufweisen. Das Dichtungselement des Gefäßverschlusses ist typischerweise zwischen die Gefäßmündung und dem Träger des Gefäßverschlusses eingeklemmt, so dass das Dichtungselement sowohl am oberen Ende der Gefäßmündung als auch an der unteren Seite des Trägers anliegt. Speziell ist die Höhe des Dichtungselements zwischen dem oberen Ende der Gefäßmündung und der unteren Seite des Trägers maximal 1,0 mm. Bevorzugt ist diese Höhe maximal 0,8 mm und besonders bevorzugt maximal 0,7 mm. Die Höhe kann in axialer Richtung des Gefäßes bestimmt werden.

Analog dazu kann die Höhe des Dichtungselements zwischen dem oberen Ende der Gefäßmündung und der unteren Seite des Trägers mindestens 0,2 mm betragen. Speziell beträgt die Höhe mindestens 0,4 mm und besonders bevorzugt mindestens 0,5 mm. Die Messung der Höhe des Dichtungselements kann in axialer Richtung des Gefäßes erfolgen.

Besonders bevorzugt liegt die Höhe des Dichtungselements zwischen dem oberen Ende der Gefäßmündung und der unteren Seite des Trägers zwischen 0,3 mm und 0,9 mm.

Beträgt beispielsweise die Höhe des Dichtungselements vor dem Aufbringen des Gefäßverschlusses auf ein Gefäß 1,2 mm, sorgt ein Eindruck des oberen Endes der Gefäßmündung in das Dichtungselement (Höhe zwischen oberen Ende der Gefäßmündung und unterer Seite des Trägers von maximal 1,0 mm) ohne dass das Dichtungselement durchschnitten wird (Höhe des Dichtungselements zwischen oberen Ende der Gefäßmündung und unterer Seite des Trägers von mindestens 0,2 mm) für eine hohe Dichtigkeit des mit dem Gefäßverschlusses verschlossenen Gefäßes.

Bevorzugt herrscht in dem geschlossenen Gefäß ein Vakuum. Der absolute Druck in dem geschlossenen Gefäß kann maximal 200 hPa betragen. Speziell beträgt der absolute Druck in dem verschlossenen Gefäß maximal 100 hPa.

Das mit dem Gefäßverschluss verschlossene Gefäß kann ein Sicherheitsmaß von maximal 10 mm aufweisen, speziell ist das Sicherheitsmaß maximal 8 mm. Bevorzugt beträgt das Sicherheitsmaß maximal 6 mm. Am meisten bevorzugt beträgt das Sicherheitsmaß maximal 4 mm.

Zur Bestimmung des Sicherheitsmaßes wird ein mit einem Nockendrehverschluss verschlossenes Gefäß bei Raumtemperatur (23°C) für einen Zeitraum von 30 Minuten gelagert. Die relative Position des Gefäßverschlusses zu dem Gefäß wird durch Anbringen einer Markierung auf der Gefäßverschlussschürze und der Gefäßwand so markiert, dass die umfängliche Distanz zwischen der Markierung auf der Gefäßverschlussschürze und der Gefäßwand null ist. Die Markierungen liegen auf einer Geraden, die parallel zur Längsachse des Gefäßes ist. Anschließend wird der Gefäßverschluss vollständig von dem Gefäß durch Abschrauben entfernt. Nachfolgend wird der Gefäßverschluss auf das Gefäß aufgelegt und angedreht, bis ein leichter Widerstand spürbar ist. Der Gefäßverschluss wird also fingerfest angedreht. Anschließend wird die umfängliche Distanz zwischen der Markierung auf der Gefäßverschlussschürze und der Markierung auf der Gefäßwand gemessen. Die gemessene Distanz entspricht dem Sicherheitsmaß ausgedrückt in mm.

Durch die zumindest abschnittsweise starke Steigung der Gewindegänge von Gefäßen und Nockendrehverschlüssen, ist die Präzision der Messung des Sicherheitsmaßes hoch, da der Punkt, an dem ein leichter Widerstand während des Andrehens des Gefäßverschlusses spürbar ist (fingerfest), präzise bestimmbar ist. Typischerweise liegt die Präzision der Messung des Sicherheitsmaßes an verschlossenen Gefäßen, die unter gleichen Bedingungen verschlossen wurden, durch verschiedene Personen bei etwa ±1 mm.

Durch ein passendes Sicherheitsmaß wird sichergestellt, dass das Dichtungselement eine elastische Kraft auf zumindest das obere Ende der Gefäßmündung ausübt, wenn das Gefäß mit dem Gefäßverschluss verschlossen ist. Dadurch ergibt sich eine hohe Dichtigkeit des Innenraums des verschlossenen Gefäßes.

Die Öffnung des Gefäßes kann einen Durchmesser von mindestens 20 mm aufweisen. Insbesondere ist der Durchmesser der Öffnung des Gefäßes maximal 120 mm.

Das Gefäß kann ein Glasgefäß, Kunststoffgefäß oder Metallgefäß sein.

Der Gefäßverschluss kann, bevor die Öffnung des Gefäßes mit dem Gefäßverschluss verschlossen wird, bei einer Temperatur von mindestens 90 °C behandelt werden. Eine solche Behandlung kann beispielsweise mit Wasserdampf durchgeführt werden.

In dem Gefäß kann ein Kopfraum gebildet werden, nachdem das Gefäß mit dem Lebensmittel befüllt wurde. Der Kopfraum in dem Gefäß ist nach der Befüllung der Abschnitt des Gefäßinhalts, in dem kein Lebensmittel vorhanden ist. Dem Kopfraum kann Dampf zugeführt werden, bevor der Gefäßverschluss auf das Gefäß aufgebracht wird und damit die Öffnung des Gefäßes verschlossen wird. Insbesondere kann der Dampf Wasserdampf sein.

Der absolute Druck in dem verschlossenen und befüllten Gefäß kann maximal 200 hPa betragen. Speziell kann der Druck in dem verschlossenen und befüllten Gefäß maximal 100 hPa betragen.

Zur Bildung eines Eindrucks der Gefäßmündung in das Dichtungselement kann das Dichtungselement während des Verschließens der Öffnung des Gefäßes mit dem Gefäßverschluss und/oder einer thermischen Behandlung des verschlossenen und befüllten Gefäßes mindestens 0,2 mm in axialer Richtung des Gefäßes verformt werden. Bevorzugt beträgt diese Verformung des Dichtungselements mindestens 0,4 mm. Speziell beträgt die Verformung mindestens 0,5 mm.

Analog dazu kann das Dichtungselement zur Bildung eines Eindrucks der Gefäßmündung in das Dichtungselement während des Verschließens der Öffnung des Gefäßes mit dem Gefäßverschluss und/oder einer thermischen Behandlung des verschlossenen und befüllten Gefäßes um maximal 1,0 mm verformt werden. Insbesondere beträgt die Verformung maximal 0,8 mm. Bevorzugter beträgt die Verformung maximal 0,7 mm. Dies jeweils in axialer Richtung des Gefäßes.

Besonders bevorzugt beträgt die Verformung des Dichtungselements zwischen 0,3 mm und 0,9 mm.

Das Lebensmittel kann aseptisch in das Gefäß eingefüllt werden.

Das Lebensmittel kann auch mit einer Temperatur von maximal 10 °C in das Gefäß gefüllt werden.

Das Lebensmittel kann auch mit einer Temperatur zwischen 10 °C und 70 °C in das Gefäß gefüllt werden.

Ebenso kann das Lebensmittel mit einer Temperatur zwischen 70 °C und 98 °C in das Gefäß gefüllt werden.

Innerhalb des Verfahrens kann das verschlossene und befüllte Gefäß thermisch behandelt werden. Dabei liegt die Temperatur der thermischen Behandlung oberhalb der Temperatur des (festen und/oder flüssigen) Lebensmittels während der Befüllung des Gefäßes damit.

Die thermische Behandlung kann bei einer Temperatur von mindestens 60 °C erfolgen.

Auch kann die thermische Behandlung bei einer Temperatur von maximal 135°C erfolgen (zwischen 60 °C und 135 °C). Insbesondere erfolgt die thermische Behandlung bei einer Temperatur von bis zu 135 °C (zwischen 60 °C und 135 °C) bei einem absoluten Umgebungsdruck von maximal 4,0 bar, bevorzugt bei einem absoluten Umgebungsdruck zwischen 1,0 bar und 4,0 bar.

Bevorzugt ist der Druck in dem verschlossenen Gefäß während einer thermischen Behandlung geringer als der Druck außerhalb des verschlossenen Gefäßes.

Allgemein kann der Gefäßverschluss ein Gewicht von höchstens 5 kg, bevorzugt höchstens 2 kg, bevorzugter höchstens 1 kg, bevorzugter höchstens, 500 g, bevorzugter höchstens 200 g, bevorzugter höchstens 150 g, bevorzugter höchstens 100 g, bevorzugter höchstens 80 g, bevorzugter höchstens 60 g, bevorzugter höchstens 40 g, bevorzugter höchstens 20 g, aufweisen.

Das Dichtungselement kann ein Gewicht von höchstens 200 g, bevorzugt höchstens 100 g, bevorzugter 50 g, bevorzugter höchstens 40 g, bevorzugter höchstens 30 g, bevorzugter höchstens 20 g, bevorzugter höchstens 10 g, bevorzugter höchstens 5 g, bevorzugter höchstens 3 g, bevorzugter höchstens 2 g, bevorzugter höchstens 1 g, aufweisen.

Die Ausführungsformen der Offenbarung sind anhand von Beispielen dargestellt, jedoch nicht auf eine Weise, in der Beschränkungen aus den Figuren in die Patentansprüche übertragen oder hineingelesen werden. Gleiche Bezugszeichen in den Figuren geben gleiche Elemente an.
- Figur 1: zeigt eine Seitenansicht eines Nockendrehverschlusses 1 mit einem ringförmigen Dichtungselement 3, teilweise als Schnitt;
- Figur 2: zeigt eine Seitenansicht des Nockendrehverschlusses 1 mit dem Dichtungselement 3 auf einem Gefäß 5, teilweise als Schnitt;
- Figur 3: zeigt den Nockendrehverschluss 1 mit dem Dichtungselement 3 in einer Untersicht;
- Figur 4: zeigt eine isometrische Ansicht eines Composite-Verschlusses 61 (Combi-Twist);
- Figur 5: zeigt teilweise einen axialen Schnitt des Composite-Verschlusses 61 (Combi-Twist) von Figur 4;
- Figur 6: zeigt eine Seitenansicht eines Press-on Twist-off-Verschlusses 21 (PT-Verschluss) mit einem Dichtungselement 23, teilweise als Schnitt;
- Figur 7: zeigt eine Seitenansicht des PT-Verschlusses 21 mit dem Dichtungselement 23 auf einem Gefäß 25, teilweise als Schnitt;
- Figur 8: zeigt eine Draufsicht des PT-Verschlusses 21;
- Figur 9: zeigt eine Seitenansicht eines Composite-Verschlusses 41 (Band-Guard) mit einem Dichtungselement 43, teilweise als Schnitt;
- Figur 10: zeigt eine Seitenansicht des Composite-Verschlusses 41 (Band-Guard) mit dem Dichtungselement 43 auf einem Gefäß 45, teilweise als Schnitt;
- Figur 11: zeigt eine Draufsicht des Composite-Verschlusses 41 (Band-Guard);
- Figur 12: zeigt einen vergrößerten Ausschnitt des Nockendrehverschlusses von Figur 2.

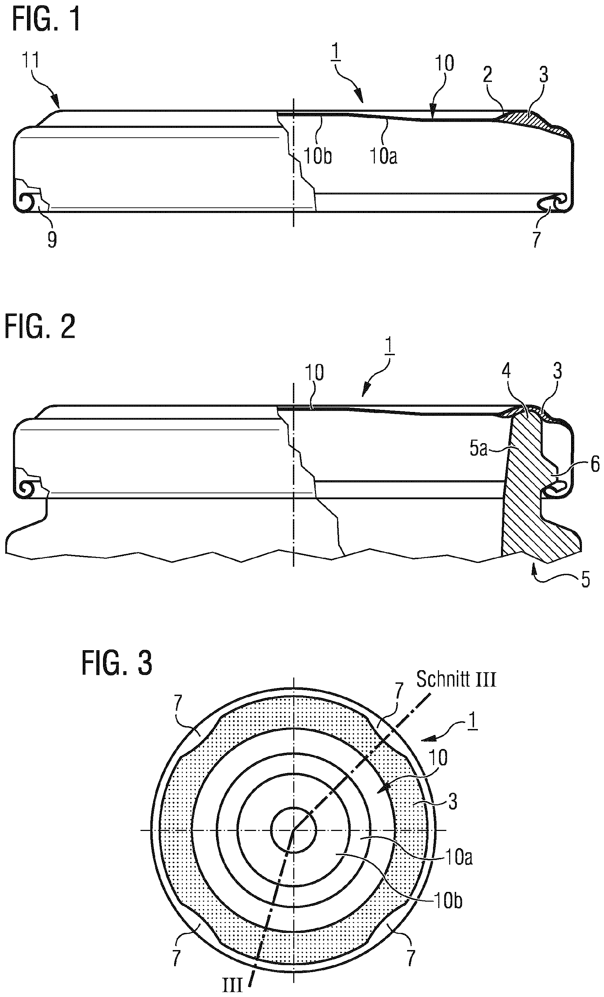

Die Figuren 1 und 3 zeigen einen Nockendrehverschluss 1. Der Nockendrehverschluss 1 kann einen metallischen Träger 11 umfassen und kann ein Dichtungselement 3 umfassen. In der Darstellung der Figur 2 ist der Nockendrehverschluss 1 auf ein Gefäß 5 aufgebracht. An dem unteren Ende des Nockendrehverschlusses 1 kann eine Einrollung 9 ausgebildet sein. Mehrere Nocken 7 können umfänglich verteilt aus der randseitigen Rollung, insbesondere Einrollung 9 ausgebildet sein. Nocken 7 können durch eine axiale Verformung der Einrollung 9 geformt sein und können sich radial weiter zur Mitte des Nockendrehverschlusses 1 erstrecken als die Einrollung 9. Der in den Figuren 1 bis 3 abgebildete Nockendrehverschluss 1 umfasst vier Nocken 7, die umfänglich gleichmäßig verteilt ausgebildet sein können. Die Schnitte, die in den Figuren 1 und 2 teilweise abgebildet sind, entsprechen dem Schnitt III-III in Figur 3.

Allgemein kann der Gefäßverschluss zumindest drei Nocken, bevorzugt zumindest vier Nocken, bevorzugter zumindest sechs Nocken, aufweisen. Der Gefäßverschluss kann drei bis sechs Nocken aufweisen.

Nahe dem radial äußeren Endabschnitt des Nockendrehverschlusses 1 kann ein Kanal 2 in dem oberen Abschnitt 10 des Trägers 11 ausgebildet sein. Das Dichtungselement 3 kann zumindest teilweise in dem Kanal 2 angeordnet sein. In dieser Ausführungsform ist das Dichtungselement 3 ringförmig ausgestaltet, in anderen Ausführungsformen kann das Dichtungselement 3 scheibenförmig ausgestaltet sein, dies insbesondere, wenn der Durchmesser des Nockendrehverschlusses klein (z.B. maximal 30 mm) ist.

Zur Haftvermittlung zwischen dem metallischen Träger 11 und dem Dichtungselement 3 kann ein Haftlack auf die Seite des metallischen Trägers 11 aufgebracht sein, die mit dem Dichtungselement 3 in Kontakt steht.

In Figur 2 ist der Nockendrehverschluss 1 auf ein Gefäß 5 aufgebracht. Das Gefäß 5 kann eine Gefäßmündung 5a als oberen Abschnitt des Gefäßes 5 umfassen. Die Gefäßmündung kann ein Gewinde 6 umfassen und kann ein oberes Ende 4 der Gefäßmündung 5a umfassen. Das Gewinde 6 kann umlaufend im Bereich der Gefäßmündung 5a ausgebildet sein und kann sich umlaufend aufwärts oder abwärts (in Abhängigkeit des Blickwinkels) erstrecken.

Zum Aufbringen des Nockendrehverschlusses 1 auf ein Gefäß 5 können Nocken 7 mit Abschnitten des Gewindes 6 in Kontakt gebracht werden und der Nockendrehverschluss 1 kann im Uhrzeigersinn relativ zum Gefäß 5 gedreht werden. Durch die Ausgestaltung des Gewindes 6 und die Interaktion der Nocken 7 mit dem Gewinde 6 kann sich das obere Ende 4 der Gefäßmündung 5a in Richtung des Dichtungselements 3 während der Drehbewegung des Nockendrehverschlusses 1 relativ zu dem Gefäß 5 bewegen. Durch eine weitere Drehbewegung des Nockendrehverschlusses 1 kann das obere Ende 4 der Gefäßmündung 5a in das Dichtungselement 3 eindrücken und kann dieses verformen, sodass ein Abschnitt des oberen Endes 4 der Gefäßmündung 5a von dem Dichtungselement 3 bedeckt sein kann, wodurch das Gefäß 5 dicht verschlossen sein kann. Ein dichter Verschluss des Gefäßes 5 ist insbesondere notwendig, um einem erhöhten Druck während einer thermischen Behandlung des verschlossenen Gefäßes 5 bei Temperaturen oberhalb von 70 °C, 90 °C oder sogar oberhalb von 120 °C Stand zu halten.

Der Nockendrehverschluss 1, wie in den Figuren 1 bis 3 abgebildet, kann ein Sicherheitselement, bevorzugt einen (flächigen) Safety Button 10b umfassen, der in dem oberen Abschnitt 10 des Trägers 11 ausgebildet ist. Der Button 10b ist optional. Aufgrund der Steigung 10a in dem oberen Abschnitt 10 des Trägers 11 kann der Button 10b in Richtung der Mitte des Gefäßes klappen, wenn ein ausreichend großer Unterdruck in dem Gefäß vorliegt. Ein solches Vakuum kann durch das Einbringen von Wasserdampf in das Gefäß vor dem Verschließen des Gefäßes mit dem Verschluss erzeugt werden.

Öffnet ein Verbraucher das Gefäß, indem der Gefäßverschluss entfernt wird, steigt der Druck in dem Gefäß auf Umgebungsdruck und der Button 10b klappt von der Mitte des Gefäßes weg. Das Umklappen des Buttons 10b wird von einem charakteristischen Geräusch begleitet, durch das ein Verbraucher erkennen kann, dass vor dem Öffnen des Gefäßes ein Vakuum in dem Gefäß geherrscht hat.

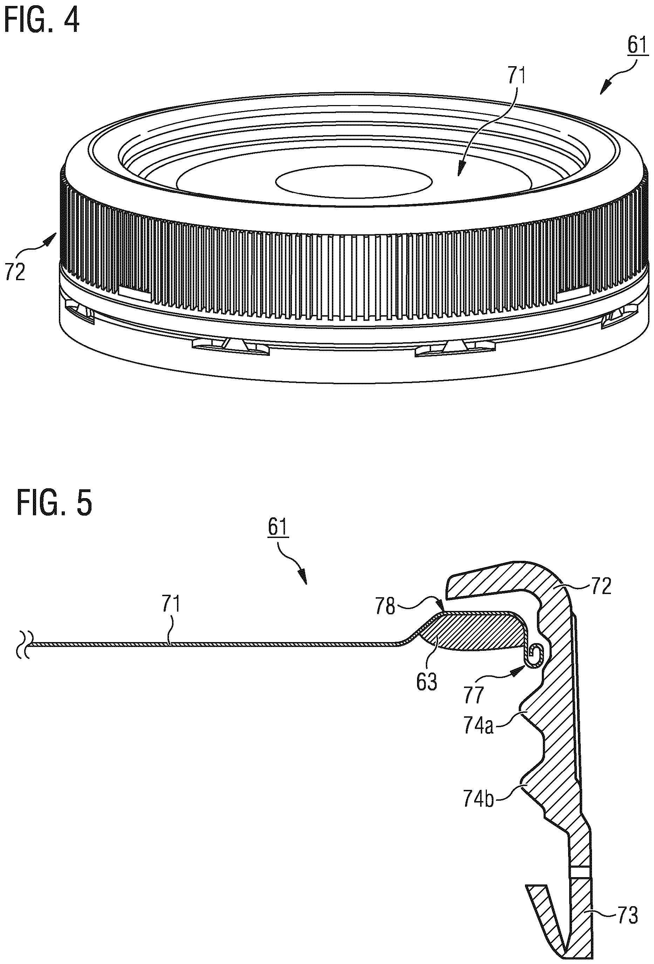

Die Figuren 4 und 5 zeigen einen Composite-Verschluss 61 (Combi-Twist), der analog zu dem beschriebenen Nockendrehverschluss 1 durch eine Drehbewegung auf ein Gefäß aufgebracht werden kann und durch eine Drehbewegung von dem Gefäß entfernt werden kann.

Der Composite-Verschluss 61 kann einen Träger mit einem oberen metallischen Abschnitt 71 umfassen und kann einen Kunststoff-Abschnitt 72, der L-förmig geformt ist, umfassen. Nahe dem radialen Ende des metallischen Abschnitts 71 des Trägers kann ein Kanal 78 geformt sein und eine Rollung 77 kann am radialen Ende des metallischen Abschnitts 71 ausgebildet sein. Ein Dichtungselement kann zumindest teilweise in dem Kanal 78 angeordnet sein.

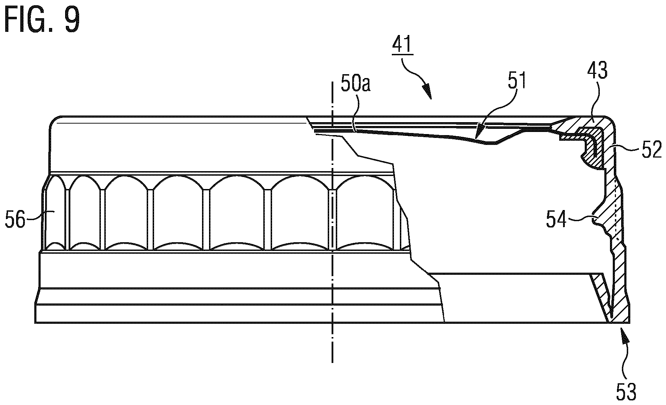

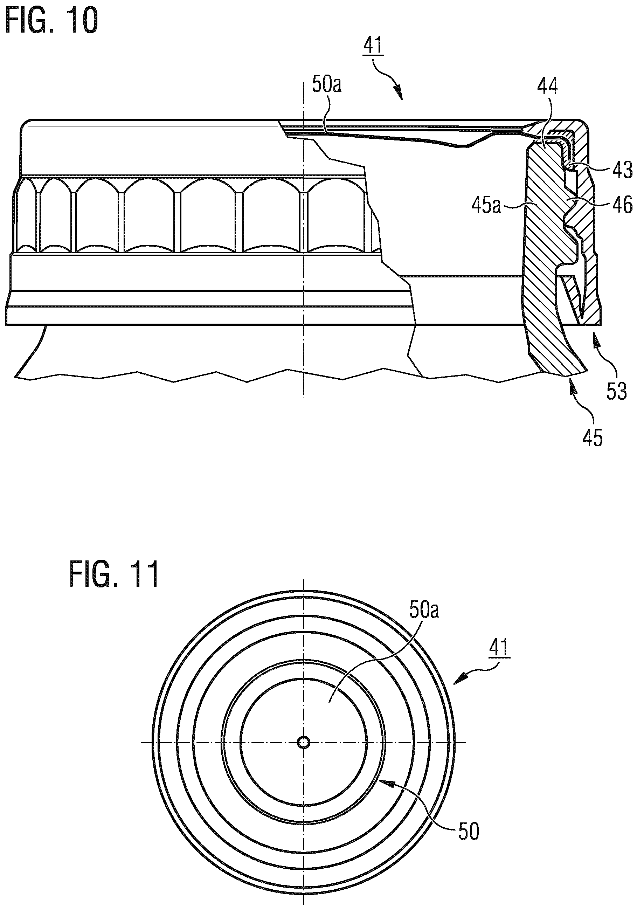

Mehrere, auf der Innenseite des Kunststoff-Abschnitts 72 gebildete Gewindeelemente 74a, 74b können mit einem Gegengewinde im Bereich der Mündung eines Gefäßes (nicht dargestellt), auf das der Composite-Verschluss 61 aufgebracht werden soll, kontaktieren oder darin eingreifen. Der Kunststoff-Abschnitt 72 des Composite-Verschlusses 61 kann eine Originalitätssicherung 73 umfassen, die ähnlich der Originalitätssicherung wie in den Figuren 9 bis 11 ausgestaltet ist und mit Blick auf die Figuren 9 bis 11 näher beschrieben wird.

Wird der Composite-Verschluss 61 auf ein Gefäß durch eine Drehbewegung aufgeschraubt, ergibt sich eine analoge Interaktion der Gefäßmündung des Gefäßes mit dem Dichtungselement des Composite-Verschlusses 61 wie anhand des Nockendrehverschlusses 1 beschrieben.

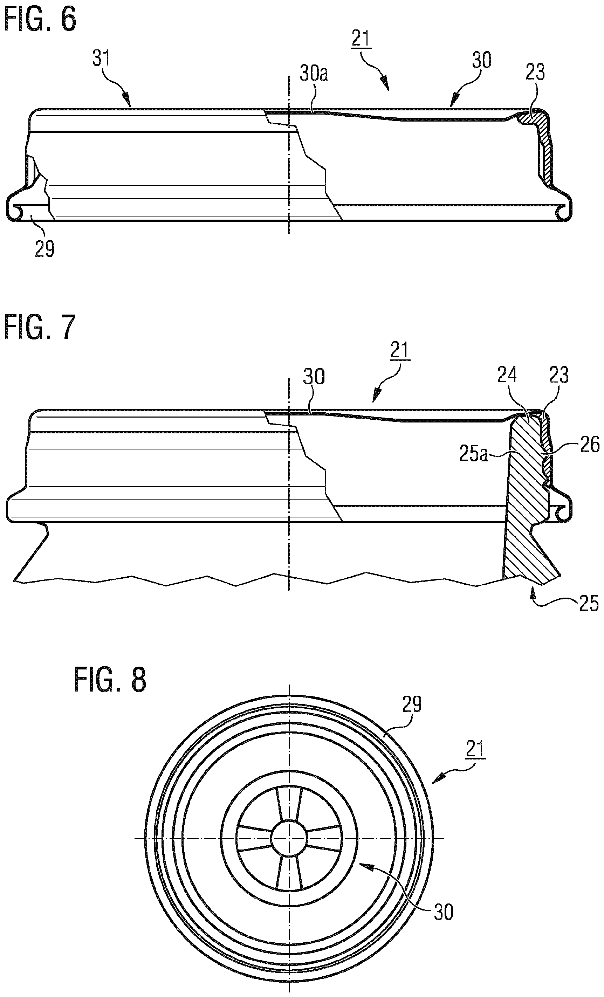

In den Figuren 6 bis 8 ist ein Press-on Twist-Off-Verschluss 21 (PT-Verschluss) abgebildet. Der PT-Verschluss 21 kann einen metallischen Träger 31 mit einer Einrollung 29 am unteren Ende des Trägers 31 umfassen. Der PT-Verschluss 21 kann einen Button 30a in dem oberen Abschnitt 30 des Trägers 31 umfassen. Der Button 30a ist optional.

Ein Dichtungselement 23 kann sowohl im Bereich des oberen Abschnitts 30 des Trägers 31 als auch in erheblichem Umfang (zumindest 10 %, zumindest 20 %, zumindest 30 %, zumindest 40 %, zumindest 50 % oder zumindest 60 % des Gesamtvolumens des Dichtungselements), auf der Schürze des Trägers, die sich ausgehend von dem oberen Abschnitt 30 des Trägers 31 nach unten erstreckt, ausgebildet sein. Der PT-Verschluss 21 kann im Gegensatz zu dem Nockendrehverschluss 1 und dem Composite-Verschluss 61 bei einem Aufbringen auf ein Gefäß 25, auf die Gefäßmündung 25a aufgepresst werden. Während des Aufpressens auf die Gefäßmündung 25a kann das Dichtungselement 23 ausreichend weich sein, um Gewindeelemente 26 der Gefäßmündung 25a elastisch zu umschließen. Typischerweise wird hierfür das Dichtungselement 23 vor dem Aufbringen des PT-Verschlusses 21 auf ein Gefäß 5 mit Wasserdampf behandelt, um die nötige Weichheit des Dichtungselements 23 zu verursachen. Nach Abkühlung des Dichtungselements 23 kann ein Gegengewinde in Form eines Negativs der Gewindeelemente 26 der Gefäßmündung in dem Dichtungselement 23 gebildet sein.

Ein oberes Ende 24 der Gefäßmündung 25a kann das Dichtungselement 23 kontaktieren.

Zum Öffnen des Gefäßes 25 kann der PT-Verschluss 21 durch eine Drehbewegung von dem Gefäß 25 entfernt werden.

Figuren 9 bis 11 zeigen einen Composite-Verschluss 41 (Band-Guard), der analog zu dem beschriebenen PT-Verschluss 21 funktionsfähig ist.

Der Composite-Verschluss 41 kann einen Träger mit einem metallischen Abschnitt 51 und einem Kunststoff-Abschnitt 52 umfassen. Der Composite-Verschluss 41 kann eine Originalitätssicherung 53 umfassen. Der Composite-Verschluss 41 kann einen optionalen Button 50a umfassen. Die Originalitätssicherung 53 kann so ausgestaltet sein, dass diese von dem übrigen Composite-Verschluss 41 entfernt werden kann, wenn der Composite-Verschluss 41 von einem Gefäß 45 entfernt wird, und kann der Überprüfbarkeit eines Verbrauchers dienen, ob der Composite-Verschluss 41 bereits von dem Gefäß 45 entfernt wurde. Der Button 50a kann analog zu dem Button 10b des Nockendrehverschlusses 1 ausgestaltet und funktionsfähig sein.

Der Kunststoff-Abschnitt des Composite-Verschluss 41 kann mehrere axial verlaufende Einbuchtungen 56 umfassen, um die Stabilität des Verschlusses zu erhöhen.

Ein Dichtungselement 43 kann so in dem Composite-Verschluss 41 angeordnet sein, dass dieses sowohl den metallischen Abschnitt 51 als auch den Kunststoff-Abschnitt 52 kontaktiert. Zum Verschließen eines Gefäßes 45 kann der Composite-Verschluss 41 auf die Gefäßmündung 45a des Gefäßes 45 aufgepresst werden, sodass zumindest das obere Ende 44 der Gefäßmündung 45a das Dichtungselement 43 kontaktieren kann.

Der Kunststoff-Abschnitt 52 des Trägers kann mehrere versetzte Vorsprünge 54 umfassen, die mit Gewindeelementen 46 der Gefäßmündung 45a interagieren können. Zum Öffnen eines Gefäßes 45, das mit dem Composite-Verschluss 41 verschlossen ist, kann der Composite-Verschluss 41 relativ zu dem Gefäß 45 verdreht werden.

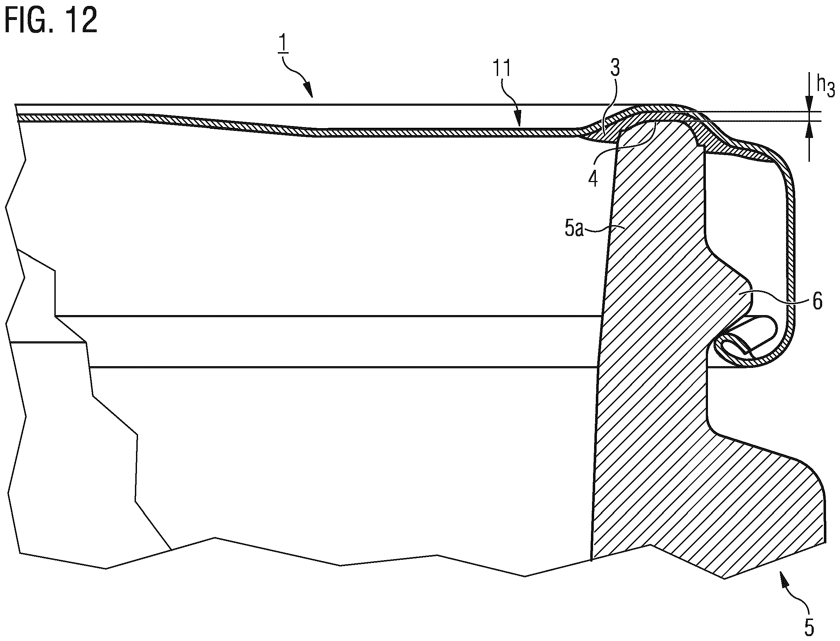

Der Abstand h₃ eines Dichtungselements 3 zwischen einem oberen Ende 4 einer Gefäßmündung 5a eines Gefäßes 5 und der unteren Seite eines Trägers 11 des Verschlusses 1 ist in Figur 12 mit Blick auf einen Nockendrehverschluss 1 dargestellt und hier beschrieben. Analog kann der Abstand (Höhe) h₃ für andere Verschluss-Typen zu bestimmen sein.

Das zwischen der Gefäßmündung 5 und dem Träger 11 des Gefäßverschlusses 1 eingeklemmte Dichtungselement 3 kann eine Höhe h₃ besitzen, die gegeben ist, wenn ein Gefäß 5 mit dem Verschluss 1 verschlossen ist. Ist die Höhe h₃ zu gering kann eine Durchschneidung des Dichtungselements 3 drohen oder erfolgen, wodurch die Dichtigkeit des verschlossenen Gefäßes 5 beeinträchtigt sein kann. Ist die Höhe h₃ zu groß, kann die Dichtigkeit des verschlossenen Gefäßes beeinträchtigt werden, da die Kontaktfläche zwischen dem oberen Ende 4 der Gefäßmündung 5a und dem Dichtungselement 3 nicht ausreichend groß ist. Um einen passenden Eindruck des oberen Endes 4 der Gefäßmündung 5a in das Dichtungselement zu erreichen, ist die Zusammensetzung des Dichtungselements 3 maßgebend.

### Erste Beispiele

Tabelle 1 zeigt Speichermoduln von verschiedenen Polymeren bei unterschiedlichen Temperaturen (4 °C, 20 °C, 40 °C, 70 °C, 100 °C und 130 °C). In den Tabellen 2 und 3 sind Polymerzusammensetzungen mit zugehörigen Speichermoduln bei unterschiedlichen Temperaturen (4 °C, 20 °C, 40 °C, 70 °C, 100 °C und 130 °C) gezeigt.

**Tabelle 1**

| | Speichermodul [MPa] | | | | | |
|---|---|---|---|---|---|---|
| Polymer | 4 °C | 20 °C | 40 °C | 70 °C | 100 °C | 130 °C |
| C3C2C4 I | 6,1 | 4,9 | 2,3 | 1,2 | 0,7 | 0,40 |
| C3C2C4 II | 9,2 | 7,0 | 3,1 | 1,5 | 0,8 | 0,08 |
| C3C2C4 III | 15,5 | 13,0 | 5,8 | 1,0 | 0,4 | 0,22 |
| C4C2 | 3,8 | 2,5 | 1,3 | 0,1 | <0,01 | <0,01 |
| C2 | 230 | 171 | 78 | 29 | 6 | 0,02 |
| C3 | 939 | 675 | 494 | 266 | 158 | 81 |
| C3C2 | 452 | 324 | 221 | 91 | 41 | 10 |

| | |
|---|---|
| C3C2C4 I | ist ein Propen-Ethen-1-Buten-Copolymer (Terpolymer) mit einer Shore A Härte von etwa 64 und einer Schmelztemperatur von etwa 160 °C. Das Propen-Ethen-1-Buten-Copolymer ist von Mitsui Chemicals erhältlich, beispielsweise aus der Tafmer-Serie. |
| C3C2C4II | ist ein Propen-Ethen-1-Buten-Copolymer (Terpolymer) mit einer Shore A Härte von etwa 70 und einer Schmelztemperatur von etwa 140 °C. Das Propen-Ethen-1-Buten-Copolymer ist von Mitsui Chemicals erhältlich, beispielsweise aus der Tafmer-Serie. |
| C3C2C4 III | ist ein Propen-Ethen-1-Buten-Copolymer (Terpolymer) mit einer Shore A Härte von etwa 76 und einer Schmelztemperatur von etwa 160 °C. Das Propen-Ethen-1-Buten-Copolymer ist von Mitsui Chemicals erhältlich, beispielsweise aus der Tafmer-Serie. |
| C4C2 | ist ein 1-Buten-Ethen-Copolymer mit einem 1-Buten-Anteil von mehr als 80 %. Die Dichte beträgt etwa 0,870 g cm⁻³. Die Shore A Härte beträgt etwa 60. Das 1-Buten-Ethen-Copolymer ist von LyondellBasell erhältlich, beispielsweise aus der Koattro-Serie. |
| C2 | ist ein Homo-Polyethen mit einer Shore D Härte von etwa 50 und einer Schmelztemperatur von etwa 114 °C. Das Homo-Polyethen ist u.a. von LyondellBasell erhältlich. |
| C3 | ist ein Homo-Polypropen mit einer Shore D Härte von etwa 70 und einer Dichte von etwa 0,900 g cm⁻³. |
| C3C2 | ist ein Propen-Ethen-Copolymer mit einer Shore D Härte von etwa 55 und einer Schmelztemperatur von etwa 142 °C. Das Propen-Ethen-Copolymer ist von Borealis erhältlich. |
| PAO | ist ein (Metallocen)Polyalphaolefin (alpha-Decen-Homopolymer) mit einer kinematischen Viskosität bei 100 °C von etwa 65 cSt. Das Polyalphaolefin ist nicht in Tabelle 1 enthalten, da ein Speichermodul nicht bestimmbar ist. |

**Tabelle 2**

| | Beispiel 1 | Beispiel 2 | Beispiel 3 | Beispiel 4 | Beispiel 5 |
|---|---|---|---|---|---|
| Komponente [Gew.-%] | | | | | |
| C3C2C4 I | | | 95,9 | 79,9 | 79,9 |
| C3C2C4 II | | | | | |
| C3C2C4 III | | | | | |
| C4C2 | 71,9 | 62,9 | | | |
| C2 | 19,2 | | | | 16,0 |
| C3 | 4,8 | 33,0 | | | |
| C3C2 | | | | 16,0 | |
| PAO | | | | | |
| Additive | 4,1 | 4,1 | 4,1 | 4,1 | 4,1 |

| Speichermodul [MPa] | | | | | |
|---|---|---|---|---|---|
| 4 °C | 22,5 | 51,9 | 5,3 | 13,6 | 9,8 |
| 20 °C | 15,6 | 38,4 | 4,2 | 9,7 | 7,3 |
| 40 °C | 2,2 | 18,6 | 2,6 | 5,9 | 3,7 |
| 70 °C | 1,0 | 9,4 | 1,3 | 2,9 | 1,7 |
| 100 °C | 0,5 | 5,9 | 0,7 | 1,6 | 0,8 |
| 130 °C | 0,1 | 3,7 | 0,4 | 0,9 | 0,3 |

**Tabelle 3**

| | Beispiel 6 | Beispiel 7 | Beispiel 8 |
|---|---|---|---|
| Komponente [Gew.-%] | | | |
| C3C2C4 I | | | 5 |
| C3C2C4 II | 90,9 | | |
| C3C2C4 III | | 95,9 | 87,9 |
| C4C2 | | | |
| C2 | | | |
| C3 | | | |
| C3C2 | | | 8,0 |
| PAO | 5,0 | | 10 |
| Additive | 4,1 | 4,1 | 4,1 |

| Speichermodul [MPa] | | | |
|---|---|---|---|
| 4 °C | 7,6 | 9,6 | 21,4 |
| 20 °C | 5,7 | 7,5 | 17,4 |
| 40 °C | 2,5 | 4,0 | 6,5 |
| 70 °C | 1,1 | 1,1 | 1,6 15 |
| 100 °C | 0,6 | 0,5 | 0,7 |
| 130 °C | 0,1 | 0,3 | 0,4 |

Zur Bestimmung des Speichermoduls wurde die jeweilige Probe als Granulat bereitgestellt und bei 200 °C wurden Pressplatten mit einer Geometrie von 120 mm x 120 mm x 2 mm hergestellt. Aus den Pressplatten wurden 10 mm breite Proben ausgestanzt. Als Prüfkörperlänge wurde 44 mm l₀ = 30 mm) genutzt.

Dynamisch-mechanische Analysen wurden auf Grundlage der ISO 6721-7 (insbesondere auf Grundlage der ISO 6721-7:2019-04) unter dynamischer Torsionsbeanspruchung durchgeführt. Für die Analysen kann das Prüfgerät MCR 501 (Anton Paar GmbH) verwendet werden. Die Analysen wurden mit einer Messfrequenz von 1 Hz, einer Auslenkung von 0,05 % im Temperaturbereich von -100°C bis 150 °C durchgeführt. Die Heizrate betrug 2 K/min.

Die Schmelztemperatur Tₘ kann durch eine zweite Aufheizkurve einer DSC-Messung bei einer Heizrate von 10 °C min⁻¹ bestimmt werden.

Die zweite Aufheizkurve wird kurz nach der ersten Aufheizkurve durchgeführt (beispielsweise wird die zweite Aufheizkurve innerhalb eines Tages oder innerhalb von 8 h oder 2 h nach der ersten Aufheizkurve durchgeführt). Durch die erste Aufheizkurve wird die thermische Historie ("*thermal history*") entfernt. Die zweite Aufheizkurve wird also so durchgeführt, dass die Probe keine wesentliche thermische Historie aufweist. Für die Messung wird eine Probe abgewogen (5-10 mg) und in einer Aluminiumschalen versiegelt. Die Probe wird auf 200 °C mit einer Temperaturrampe (Heizrate) von 10 °C/min erhitzt. Die Probe wird 5 min lang auf 200 °C gehalten, um ein vollständiges Schmelzen aller Kristallite zu ermöglichen und so die thermische Historie der Probe zu entfernen. Nach Abkühlung auf -20 °C mit einer Temperaturrampe von 10 °C/min kann die Peaktemperatur als Kristallisationstemperatur gemessen werden. Nachdem die Probe 5 min bei -20 °C gelagert wurde, wird sie zum zweiten Mal auf 200 °C mit einer Temperaturrampe von 10 °C/min erhitzt. Bei dieser zweiten Aufheizkurve wird die Peaktemperatur, sofern vorhanden, als Schmelztemperatur Tₘ ermittelt.

Alternativ oder zusätzlich mit den oben beschriebenen Vorgaben (zweite Aufheizkurve einer DSC-Messung bei einer Heizrate von 10 °C min⁻¹) kann die Schmelztemperatur Tₘ nach DIN EN ISO 11357-3 bestimmt werden.

Allgemein ist keine spezifische Komponente zwingend in der Polymerzusammensetzung vorhanden. Speziell ist ein vermehrtes Auftreten einer Komponente in den Beispielen kein Indiz dafür, dass diese Komponente zwingend in der Polymerzusammensetzung enthalten sein muss. Vielmehr können Komponenten aus den Zusammensetzungen der Beispiele weggelassen oder durch andere Komponente(n) ersetzt werden. Ebenso können Komponenten hinzugefügt werden.

Die Gewichtsanteile der Komponenten in den Zusammensetzungen und die Eigenschaften der Zusammensetzungen der Beispiele sind exemplarisch. Die Offenbarung ist nicht auf die Werte der Gewichtsanteile der Komponenten und/oder die Werte der Eigenschaften der Beispiele beschränkt.

Das oben beschriebene Buten-Copolymer kann das C3C2, das C2 oder das C3 (insbesondere das C3) in den Beispielen ersetzen. Passende Buten-Copolymere sind beispielsweise von LyondellBasell erhältlich.

Das oben beschriebene weitere Propen-Copolymer kann das C3C2, das C2 oder das C3 (insbesondere das C3) in den Beispielen ersetzen. Passende Propen-Copolymere sind u.a. von Mitsui Chemicals erhältlich, beispielsweise aus der Tafmer-Serie.

Das oben beschriebene Cycloolefin-Polymer kann das C3C2, das C2 oder das C3 (insbesondere das C2) in den Beispielen ersetzen. Passende Cycloolefin-Polymere sind beispielsweise von TOPAS Advanced Polymers erhältlich.

In dieser Anmeldung genannte Normen bzw. Standards zur Messung von (physikalischen) Eigenschaften können sich auf die jeweils am Prioritätstag oder Anmeldetag der Anmeldung gültige Fassung bzw. Version beziehen. Hierin genannte Normen, Standards bzw. Verfahren zur Messung von (physikalischen) Eigenschaften, die an einer Stelle für die (physikalische) Eigenschaft beschrieben sind, gelten auch für die (physikalischen) Eigenschaften, die an anderer Stelle ohne explizite Nennung einer Norm, eines Standards bzw. eines Verfahrens beschrieben ist.

Es hat sich herausgestellt, dass sich Polymerzusammensetzungen mit einem Speichermodul von zumindest 0,2 MPa (bestimmt wie oben beschrieben, ISO 6721-7) besonders gut für Dichtungselemente für Gefäßverschlüsse eignen.

Daher ist es bevorzugt, wenn die Polymerzusammensetzung bei 4 °C, bei 20 °C, bei 40 °C, bei 70 °C, bei 100 °C und/oder bei 130 °C einen Speichermodul von zumindest 0,2 MPa (bestimmt wie oben beschrieben, ISO 6721-7) aufweist.

Besonders bevorzugt weist die Polymerzusammensetzung bei 100 °C einen Speichermodul (bestimmt wie oben beschrieben, ISO 6721-7) von zumindest 0,4 MPa auf, wenn der Gefäßverschluss mit dem Dichtungselement, in dem die Polymerzusammensetzung eingesetzt wird, (thermisch) pasteurisiert wird bzw. werden soll.

Besonders bevorzugt weist die Polymerzusammensetzung bei 130 °C einen Speichermodul (bestimmt wie oben beschrieben, ISO 6721-7) von zumindest 0,4 MPa auf, wenn der Gefäßverschluss mit dem Dichtungselement, in dem die Polymerzusammensetzung eingesetzt wird, (thermisch) sterilisiert wird bzw. werden soll.

Nachfolgend sind Beispiele als Ausführungsformen dargestellt, wobei die vorangestellte Nummer die Nummer des Beispiels repräsentiert.
1. Gefäßverschluss (1, 21, 41, 61) mit einem Dichtungselement (3, 23, 43, 63), wobei das Dichtungselement (3, 23, 43, 63) eine Polymerzusammensetzung umfasst, wobei:
   (a) die Polymerzusammensetzung zumindest ein Polymer umfasst; und
   (b1) die Polymerzusammensetzung einen Speichermodul bei 20 °C, bestimmt nach ISO 6721-7, von zumindest 1,0 MPa aufweist,
      und/oder
   (b2) das zumindest eine Polymer einen Speichermodul bei 20 °C, bestimmt nach ISO 6721-7, von zumindest 0,1 MPa aufweist.
2. Gefäßverschluss nach Beispiel 1, wobei die Polymerzusammensetzung einen Speichermodul bei 20 °C, bestimmt nach ISO 6721-7, von zumindest 1,1 MPa, bevorzugt zumindest 2,0 MPa, bevorzugter zumindest 3,0 MPa, bevorzugter zumindest 4,0 MPa, bevorzugter zumindest 5,0 MPa, bevorzugter zumindest 7,0 MPa, bevorzugter zumindest 10,0 MPa, bevorzugter zumindest 20,0 MPa, aufweist.
3. Gefäßverschluss nach einem der vorhergehenden Beispiele, wobei die Polymerzusammensetzung einen Speichermodul bei 4 °C, bestimmt nach ISO 6721-7, von zumindest 2,0 MPa, bevorzugt zumindest 5,0 MPa, bevorzugter zumindest 7,0 MPa, bevorzugter zumindest 10,0 MPa, bevorzugter zumindest 15,0 MPa, bevorzugter zumindest 20,0 MPa, bevorzugter zumindest 30,0 MPa, aufweist.
4. Gefäßverschluss nach einem der vorhergehenden Beispiele, wobei die Polymerzusammensetzung einen Speichermodul bei 40 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 4,0 MPa, bevorzugter zumindest 6,0 MPa, bevorzugter zumindest 10,0 MPa, aufweist.
5. Gefäßverschluss nach einem der vorhergehenden Beispiele, wobei die Polymerzusammensetzung einen Speichermodul bei 70 °C, bestimmt nach ISO 6721-7, von zumindest 0,2 MPa, bevorzugt zumindest 0,3 MPa, bevorzugter zumindest 0,5 MPa, bevorzugter zumindest 0,7 MPa, bevorzugter zumindest 0,9 MPa, bevorzugter zumindest 1,2 MPa, bevorzugter zumindest 1,5 MPa, aufweist.
6. Gefäßverschluss nach einem der vorhergehenden Beispiele, wobei die Polymerzusammensetzung einen Speichermodul bei 100 °C, bestimmt nach ISO 6721-7, von zumindest 0,1 MPa, bevorzugt zumindest 0,2 MPa, bevorzugter zumindest 0,3 MPa, bevorzugter zumindest 0,4 MPa, bevorzugter zumindest 0,5 MPa, bevorzugter zumindest 0,6 MPa, bevorzugter zumindest 1,0 MPa, aufweist.
7. Gefäßverschluss nach einem der vorhergehenden Beispiele, wobei die Polymerzusammensetzung einen Speichermodul bei 130 °C, bestimmt nach ISO 6721-7, von zumindest 0,05 MPa, bevorzugt zumindest 0,07 MPa, bevorzugter zumindest 0,10 MPa, bevorzugter zumindest 0,15 MPa, bevorzugter zumindest 0,20 MPa, bevorzugter zumindest 0,25 MPa, bevorzugter zumindest 0,30 MPa, bevorzugter zumindest 0,35 MPa, bevorzugter zumindest 0,40 MPa, bevorzugter zumindest 0,50 MPa, aufweist.
8. Gefäßverschluss nach einem der vorhergehenden Beispiele, wobei das zumindest eine Polymer einen Speichermodul bei 4 °C, bestimmt nach ISO 6721-7, von zumindest 2,0 MPa, bevorzugt zumindest 3,0 MPa, bevorzugter zumindest 4,0 MPa, bevorzugter zumindest 5,0 MPa, bevorzugter zumindest 7,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 200,0 MPa, bevorzugter zumindest 500,0 MPa, bevorzugter zumindest 800,0 MPa, aufweist.
9. Gefäßverschluss nach einem der vorhergehenden Beispiele, wobei das zumindest eine Polymer einen Speichermodul bei 20 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 3,0 MPa, bevorzugter zumindest 5,0 MPa, bevorzugter zumindest 8,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 250,0 MPa, bevorzugter zumindest 500,0 MPa, aufweist.
10. Gefäßverschluss nach einem der vorhergehenden Beispiele, wobei das zumindest eine Polymer einen Speichermodul bei 40 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 3,0 MPa, bevorzugter zumindest 4,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 250,0 MPa, bevorzugter zumindest 400,0 MPa, aufweist.
11. Gefäßverschluss nach einem der vorhergehenden Beispiele, wobei das zumindest eine Polymer einen Speichermodul bei 70 °C, bestimmt nach ISO 6721-7, von zumindest 0,2 MPa, bevorzugt zumindest 0,3 MPa, bevorzugter zumindest 0,5 MPa, bevorzugter zumindest 0,7 MPa, bevorzugter zumindest 0,9 MPa, bevorzugter zumindest 1,2 MPa, bevorzugter zumindest 5,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 200,0 MPa, aufweist.
12. Gefäßverschluss nach einem der vorhergehenden Beispiele, wobei das zumindest eine Polymer einen Speichermodul bei 100 °C, bestimmt nach ISO 6721-7, von zumindest 0,1 MPa, bevorzugt zumindest 0,2 MPa, bevorzugter zumindest 0,3 MPa, bevorzugter zumindest 0,4 MPa, bevorzugter zumindest 0,5 MPa, bevorzugter zumindest 0,6 MPa, bevorzugter zumindest 1,0 MPa, bevorzugter zumindest 3,0 MPa, bevorzugter zumindest 5,0 MPa, bevorzugter zumindest 10,0 MPa, bevorzugter zumindest 50,0 MPa, bevorzugter zumindest 100,0 MPa, aufweist.
13. Gefäßverschluss nach einem der vorhergehenden Beispiele, wobei das zumindest eine Polymer einen Speichermodul bei 130 °C, bestimmt nach ISO 6721-7, von zumindest 0,05 MPa, bevorzugt zumindest 0,07 MPa, bevorzugter zumindest 0,10 MPa, bevorzugter zumindest 0,15 MPa, bevorzugter zumindest 0,20 MPa, bevorzugter zumindest 0,25 MPa, bevorzugter zumindest 0,30 MPa, bevorzugter zumindest 0,35 MPa, bevorzugter zumindest 0,40 MPa, bevorzugter zumindest 0,50 MPa, bevorzugter zumindest 1,0 MPa, bevorzugter zumindest 2,0 MPa, bevorzugter zumindest 5,0 MPa, bevorzugter zumindest 7,0 MPa, bevorzugter zumindest 50,0 MPa, aufweist.
14. Gefäßverschluss nach einem der vorhergehenden Beispiele, wobei die Polymerzusammensetzung ein Propen-Copolymer umfasst, insbesondere wobei das zumindest eine Polymer ein Propen-Copolymer ist.
15. Gefäßverschluss nach Beispiel 14, wobei die Shore A Härte des Propen-Copolymers, bestimmt nach DIN ISO 7619 bei einer Temperatur von 23 °C und einer Haltezeit von 15 s, in einem Bereich von 30 bis 95, insbesondere in einem Bereich von 50 bis 95, bevorzugt in einem Bereich von 60 bis 90, liegt.
16. Gefäßverschluss nach Beispiel 14 oder 15, wobei die Schmelztemperatur des Propen-Copolymers, bestimmt durch eine zweite Aufheizkurve einer DSC-Messung bei einer Heizrate von 10°C/min, in einem Bereich von 110 °C bis 200 °C liegt, bevorzugt in einem Bereich von 130 °C bis 200 °C, bevorzugter in einem Bereich von 130 °C bis 165 °C, bevorzugter in einem Bereich von 130 °C bis 180 °C, liegt.
17. Gefäßverschluss nach einem der Beispiele 14 bis 16, wobei die Schmelzflussrate (MFR) des Propen-Copolymers, bestimmt nach ASTM D1238 bei 230 °C und 2,16 kg, in einem Bereich von 0,1 g/10 min und 100 g/10 min, bevorzugt in einem Bereich von 1 g/10 min und 80 g/10 min, bevorzugter in einem Bereich von 1 g/10 min und 60 g/10 min, bevorzugter in einem Bereich von 2 g/10 min und 50 g/10 min, bevorzugter in einem Bereich von 4 g/10 min und 40 g/10 min, liegt.
18. Gefäßverschluss nach einem der Beispiele 14 bis 17, wobei der Comonomeranteil von Propen in dem Propen-Copolymer zumindest 40 mol-%, bevorzugt zumindest 50 mol-%, bevorzugter zumindest 60 mol-%, bevorzugter zumindest 70 mol-%, bevorzugter zumindest 80 mol-%, beträgt.
19. Gefäßverschluss nach einem der Beispiele 14 bis 18, wobei das Propen-Copolymer zumindest ein zweites Comonomer umfasst, wobei das zweite Comonomer ein C4 bis C16 (alpha-)Olefin, bevorzugt ein C4 bis C12 (alpha-)Olefin, bevorzugter ein C4 bis C8 (alpha-)Olefin, bevorzugter 1-Buten, ist.
20. Gefäßverschluss nach Beispiel 19, wobei der Comonomeranteil des zweiten Comonomers in dem Propen-Copolymer höchstens 20 mol-%, bevorzugt höchstens 15 mol-%, bevorzugter höchstens 10 mol-%, bevorzugter höchstens 7 mol-%, beträgt.
21. Gefäßverschluss nach einem der Beispiele 14 bis 20, wobei das Propen-Copolymer ein drittes Comonomer umfasst, wobei das dritte Comonomer Ethen ist.
22. Gefäßverschluss nach Beispiel 21, wobei der Comonomeranteil des dritten Comonomers in dem Propen-Copolymer höchstens 40 mol-%, bevorzugt höchstens 30 mol-%, bevorzugter höchstens 20 mol-%, bevorzugter höchstens 15 mol-%, beträgt.
23. Gefäßverschluss nach einem der Beispiele 14 bis 22, wobei das Propen-Copolymer zumindest ein zweites und ein drittes Comonomer umfasst, wobei das zweite und das dritte Comonomer unterschiedliche Monomere sind, die ausgewählt sind aus C2, oder C4 bis C16 (alpha-)Olefin, bevorzugt aus C2, oder C4 bis C12 (alpha-)Olefin, bevorzugter aus C2, oder C4 bis C8 (alpha-)Olefin, bevorzugter aus C2, oder C4 bis C6 (alpha-)Olefin, bevorzugter ist das zweite Comonomer 1-Buten und das dritte Comonomer ist Ethen.
24. Gefäßverschluss nach einem der Beispiele 14 bis 23, wobei das Propen-Copolymer ein Terpolymer ist.
25. Gefäßverschluss nach einem der Beispiele 14 bis 24, wobei das Propen-Copolymer isotaktische Polypropenabschnitte aufweist.
26. Gefäßverschluss nach einem der Beispiele 14 bis 25, wobei das Propen-Copolymer ein random-Copolymer ist.
27. Gefäßverschluss nach einem der Beispiele 14 bis 26, wobei das Propen-Copolymer zu zumindest 5 Gew.-%, bevorzugt zu zumindest 10 Gew.-%, bevorzugt zu zumindest 20 Gew.-%, bevorzugter zu zumindest 30 Gew.-%, bevorzugter zu zumindest 40 Gew.-%, bevorzugter zu zumindest 50 Gew.-%, bevorzugter zu zumindest 60 Gew.-%, bevorzugter zu zumindest 70 Gew.-%, bevorzugter zu zumindest 80 Gew.-%, bevorzugter zu zumindest 90 Gew.-%, bevorzugter zu zumindest 91 Gew.-%, bevorzugter zu zumindest 92 Gew.-%, in der Polymerzusammensetzung enthalten ist.
28. Gefäßverschluss nach einem der Beispiele 14 bis 27, wobei das Propen-Copolymer die einzige polymere Komponente in der Polymerzusammensetzung ist.
29. Gefäßverschluss nach einem der vorhergehenden Beispiele, wobei die Polymerzusammensetzung ein random oder Block Copolymer umfasst, insbesondere wobei das zumindest eine Polymer ein random oder Block Copolymer ist oder wobei das random oder Block Copolymer zusätzlich zu dem Propen-Copolymer in der Polymerzusammensetzung enthalten ist.
30. Gefäßverschluss nach Beispiel 29, wobei Ethen und zumindest ein C3 bis C16(alpha-) Olefin Comonomere des random oder Block Copolymers sind, bevorzugter wobei Ethen und zumindest ein C3 bis C8 (alpha-)Olefin Comonomere des random oder Block Copolymers sind.
31. Gefäßverschluss nach Beispiel 30, wobei Ethen als Comonomer des random oder Block Copolymers einen Comonomeranteil von mehr als 50 mol-%, bevorzugt von mehr als 60 mol-%, bevorzugter von mehr als 70 mol-%, aufweist.
32. Gefäßverschluss nach einem der Beispiele 30 oder 31, wobei Ethen und ein C3 bis C16(alpha-) Olefin, bevorzugt Ethen und ein C3 bis C8(alpha-)Olefin, Comonomere des random oder Block Copolymers sind, am meisten bevorzugt das Copolymer ein Ethen-1-Octen-Blockcopolymer oder ein random Ethen-1-Octen-Copolymer ist.
33. Gefäßverschluss nach Beispiel 29, wobei Ethen als Comonomer des random oder Block Copolymers einen Comonomeranteil von weniger als 50 mol-%, bevorzugt von weniger als 40 mol-%, bevorzugter von weniger als 30 mol-%, bevorzugter von weniger als 20 mol-%, aufweist.
34. Gefäßverschluss nach Beispiel 33, wobei ein C3 bis C16(alpha-)Olefin und Ethen, bevorzugt ein C3 bis C8(alpha-)Olefin und Ethen, Comonomere des random oder Block Copolymers sind, am meisten bevorzugt das random oder Block Copolymer ein (random) 1-Buten-Ethen-Copolymer oder ein (random) Propen-Ethen-Copolymer ist.
35. Gefäßverschluss nach einem der Beispiele 29 bis 34, wobei das random oder Block Copolymer zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, in der Polymerzusammensetzung enthalten ist.
36. Gefäßverschluss nach einem der Beispiele 29 bis 35, wobei das random oder Block Copolymer zu höchsten 90 Gew.-%, bevorzugt zu höchsten 85 Gew.-%, bevorzugter zu höchsten 80 Gew.-%, bevorzugter zu höchsten 75 Gew.-%, bevorzugter zu höchsten 70 Gew.-%, bevorzugter zu höchsten 65 Gew.-%, bevorzugter zu höchsten 60 Gew.-%, bevorzugter zu höchsten 55 Gew.-%, bevorzugter zu höchsten 50 Gew.-%, bevorzugter zu höchsten 45 Gew.-%, bevorzugter zu höchsten 40 Gew.-%, bevorzugter zu höchsten 35 Gew.-%, bevorzugter zu höchsten 30 Gew.-%, bevorzugter zu höchsten 25 Gew.-%, bevorzugter zu höchsten 20 Gew.-%, bevorzugter zu höchsten 15 Gew.-%, bevorzugter zu höchsten 10 Gew.-%, in der Polymerzusammensetzung enthalten ist.
37. Gefäßverschluss nach einem der vorhergehenden Beispiele, wobei die Polymerzusammensetzung ein Homopolymer umfasst, insbesondere wobei das zumindest eine Polymer ein Homopolymer ist oder wobei das Homopolymer zusätzlich zu dem Propen-Copolymer und/oder dem random oder Block Copolymer in der Polymerzusammensetzung enthalten ist.
38. Gefäßverschluss nach Beispiel 37, wobei das Homopolymer ein C2 bis C4 Homopolymer ist.
39. Gefäßverschluss nach Beispiel 37 oder 38, wobei das Homopolymer ein Ethen-Homopolymer, insbesondere LDPE oder HDPE, ist.
40. Gefäßverschluss nach Beispiel 37 oder 38, wobei das Homopolymer ein Propen-Homopolymer ist.
41. Gefäßverschluss nach einem der Beispiele 37 bis 40, wobei das Homopolymer zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, in der Polymerzusammensetzung enthalten ist.
42. Gefäßverschluss nach einem der Beispiele 37 bis 41, wobei das Homopolymer zu höchsten 90 Gew.-%, bevorzugt zu höchsten 85 Gew.-%, bevorzugter zu höchsten 80 Gew.-%, bevorzugter zu höchsten 75 Gew.-%, bevorzugter zu höchsten 70 Gew.-%, bevorzugter zu höchsten 65 Gew.-%, bevorzugter zu höchsten 60 Gew.-%, bevorzugter zu höchsten 55 Gew.-%, bevorzugter zu höchsten 50 Gew.-%, bevorzugter zu höchsten 45 Gew.-%, bevorzugter zu höchsten 40 Gew.-%, bevorzugter zu höchsten 35 Gew.-%, bevorzugter zu höchsten 30 Gew.-%, bevorzugter zu höchsten 25 Gew.-%, bevorzugter zu höchsten 20 Gew.-%, bevorzugter zu höchsten 15 Gew.-%, bevorzugter zu höchsten 10 Gew.-%, in der Polymerzusammensetzung enthalten ist.
43. Gefäßverschluss nach einem der vorhergehenden Beispiele, wobei die Polymerzusammensetzung bis zu 60 Gew.-%, bevorzugt bis zu 45 Gew.-%, bevorzugter bis zu 30 Gew.-%, bevorzugter bis zu 20 Gew.-%, einer bei 20 °C und 1 bar flüssigen Komponente enthält, insbesondere wobei die flüssige Komponente zu zumindest 1 Gew.-% oder zu zumindest 5 Gew.-% in der Polymerzusammensetzung enthalten ist.
44. Gefäßverschluss nach Beispiel 43, wobei die flüssige Komponente ein Polyalphaolefin mit einer kinematischen Viskosität, bestimmt nach ASTM D445 / ISO 3104, von zumindest 4 cSt, bei einer Temperatur von 100 °C, und/oder mit einem Tropfpunkt, bestimmt nach ASTM 5950, von höchstens -10 °C, enthält oder ist.
45. Gefäßverschluss nach Beispiel 44, wobei das Polyalphaolefin eine kinematische Viskosität bei einer Temperatur von 100 °C, bestimmt nach ASTM D445 / ISO 3104, zwischen 4 cSt und 1500 cSt aufweist, bevorzugt zwischen 50 cSt und 1000 cSt, mehr bevorzugt zwischen 120 cSt und 1000 cSt, noch bevorzugter zwischen 250 cSt und 1000 cSt.
46. Gefäßverschluss nach einem der Beispiele 44 oder 45, wobei das Polyalphaolefin einen Tropfpunkt, bestimmt nach ASTM 5950, von höchstens -20°C aufweist, bevorzugt von höchsten -30 °C.
47. Gefäßverschluss nach einem der Beispiele 44 bis 46, wobei das Polyalphaolefin eine Dichte, bestimmt nach ASTM D4052, von bis zu 0,860 g cm⁻³ aufweist, insbesondere zwischen 0,825 g cm⁻³ und 0,855 g cm⁻³.
48. Gefäßverschluss nach einem der Beispiele 44 bis 47, wobei das Polyalphaolefin ein mittleres Molekulargewicht Mw, bestimmt nach DIN 55672-1, von mindestens 440 Da, aufweist bevorzugt zwischen 440 Da und 12000 Da, besonders bevorzugt zwischen 1000 Da und 10000 Da, noch mehr bevorzugt zwischen 3000 Da und 10000 Da.
49. Gefäßverschluss nach einem der Beispiele 44 bis 48, wobei das Polyalphaolefin ein Metallocen-Polyalphaolefin ist, insbesondere das Polyalphaolefin unter Anwendung eines Metallocen-Katalysators hergestellt wurde.
50. Gefäßverschluss nach einem der Beispiele 44 bis 49, wobei das Polyalphaolefin ein Homopolymer oder ein Copolymer ist, insbesondere das Polyalphaolefin ein C3 bis C22 alpha-Olefin als (Co)Monomer umfasst.
51. Gefäßverschluss nach einem der Beispiele 44 bis 50, wobei das Polyalphaolefin ein C6 bis C14 alpha-Olefin, bevorzugt ein C8 bis C10 alpha-Olefin, als (Co)Monomer umfasst.
52. Gefäßverschluss nach einem der Beispiele 44 bis 51, wobei das Polyalphaolefin ein Decen-Homopolymer, insbesondere ein 1-Decen-Homopolymer ist.
53. Gefäßverschluss nach einem der Beispiele 1 bis 42, wobei die Polymerzusammensetzung weniger als 10 Gew.-%, bevorzugt weniger als 5 Gew.-%, bevorzugter weniger als 2 Gew.-%, einer bei 20 °C und 1 bar flüssigen Komponente enthält, am meisten bevorzugt die Polymerzusammensetzung frei von einer Komponente ist, die bei 20 °C und 1 bar flüssig ist.
54. Gefäßverschluss nach einem der vorhergehenden Beispiele, wobei die Polymerzusammensetzung zumindest ein erstes und ein zweites Polymer umfasst.
55. Gefäßverschluss nach Beispiel 54, wobei der Speichermodul des ersten Polymers höchstens 0,8, bevorzugt höchstens 0,7, bevorzugter höchstens 0,6, bevorzugter höchstens 0,5, bevorzugter höchstens 0,4, bevorzugter höchstens 0,3, bevorzugter höchstens 0,2, bevorzugter höchstens 0,1, des Speichermoduls des zweiten Polymers beträgt (wobei die Speichermoduln des ersten Polymers und des zweiten Polymers nach ISO 6721-7 unter gleichen Bedingungen bestimmt wurden).
56. Gefäßverschluss nach Beispiel 54 oder 55, wobei der Speichermodul des ersten Polymers bei 4 °C, bestimmt nach ISO 6721-7, zwischen 1 MPa und 50 MPa, bevorzugt zwischen 1 MPa und 40 MPa, bevorzugter zwischen 1 MPa und 30 MPa, bevorzugter zwischen 1 MPa und 20 MPa, beträgt.
57. Gefäßverschluss nach einem der Beispiele 54 bis 56, wobei der Speichermodul des zweiten Polymers bei 4 °C, bestimmt nach ISO 6721-7, zwischen 50 MPa und 2000 MPa, bevorzugt zwischen 55 MPa und 1500 MPa, bevorzugter zwischen 75 MPa und 1500 MPa, bevorzugter zwischen 100 MPa und 1000 MPa, beträgt.
58. Gefäßverschluss nach einem der Beispiele 54 bis 57, wobei der Speichermodul des ersten Polymers bei 20 °C, bestimmt nach ISO 6721-7, zwischen 1 MPa und 50 MPa, bevorzugt zwischen 1 MPa und 40 MPa, bevorzugter zwischen 1 MPa und 30 MPa, bevorzugter zwischen 1 MPa und 20 MPa, beträgt.
59. Gefäßverschluss nach einem der Beispiele 54 bis 58, wobei der Speichermodul des zweiten Polymers bei 20 °C, bestimmt nach ISO 6721-7, zwischen 50 MPa und 1500 MPa, bevorzugt zwischen 55 MPa und 1300 MPa, bevorzugter zwischen 75 MPa und 1000 MPa, bevorzugter zwischen 100 MPa und 750 MPa, beträgt.
60. Gefäßverschluss nach einem der Beispiele 54 bis 59, wobei der Speichermodul des ersten Polymers bei 40 °C, bestimmt nach ISO 6721-7, zwischen 0,5 MPa und 25 MPa, bevorzugt zwischen 0,5 MPa und 20 MPa, bevorzugter zwischen 1 MPa und 20 MPa, bevorzugter zwischen 1 MPa und 10 MPa, beträgt.
61. Gefäßverschluss nach einem der Beispiele 54 bis 60, wobei der Speichermodul des zweiten Polymers bei 40 °C, bestimmt nach ISO 6721-7, zwischen 10 MPa und 1500 MPa, bevorzugt zwischen 30 MPa und 1300 MPa, bevorzugter zwischen 30 MPa und 800 MPa, bevorzugter zwischen 50 MPa und 750 MPa, beträgt.
62. Gefäßverschluss nach einem der Beispiele 54 bis 61, wobei der Speichermodul des ersten Polymers bei 70 °C, bestimmt nach ISO 6721-7, zwischen 0,1 MPa und 10 MPa, bevorzugt zwischen 0,3 MPa und 7 MPa, bevorzugter zwischen 0,5 MPa und 5 MPa, bevorzugter zwischen 0,7 MPa und 3 MPa, beträgt.
63. Gefäßverschluss nach einem der Beispiele 54 bis 62, wobei der Speichermodul des zweiten Polymers bei 70 °C, bestimmt nach ISO 6721-7, zwischen 10 MPa und 1000 MPa, bevorzugt zwischen 10 MPa und 800 MPa, bevorzugter zwischen 15 MPa und 600 MPa, bevorzugter zwischen 20 MPa und 400 MPa, beträgt.
64. Gefäßverschluss nach einem der Beispiele 54 bis 63, wobei der Speichermodul des ersten Polymers bei 100 °C, bestimmt nach ISO 6721-7, zwischen 0,1 MPa und 5 MPa, bevorzugt zwischen 0,1 MPa und 3 MPa, bevorzugter zwischen 0,1 MPa und 3 MPa, bevorzugter zwischen 0,1 MPa und 1 MPa, beträgt.
65. Gefäßverschluss nach einem der Beispiele 54 bis 64, wobei der Speichermodul des zweiten Polymers bei 100 °C, bestimmt nach ISO 6721-7, zwischen 1 MPa und 500 MPa, bevorzugt zwischen 1 MPa und 400 MPa, bevorzugter zwischen 2 MPa und 300 MPa, bevorzugter zwischen 5 MPa und 200 MPa, beträgt.
66. Gefäßverschluss nach einem der Beispiele 54 bis 65, wobei der Speichermodul des ersten Polymers bei 130 °C, bestimmt nach ISO 6721-7, zwischen 0,05 MPa und 1 MPa, bevorzugt zwischen 0,07 MPa und 1 MPa, bevorzugter zwischen 0,1 MPa und 1 MPa, bevorzugter zwischen 0,15 MPa und 0,8 MPa, beträgt.
67. Gefäßverschluss nach einem der Beispiele 54 bis 66, wobei der Speichermodul des zweiten Polymers bei 130 °C, bestimmt nach ISO 6721-7, zwischen 1 MPa und 200 MPa, bevorzugt zwischen 1 MPa und 150 MPa, bevorzugter zwischen 1 MPa und 100 MPa, bevorzugter zwischen 1 MPa und 90 MPa, beträgt.
68. Gefäßverschluss nach einem der vorhergehenden Beispiele, wobei die Polymerzusammensetzung bis zu 15 Gew.-%, bevorzugt bis zu 8 Gew.-%, besonders bevorzugt bis zu 6 Gew.-%, am meisten bevorzugt bis zu 5 Gew.-%, Additive umfasst.
69. Gefäßverschluss nach dem vorhergehenden Beispiel, wobei die Additive ausgewählt sind aus der Gruppe bestehend aus: Pigmente, Nukleierungsmittel, Aufheller, Stabilisatoren, Tenside, Gleitmittel, Antioxidantien und Kombinationen davon.
70. Gefäßverschluss nach einem der vorhergehenden Beispiele, wobei die Polymerzusammensetzung eine Shore A Härte, bestimmt nach DIN ISO 7619 bei einer Temperatur von 23 °C und einer Haltezeit von 15 s, von zumindest 40, bevorzugt zumindest 50, bevorzugter zumindest 60, bevorzugter zumindest 70, bevorzugter zumindest 80, aufweist.
71. Gefäßverschluss nach einem der vorhergehenden Beispiele, wobei die Polymerzusammensetzung einen Druckverformungsrest, bestimmt nach ASTM D 395, 70 °C, 22 h, von zumindest 50 %, bevorzugt von zumindest 60 %, bevorzugter von zumindest 70 %, bevorzugter von zumindest 80 %, bevorzugter von zumindest 90 %, aufweist.
72. Gefäßverschluss nach einem der vorhergehenden Beispiele, wobei die Polymerzusammensetzung eine Gesamtmigration, bestimmt nach DIN-EN 1186-14, von maximal 5,5 mg cm⁻², bevorzugt von maximal 3,5 mg cm⁻², bevorzugter von maximal 2,5 mg cm⁻², bevorzugter von maximal 1,5 mg cm⁻², bevorzugter von maximal 1,0 mg cm⁻², bevorzugter von maximal 0,7 mg cm⁻², aufweist.
73. Gefäßverschluss nach einem der vorhergehenden Beispiele, wobei die Polymerzusammensetzung eine Sauerstoffdurchlässigkeitsrate von weniger als 3000 cm³ m⁻² d⁻¹ bar⁻¹, bevorzugt von weniger als 2500 cm³ m⁻² d⁻¹ bar⁻¹, bevorzugter von weniger als 2000 cm³ m⁻² d⁻¹ bar⁻¹, bevorzugter von weniger als 1700 cm³ m⁻² d⁻¹ bar⁻¹, bevorzugter von weniger als 1400 cm³ m⁻² d⁻¹ bar⁻¹, bevorzugter von weniger als 1100 cm³ m⁻² d⁻¹ bar⁻¹, bevorzugter von weniger als 800 cm³ m⁻² d⁻¹ bar⁻¹, bevorzugter von weniger als 700 cm³ m⁻² d⁻¹ bar⁻¹, bevorzugter von weniger als 600 cm³ m⁻² d⁻¹ bar⁻¹, bevorzugter von weniger als 500 cm³ m⁻² d⁻¹ bar⁻¹, bevorzugter von weniger als 400 cm³ m⁻² d⁻¹ bar⁻¹, bevorzugter von weniger als 300 cm³ m⁻² d⁻¹ bar⁻¹, aufweist.
74. Gefäßverschluss nach einem der vorhergehenden Beispiele, wobei die Polymerzusammensetzung kein Homo-Polypropen umfasst.
75. Gefäßverschluss nach einem der vorhergehenden Beispiele, wobei die Polymerzusammensetzung kein SEBS umfasst.
76. Gefäßverschluss nach einem der vorhergehenden Beispiele, wobei der Gefäßverschluss einen Träger (11, 31, 51, 71) und das Dichtungselement (3, 23, 43, 63) umfasst, wobei der Träger (11, 31, 51, 71) Metall und/oder Kunststoff umfasst, insbesondere Metall oder Kunststoff als Hauptbestandteil umfasst.
77. Gefäßverschluss nach einem der vorhergehenden Beispiele, wobei der Gefäßverschluss (1, 21, 41, 61) ein Schraubverschluss, insbesondere ein Nockendrehverschluss (1), ein Press-on-Twist-off-Verschluss (21) oder ein Composite-Verschluss (41, 61) ist.
78. Gefäßverschluss nach einem der vorhergehenden Beispiele, wobei der Gefäßverschluss ein Gewicht von höchstens 200 g, bevorzugt höchstens 150 g, bevorzugter höchstens 100 g, bevorzugter höchstens 80 g, bevorzugter höchstens 60 g, bevorzugter höchstens 40 g, bevorzugter höchstens 20 g, aufweist.
79. Gefäßverschluss nach einem der vorhergehenden Beispiele, wobei das Dichtungselement ein Gewicht von höchstens 50 g, bevorzugt höchstens 40 g, bevorzugter höchstens 30 g, bevorzugter höchstens 20 g, bevorzugter höchstens 10 g, bevorzugter höchstens 5 g, bevorzugter höchstens 3 g, bevorzugter höchstens 2 g, bevorzugter höchstens 1 g, aufweist.
80. Gefäß (5, 25, 45) mit einer Gefäßmündung (5a, 25a, 45a) und einer verschließbaren Öffnung am Ende der Gefäßmündung, wobei die Öffnung mit einem Gefäßverschluss (1, 21, 41, 61) nach einem der vorhergehenden Beispiele verschlossen ist.
81. Gefäß nach Beispiel 80, wobei der Gefäßverschluss einen Träger (11, 31, 51, 71) und das Dichtungselement (3, 23, 43, 63) umfasst, und wobei das Dichtungselement zwischen einem oberen Ende (4, 24, 44) der Gefäßmündung und einer unteren Seite des Trägers (11, 31, 51, 71) eine Höhe (h₃) von maximal 1,0 mm, bevorzugt maximal 0,8 mm, besonders bevorzugt maximal 0,7 mm, in axialer Richtung des Gefäßes aufweist.
82. Gefäß nach Beispiel 80 oder 81, wobei der Gefäßverschluss einen Träger (11, 31, 51, 71) und das Dichtungselement (3, 23, 43, 63) umfasst, und wobei das Dichtungselement zwischen einem oberen Ende (4, 24, 44) der Gefäßmündung und einer unteren Seite des Trägers (11, 31, 51, 71) eine Höhe (h₃) von mindestens 0,2 mm, bevorzugt mindestens 0,4 mm, besonders bevorzugt mindestens 0,5 mm, in axialer Richtung des Gefäßes aufweist.
83. Gefäß nach einem der Beispiele 80 bis 82, wobei das Gefäß ein Sicherheitsmaß von maximal 10 mm, bevorzugt maximal 8 mm, besonders bevorzugt maximal 6 mm, am meisten bevorzugt maximal 4 mm, aufweist.
84. Verfahren zur Herstellung eines verschlossenen und befüllten Gefäßes, mit den Schritten:
   (a) Bereitstellen eines Gefäßes (1, 21, 41, 61) mit einer Gefäßmündung (5a, 25a, 45a) und einer verschließbaren Öffnung am Ende der Gefäßmündung;
   (b) Befüllen des Gefäßes mit einem Lebensmittel durch die Öffnung des Gefäßes;
   (c) Verschließen der Öffnung des Gefäßes mit einem Gefäßverschluss nach einem der vorhergehenden Beispiele.
85. Verfahren nach Beispiel 84, wobei der Gefäßverschluss bei einer Temperatur von mindestens 90 °C behandelt wird, bevor die Öffnung des Gefäßes mit dem Gefäßverschluss verschlossen wird.
86. Verfahren nach einem der Beispiele 84 oder 85, wobei der absolute Druck in dem verschlossenen und befüllten Gefäß maximal 200 hPa, bevorzugt maximal 100 hPa beträgt.
87. Verfahren nach einem der Beispiele 84 bis 86, wobei das Dichtungselement des Gefäßverschlusses während des Verschließens der Öffnung des Gefäßes mit dem Gefäßverschluss und/oder einer thermischen Behandlung des verschlossenen und befüllten Gefäßes um mindestens 0,2 mm, bevorzugt mindestens 0,4 mm, besonders bevorzugt mindestens 0,5 mm, in axialer Richtung des Gefäßes zur Bildung eines Eindrucks der Gefäßmündung in das Dichtungselement verformt wird.
88. Verfahren nach einem der Beispiele 84 bis 87, wobei das Dichtungselement des Gefäßverschlusses während des Verschließens der Öffnung des Gefäßes mit dem Gefäßverschluss und/oder einer thermischen Behandlung des verschlossenen und befüllten Gefäßes um maximal 1,0 mm, bevorzugt maximal 0,8 mm, besonders bevorzugt maximal 0,7 mm, in axialer Richtung Gefäßes zur Bildung eines Eindrucks der Gefäßmündung in das Dichtungselement verformt wird.

## Patentansprüche

1. Gefäßverschluss (1, 21, 41, 61) mit einem Dichtungselement (3, 23, 43, 63), wobei das Dichtungselement (3, 23, 43, 63) eine Polymerzusammensetzung umfasst, wobei:
(a) die Polymerzusammensetzung zumindest ein Polymer umfasst; und
(b) die Polymerzusammensetzung einen Speichermodul bei 20 °C, bestimmt nach ISO 6721-7, von zumindest 1,0 MPa aufweist.

2. Gefäßverschluss nach Anspruch 1, wobei die Polymerzusammensetzung:
- einen Speichermodul bei 4 °C, bestimmt nach ISO 6721-7, von zumindest 2,0 MPa, bevorzugt zumindest 5,0 MPa, bevorzugter zumindest 7,0 MPa, bevorzugter zumindest 10,0 MPa, bevorzugter zumindest 15,0 MPa, bevorzugter zumindest 20,0 MPa, bevorzugter zumindest 30,0 MPa, aufweist; und/oder
- einen Speichermodul bei 20 °C, bestimmt nach ISO 6721-7, von zumindest 1,1 MPa, bevorzugt zumindest 2,0 MPa, bevorzugter zumindest 3,0 MPa, bevorzugter zumindest 4,0 MPa, bevorzugter zumindest 5,0 MPa, bevorzugter zumindest 7,0 MPa, bevorzugter zumindest 10,0 MPa, bevorzugter zumindest 20,0 MPa, aufweist; und/oder
- einen Speichermodul bei 40 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 4,0 MPa, bevorzugter zumindest 6,0 MPa, bevorzugter zumindest 10,0 MPa, aufweist; und/oder
- einen Speichermodul bei 70 °C, bestimmt nach ISO 6721-7, von zumindest 0,2 MPa, bevorzugt zumindest 0,3 MPa, bevorzugter zumindest 0,5 MPa, bevorzugter zumindest 0,7 MPa, bevorzugter zumindest 0,9 MPa, bevorzugter zumindest 1,2 MPa, bevorzugter zumindest 1,5 MPa, aufweist; und/oder
- einen Speichermodul bei 100 °C, bestimmt nach ISO 6721-7, von zumindest 0,1 MPa, bevorzugt zumindest 0,2 MPa, bevorzugter zumindest 0,3 MPa, bevorzugter zumindest 0,4 MPa, bevorzugter zumindest 0,5 MPa, bevorzugter zumindest 0,6 MPa, bevorzugter zumindest 1,0 MPa, aufweist; und/oder
- einen Speichermodul bei 130 °C, bestimmt nach ISO 6721-7, von zumindest 0,05 MPa, bevorzugt zumindest 0,07 MPa, bevorzugter zumindest 0,10 MPa, bevorzugter zumindest 0,15 MPa, bevorzugter zumindest 0,20 MPa, bevorzugter zumindest 0,25 MPa, bevorzugter zumindest 0,30 MPa, aufweist.

3. Gefäßverschluss nach einem der vorhergehenden Ansprüche, wobei das zumindest eine Polymer:
- einen Speichermodul bei 4 °C, bestimmt nach ISO 6721-7, von zumindest 2,0 MPa, bevorzugt zumindest 3,0 MPa, bevorzugter zumindest 4,0 MPa, bevorzugter zumindest 5,0 MPa, bevorzugter zumindest 7,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 200,0 MPa, bevorzugter zumindest 500,0 MPa, bevorzugter zumindest 800,0 MPa, aufweist; und/oder
- einen Speichermodul bei 20 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 3,0 MPa, bevorzugter zumindest 5,0 MPa, bevorzugter zumindest 8,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 250,0 MPa, bevorzugter zumindest 500,0 MPa, aufweist; und/oder
- einen Speichermodul bei 40 °C, bestimmt nach ISO 6721-7, von zumindest 0,5 MPa, bevorzugt zumindest 1,0 MPa, bevorzugter zumindest 1,5 MPa, bevorzugter zumindest 2,0 MPa, bevorzugter zumindest 3,0 MPa, bevorzugter zumindest 4,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 250,0 MPa, bevorzugter zumindest 400,0 MPa, aufweist; und/oder
- einen Speichermodul bei 70 °C, bestimmt nach ISO 6721-7, von zumindest 0,2 MPa, bevorzugt zumindest 0,3 MPa, bevorzugter zumindest 0,5 MPa, bevorzugter zumindest 0,7 MPa, bevorzugter zumindest 0,9 MPa, bevorzugter zumindest 1,2 MPa, bevorzugter zumindest 5,0 MPa, bevorzugter zumindest 10,0 MPa, bevorzugter zumindest 20,0 MPa, bevorzugter zumindest 50,0 MPa, bevorzugter zumindest 100,0 MPa, bevorzugter zumindest 200,0 MPa, aufweist; und/oder
- einen Speichermodul bei 100 °C, bestimmt nach ISO 6721-7, von zumindest 0,1 MPa, bevorzugt zumindest 0,2 MPa, bevorzugter zumindest 0,3 MPa, bevorzugter zumindest 0,4 MPa, bevorzugter zumindest 0,5 MPa, bevorzugter zumindest 0,6 MPa, bevorzugter zumindest 1,0 MPa, bevorzugter zumindest 3,0 MPa, bevorzugter zumindest 5,0 MPa, bevorzugter zumindest 10,0 MPa, bevorzugter zumindest 50,0 MPa, bevorzugter zumindest 100,0 MPa, aufweist; und/oder
- einen Speichermodul bei 130 °C, bestimmt nach ISO 6721-7, von zumindest 0,05 MPa, bevorzugt zumindest 0,07 MPa, bevorzugter zumindest 0,10 MPa, bevorzugter zumindest 0,15 MPa, bevorzugter zumindest 0,20 MPa, bevorzugter zumindest 0,25 MPa, bevorzugter zumindest 0,30 MPa, bevorzugter zumindest 1,0 MPa, bevorzugter zumindest 2,0 MPa, bevorzugter zumindest 5,0 MPa, bevorzugter zumindest 7,0 MPa, bevorzugter zumindest 50,0 MPa, aufweist.

4. Gefäßverschluss nach einem der vorhergehenden Ansprüche, wobei die Polymerzusammensetzung ein Propen-Copolymer umfasst, und wobei die Shore A Härte des Propen-Copolymers, bestimmt nach DIN ISO 7619 bei einer Temperatur von 23 °C und einer Haltezeit von 15 s, in einem Bereich von 30 bis 95 liegt, und/oder wobei die Schmelztemperatur des Propen-Copolymers, bestimmt durch eine zweite Aufheizkurve einer DSC-Messung bei einer Heizrate von 10°C/min, in einem Bereich von 110 °C bis 200 °C liegt.

5. Gefäßverschluss nach Anspruch 4, wobei das Propen-Copolymer ein Terpolymer ist, insbesondere wobei ein Comonomeranteil von Propen in dem Propen-Copolymer zumindest 40 mol-%, beträgt, ein Comonomeranteil von Ethen in dem Propen-Copolymer höchstens 40 mol-% beträgt, und ein Comonomeranteil von 1-Buten in dem Propen-Copolymer höchstens 20 mol-% beträgt.

6. Gefäßverschluss nach Anspruch 4 oder 5, wobei das Propen-Copolymer zu zumindest 70 Gew.-%, bevorzugt zu zumindest 80 Gew.-%, bevorzugter zu zumindest 90 Gew.-%, bevorzugter zu zumindest 91 Gew.-%, bevorzugter zu zumindest 92 Gew.-%, in der Polymerzusammensetzung enthalten ist.

7. Gefäßverschluss nach einem der vorhergehenden Ansprüche, wobei die Polymerzusammensetzung ein random oder Block Copolymer umfasst

8. Gefäßverschluss nach Anspruch 7, wobei ein C3 bis C16(alpha-)Olefin und Ethen, bevorzugt ein C3 bis C8(alpha-)Olefin und Ethen, Comonomere des random oder Block Copolymers sind, am meisten bevorzugt das random oder Block Copolymer ein (random) 1-Buten-Ethen-Copolymer oder ein (random) Propen-Ethen-Copolymer ist.

9. Gefäßverschluss nach Anspruch 7 oder 8, wobei das random oder Block Copolymer zu zumindest 5 Gew.-%, bevorzugt zu zumindest 10 Gew.-%, bevorzugter zu zumindest 15 Gew.-%, bevorzugter zu zumindest 20 Gew.-%, bevorzugter zu zumindest 25 Gew.-%, bevorzugter zu zumindest 30 Gew.-%, bevorzugter zu zumindest 35 Gew.-%, bevorzugter zu zumindest 40 Gew.-%, bevorzugter zu zumindest 45 Gew.-%, bevorzugter zu zumindest 50 Gew.-%, bevorzugter zu zumindest 55 Gew.-%, bevorzugter zu zumindest 60 Gew.-%, bevorzugter zu zumindest 65 Gew.-%, bevorzugter zu zumindest 70 Gew.-%, bevorzugter zu zumindest 75 Gew.-%, bevorzugter zu zumindest 80 Gew.-%, in der Polymerzusammensetzung enthalten ist.

10. Gefäßverschluss nach einem der vorhergehenden Ansprüche, wobei die Polymerzusammensetzung ein Homopolymer umfasst, insbesondere wobei das Homopolymer ein C2 bis C4 Homopolymer ist.

11. Gefäßverschluss nach einem der vorhergehenden Ansprüche, wobei die Polymerzusammensetzung bis zu 60 Gew.-%, bevorzugt bis zu 45 Gew.-%, bevorzugter bis zu 30 Gew.-%, bevorzugter bis zu 20 Gew.-%, einer bei 20 °C und 1 bar flüssigen Komponente enthält, insbesondere wobei die flüssige Komponente zu zumindest 1 Gew.-% oder zu zumindest 5 Gew.-% in der Polymerzusammensetzung enthalten ist.

12. Gefäßverschluss nach Anspruch 11, wobei die flüssige Komponente ein Polyalphaolefin mit einer kinematischen Viskosität, bestimmt nach ASTM D445 / ISO 3104, von zumindest 4 cSt, bei einer Temperatur von 100 °C, und/oder mit einem Tropfpunkt, bestimmt nach ASTM 5950, von höchstens -10 °C, enthält oder ist.

13. Gefäßverschluss (1, 21, 41, 61) mit einem Dichtungselement (3, 23, 43, 63), wobei das Dichtungselement (3, 23, 43, 63) eine Polymerzusammensetzung umfasst, wobei:
(a) die Polymerzusammensetzung zumindest ein Polymer umfasst; und
(b) das zumindest eine Polymer einen Speichermodul bei 20 °C, bestimmt nach ISO 6721-7, von zumindest 0,1 MPa aufweist.

14. Gefäß (5, 25, 45) mit einer Gefäßmündung (5a, 25a, 45a) und einer verschließbaren Öffnung am Ende der Gefäßmündung, wobei die Öffnung mit einem Gefäßverschluss (1, 21, 41, 61) nach einem der vorhergehenden Ansprüche verschlossen ist,
insbesondere wobei der Gefäßverschluss einen Träger (11, 31, 51, 71) und das Dichtungselement (3, 23, 43, 63) umfasst,
und wobei das Dichtungselement zwischen einem oberen Ende (4, 24, 44) der Gefäßmündung und einer unteren Seite des Trägers (11, 31, 51, 71) eine Höhe (h₃) von maximal 1,0 mm aufweist, bevorzugt maximal 0,8 mm, besonders bevorzugt maximal 0,7 mm, in axialer Richtung des Gefäßes.

15. Verfahren zur Herstellung eines verschlossenen und befüllten Gefäßes, mit den Schritten:
(a) Bereitstellen eines Gefäßes (1, 21, 41, 61) mit einer Gefäßmündung (5a, 25a, 45a) und einer verschließbaren Öffnung am Ende der Gefäßmündung;
(b) Befüllen des Gefäßes mit einem Füllgut, insbesondere einem Lebensmittel, durch die Öffnung des Gefäßes;
(c) Verschließen der Öffnung des Gefäßes mit einem Gefäßverschluss nach einem der Ansprüche 1 bis 13.
